# EUROPEAN PATENT APPLICATION

(11) **EP 4 369 474 A1**
(43) Date of publication of application: **15.05.2024**
(21) Application number: 22851620.9
(22) Date of filing: 22.04.2022
(51) Int. Cl.: H01M 10/615, H01M 10/625, B60L 58/27, B60L 58/10

(54) **CHARGING AND DISCHARGING CIRCUIT, SYSTEM AND CONTROL METHOD THEREFOR**

(30) Priority: 05.08.2021 WO PCT/CN2021/110706; 06.09.2021 WO PCT/CN2021/116735; 06.09.2021 WO PCT/CN2021/116736; 22.11.2021 WO PCT/CN2021/132202
(71) Applicant: Contemporary Amperex Technology Co., Limited, Ningde, Fujian 352100 (CN)
(72) Inventor: HUANG, Xiaojian, Ningde, Fujian 352100 (CN); DAN, Zhimin, Ningde, Fujian 352100 (CN); HOU, Yizhen, Ningde, Fujian 352100 (CN); ZHANG, Wei, Ningde, Fujian 352100 (CN)
(74) Representative: Gong, Jinping
(86) International application number: PCT/CN2022/088567
(87) International publication number: WO 2023/010898

(57) **Abstract**

Embodiments of this application provide a charge/discharge circuit, system, and control method, including a power supply module, a heating module, and a charge-discharge switching module; where the power supply module includes at least a first battery group; the heating module includes an energy storage module and a switch module; the at least first battery group, the switch module, and the charge-discharge switching module are connected in parallel; a first terminal of the energy storage module is connected to the switch module, and a second terminal of the energy storage module is connected to the charge-discharge switching module; and the charge-discharge switching module and the switch module are configured to: in response to a charge/discharge enable signal, produce a current of an alternating-current waveform in the charge/discharge circuit. In this application, the switch module and the charge-discharge switching module are controlled to turn on or off, so as to form alternately switched discharge loop and charge loop in the charge/discharge circuit, thereby producing an alternating current in the charge/discharge circuit. The current flows through the battery group, so that internal resistance of the battery group generates heat, thereby achieving an effect of heating the battery group.

## Description

### TECHNICAL FIELD

This application relates to the field of battery technologies, and in particular, to a charge/discharge circuit, system, and control method.

### BACKGROUND

Traction batteries are widely used in new energy vehicles, consumer electronics, energy storage systems, and other fields thanks to their advantages such as high energy density, support of cyclic charging, safety, and environmental friendliness.

However, in low-temperature environments, use of traction batteries is limited. In particular, in low-temperature environments, their discharge capacity severely degrades, and the batteries are unable to be charged. Therefore, for proper use of traction batteries, it is necessary to heat them up in low-temperature environments.

For conventional traction battery heating technologies which use a motor circuit to heat the traction battery, it is possible that the motor vibrates so much as to produce excessive noise during the heating.

### SUMMARY

Embodiments of this application provide a charge/discharge circuit, system, and control method, which can implement heating of a traction battery while effectively suppressing vibration noise of a motor when the battery is being heated using a motor circuit.

According to a first aspect, a charge/discharge circuit is provided, including a power supply module, a heating module, and a charge-discharge switching module; where
the power supply module includes at least a first battery group;
the heating module includes an energy storage module and a switch module;
the at least first battery group, the switch module, and the charge-discharge switching module are connected in parallel;
a first terminal of the energy storage module is connected to the switch module, and a second terminal of the energy storage module is connected to the charge-discharge switching module; and
the charge-discharge switching module and the switch module are configured to: in response to a charge/discharge enable signal, produce a current of an alternating-current waveform in the charge/discharge circuit.

In the charge/discharge circuit, the charge-discharge switching module and the switch module are controlled to form alternately switched charge loop and discharge loop between the at least first battery group in the power supply module and the energy storage module. During alternate switching between the charge loop and the discharge loop, a current of an alternating-current waveform is produced in the charge/discharge circuit. The current of the alternating-current waveform flows through the at least first battery group in the power supply module, so that battery internal resistance of the at least first battery group generates heat, thereby achieving an effect of heating the battery group in the power supply module.

In addition, in the charge/discharge circuit, it is implemented that a motor of an electric vehicle is not used for battery heating during which the motor is not subject to impact of a current frequency in the charge/discharge circuit in the heating process. This resolves the problem of high vibration noise produced by the motor in a process of heating the traction battery in the prior art. Moreover, when the charge/discharge circuit is being used to heat the battery, the motor can drive the motorized vehicle to run as normal, thus implementing heating in driving.

In an implementation, the charge-discharge switching module includes a first switching circuit and a second switching circuit connected in series;
a joint between the first switching circuit and the second switching circuit is connected to the second terminal of the energy storage module; and
the first switching circuit and the second switching circuit are configured to turn on or off under triggering of the charge/discharge enable signal.

In this implementation, the charge-discharge switching module includes two switching circuits, using which the charge/discharge circuit can be controlled to form a charge loop or a discharge loop. Specifically, the first switching circuit, the second switching circuit, and the switch module are controlled to turn on or off, so as to form alternately switched charge loop and discharge loop including the power supply module and the energy storage module to produce a current of an alternating-current waveform in the charge/discharge circuit, thus achieving an effect of heating the battery group in the power supply module.

The joint between the first switching circuit and the second switching circuit is connected to the second terminal of the energy storage module, and the first terminal of the energy storage module is connected to the switch module. In this way, the switch module, the first switching circuit, and the second switching circuit are properly controlled to implement alternate charge and discharge between the power supply module and the energy storage module, so that the internal resistance of the battery group in the power supply module generates heat, thereby achieving an effect of self-heating of the battery group from the inside. Heating the battery group from the inside brings a higher heating efficiency.

In an implementation, the first switching circuit includes a first upper leg, and the second switching circuit includes a first lower leg;
a joint between the first upper leg and the first lower leg is connected to the second terminal of the energy storage module; and
the first upper leg and the first lower leg are configured to turn on or off under triggering of the charge/discharge enable signal.

The first upper leg, the first lower leg, and the switch module are controlled to turn on or off, so that a current of an alternating-current waveform is produced in the charge/discharge circuit, thus achieving an effect of heating the battery group in the power supply module.

In an implementation, the first upper leg includes a first switch and a first diode connected in parallel, and the first lower leg includes a second switch and a second diode connected in parallel; and
a cathode of the first diode is connected to a positive electrode of the first battery group, an anode of the first diode is connected to a cathode of the second diode, and an anode of the second diode is connected to a negative electrode of the first battery group.

The first diode and the second diode may be freewheeling diodes which are typically used together with inductors. An abrupt change of current flowing through the inductor leads to an abrupt change of voltage between two terminals of the inductor, which is likely to damage other elements in the circuit loop. When the inductor cooperates with a freewheeling diode, the current flowing through the inductor can change smoothly, which avoids the abrupt change of voltage, thereby improving safety of the circuit. Therefore, the first upper leg and the first lower leg both use a structure with a switch and a freewheeling diode connected in parallel, which can not only implement the function of a switch, but also control switches in the first upper leg and the first lower leg to turn on or off to implement switching between the charge loop and the discharge loop. The abrupt change of voltage can also be avoided by the freewheeling diodes in the first upper leg and the first lower leg, improving safety of the entire charge/discharge circuit.

In addition, the first upper leg and the first lower leg both including the structure with a switch and a diode connected in parallel allows the charge-discharge switching module to have more control combinations for controlling the circuit to turn on or off, facilitating more flexible and variable control. Different devices being properly controlled to turn on or off can not only form a charge loop or a discharge loop in the charge/discharge circuit, but also balance use frequency of different devices and prolong service life of all the devices in the charge-discharge switching module.

In an implementation, the first upper leg includes a third switch, and the first lower leg includes a fourth switch.

The first upper leg and the first lower leg including only switches allows the charge-discharge switching module to more simply control the circuit to turn on or off, so that the charge loop or the discharge loop is formed in the charge/discharge circuit, thereby heating the battery group. In addition, costs of the charge/discharge circuit can be reduced.

In an implementation, the first switching circuit includes a third diode, and the second switching circuit includes a fifth switch; and
a cathode of the third diode is connected to a positive electrode of the first battery group, an anode of the third diode is connected to one terminal of the fifth switch, and another terminal of the fifth switch is connected to a negative electrode of the first battery group.

The charge-discharge switching module uses one diode and one switch connected in series. As compared with a charge-discharge switching module using two tube switches, the cost of the charge-discharge switching module is reduced by half, so that the cost of turn-on and turn-off is reduced. In addition, the diode provides passive control such that proactive control is not required. The structure using only one diode and one switch facilitates a simpler control policy.

In an implementation, the first switching circuit further includes a sixth switch, one terminal of the sixth switch is connected to the positive electrode of the first battery group, and another terminal of the sixth switch is connected to the cathode of the third diode.

The provision of the sixth switch is intended to prevent the current from flowing through the third diode in scenarios requiring no battery heating, thus avoiding circuit faults caused by passage of the current flow through the third diode in such scenarios, prolonging service life of electric devices in the circuit.

In an implementation, the first switching circuit includes a seventh switch, and the second switching circuit includes a fourth diode; and
one terminal of the seventh switch is connected to a positive electrode of the first battery group, another terminal of the seventh switch is connected to a cathode of the fourth diode, and an anode of the fourth diode is connected to a negative electrode of the first battery group.

In this implementation, the charge-discharge switching module uses one diode and one switch connected in series. As compared with a charge-discharge switching module using two tube switches, the cost of the charge-discharge switching module is reduced by half, so that the cost of turn-on and turn-off is reduced. In addition, the diode provides passive control such that proactive control is not required, facilitating a simpler control policy. In this way, the charge-discharge switching module is able to flexibly switch to the charge loop or the discharge loop in the charge/discharge circuit so as to produce an alternating current in the charge/discharge circuit.

In an implementation, the second switching circuit further includes an eighth switch; and
the eighth switch is connected in series between the fourth diode and the negative electrode of the first battery group.

The provision of the eighth switch is intended to prevent the current from flowing through the fourth diode in scenarios requiring no battery heating, thus avoiding circuit faults caused by passage of the current flow through the third diode in such scenarios, prolonging service life of electric devices in the circuit.

In an implementation, the energy storage module includes a first energy storage element; the first energy storage element includes at least one inductor; and a first terminal of the first energy storage element is connected to the switch module, and a second terminal of the first energy storage element is connected to the charge-discharge switching module.

In this implementation, the energy storage module may include only the first energy storage element, where the first energy storage element may include one or more inductors. The first energy storage element provided, electric energy discharged by the power supply module when a discharge loop is formed in the charge/discharge circuit can be stored in the first energy storage element. When the charge/discharge circuit switches to a charge loop, the first energy storage element can charge the electric energy stored inside back to the power supply module, so that an alternating current flows through the power supply module and the internal resistance of the battery group in the power supply module generates heat, thereby achieving an effect of heating the battery group from the inside. Compared with heating the battery group from the outside, such self-heating manner where the battery group produces heat inside has a better heating effect.

In an implementation, the energy storage module further includes a second energy storage element; and the second energy storage element is connected between the second terminal of the first energy storage element and the charge-discharge switching module.

The second energy storage element is added between the first energy storage element and the charge-discharge switching module, and the first energy storage element is connected in series with the second energy storage element. In this way, when a discharge loop is formed in the charge/discharge circuit, electric energy discharged by the power supply module can be jointly stored by the first energy storage element and the second energy storage element, so that more energy can be stored. When the charge/discharge circuit switches to a charge loop, the electric energy stored by the first energy storage element and the second energy storage element is charged back to the battery group in the power supply module. In this way, as more electric energy is charged/discharged, a larger charge/discharge current can be produced in the charge/discharge circuit, and when the larger current flows through the battery group, more heat is generated by the internal resistance of the battery, so that the temperature rise speed of the battery group is increased, improving the self-heating efficiency of the battery. Thus, the temperature of the battery group can rise to an expected value at a fastest speed. In addition, more energy charged/discharged can optimize current and frequency parameters in the self-heating process of the battery, improving the self-heating effect of the battery.

In an implementation, the second energy storage element includes at least one inductor and/or capacitor. With various electric devices capable of storing energy storage used to implement the second energy storage element, the charge/discharge circuit has more variants in circuit structure, satisfying requirements of different users or industrial production for the charge/discharge circuit structure.

In an implementation, a ninth switch is connected between the energy storage module and the charge-discharge switching module, and the ninth switch is connected in series with the second energy storage element.

The ninth switch is configured to protect normal operation of components such as the energy storage module, the second energy storage element, and the switch module. If in heating mode, the first switching circuit and/or the second switching circuit becomes faulty so as to result in breakdown or short circuit, it is necessary to ensure that connection between the energy storage module and the second energy storage element and the power supply module is broken, so that the energy storage module and the second energy storage element are not short circuited with the power supply module. The risk of short circuit in this case can be effectively mitigated by controlling the ninth switch to turn off.

In an implementation, the switch module includes at least one switch leg, and the first energy storage element in the energy storage module includes at least one energy storage device, where the energy storage device(s) and the switch leg(s) are equal in quantity, and the energy storage device(s) are connected to the switch leg(s) in one-to-one correspondence; and
a joint of a second terminal of each energy storage device is connected to the charge-discharge switching module.

In this implementation, the switch module includes at least one switch leg, where the switch leg is of a symmetrical structure. Each switch leg and the charge-discharge switching module are controlled to turn on or off, so as to form alternately switched charge loop and discharge loop in the charge/discharge circuit, thereby producing a current of an alternating-current waveform in the charge/discharge circuit. The current flows through the battery group so that the internal resistance of the battery group generates heat, thereby achieving a self-heating effect of the traction battery. Control of the switch leg(s) is simple. The energy storage device(s) in the first energy storage element are connected to the switch leg(s) in one-to-one correspondence. A manner of expanding the energy storage scale of the energy storage module in the charge/discharge circuit is provided. When fewer energy storage devices and switch legs are provided, product costs can be reduced while self-heating of the battery group is implemented. When more energy storage devices and switch legs are provided, complexity of control is not significantly increased, while the amount of energy storable by the energy storage module will greatly increase. The increase of the energy stored can produce a larger charge/discharge current in the charge/discharge circuit, and when the larger current flows through the battery group, more heat is generated by the internal resistance of the battery, so that the temperature rise speed of the battery group is increased, improving the self-heating efficiency of the battery. Thus, the temperature of the battery group can rise to an expected value at a fastest speed. In addition, more energy charged/discharged can optimize current and frequency parameters in the self-heating process of the battery, improving the self-heating effect of the battery.

In an implementation, the switch module includes a first switch leg, and the first switch leg includes a second upper leg and a second lower leg connected in series;
a first terminal of the first switch leg, a first terminal of the charge-discharge switching module, and a first terminal of the power supply module are collinearly connected; and
a second terminal of the first switch leg, a second terminal of the charge-discharge switching module, and a second terminal of the power supply module are collinearly connected.

Using only one switch leg, the switch module enables the function of heating the battery by the charge/discharge circuit, reducing costs of the charge/discharge circuit. The second upper leg, the second lower leg, and the charge-discharge switching module controlled to turn on or off, alternately switched charge loop and discharge loop can be formed in the charge/discharge circuit.

In an implementation, the first energy storage element includes an inductor and/or a capacitor; and
a joint between the second upper leg and the second lower leg is connected to the first terminal of the first energy storage element, and the second terminal of the first energy storage element is connected to the charge-discharge switching module.

In this implementation, one terminal of the first energy storage element is connected to the joint between the second upper leg and the second lower leg, and another terminal of the first energy storage element is connected to the charge-discharge switching module. In this way, the second upper leg, the second lower leg, and the charge-discharge switching module can be controlled to turn on or off, thus flexibly switching a loop between the first energy storage element and the power supply module to a charge loop or a discharge loop.

In an implementation, the at least one switch leg each includes an upper leg and a lower leg, and both the upper leg and the lower leg include a switch and a diode connected in parallel, or both the upper leg and lower leg include a switch.

The diode may be a freewheeling diode which is typically used together with an inductor. An abrupt change of current flowing through the inductor leads to an abrupt change of voltage between two terminals of the inductor, which is likely to damage other elements in the circuit loop. When the inductor cooperates with a freewheeling diode, the current flowing through the inductor can change smoothly, which avoids the abrupt change of voltage, thereby improving safety of the circuit. Therefore, the second upper leg and the second lower leg both use a structure with a switch and a diode connected in parallel, which can not only implement the function of a switch, but also control switches in the second upper leg and the second lower leg to turn on or off to implement switching between the charge loop and the discharge loop. The abrupt change of voltage can also be avoided by the diodes in the second upper leg and the second lower leg, improving safety of the entire charge/discharge circuit. In addition, the second upper leg and the second lower leg both including the structure with a switch and a diode connected in parallel allow more control combinations for controlling the circuit to turn on or off, thus facilitating more flexible and variable control. Different devices being properly controlled to turn on or off can not only form a charge loop or a discharge loop in the charge/discharge circuit, but also balance use frequency of different devices and prolong service life of all the devices in the charge-discharge switching module.

In the implementation of the second upper leg and the second lower leg including only switches, the circuit can be more simply controlled to turn on or off, so that the charge loop or the discharge loop is formed in the charge/discharge circuit, thereby heating the battery group. In addition, costs of the charge/discharge circuit can be reduced.

In an implementation, the switch module includes at least one switch branch, where the at least one switch branch each includes a switch and a diode connected in series; and the first energy storage element in the energy storage module includes at least one energy storage device, where the energy storage device(s) and the switch branch(es) are equal in quantity, and the energy storage device(s) are connected to the switch branch(es) in one-to-one correspondence.

In this implementation, the switch module includes a switch branch composed of a switch and a diode connected in series, using one diode and one switch connected in series. As compared with using a switch leg composed of two tube switches, the cost of the switch module is reduced by half, so that the cost of turn-on and turn-off is reduced. In addition, the diode provides passive control such that proactive control is not required. The structure using only one diode and one switch facilitates a simpler control policy. In addition, more structural variants of the switch module are provided, which can be combined with different variant structures of the charge-discharge switching module to produce a larger variety of specific circuit structures for the charge/discharge circuit, so as to satisfy requirements of different users or industrial production for the charge/discharge circuit structure.

In an implementation, a cathode of the diode in the switch branch is connected to a positive electrode of the power supply module, and an anode of the diode in the switch branch is connected to a negative electrode of the power supply module.

In this implementation, the cathode of the diode in the switch branch is connected to the positive electrode of the power supply module. The cathode of the diode can cut off current to prevent the positive electrode and negative electrode of the power supply module from being connected directly in forward direction through the diode, improving safety of the charge/discharge circuit.

In an implementation, the energy storage module includes an M-phase motor, and the switch module includes M phase legs, M being a positive integer;
where the M phase legs are connected in parallel to the power supply module and the charge-discharge switching module;
joints between upper legs and lower legs of the M phase legs are connected to M phase windings of the M-phase motor in one-to-one correspondence; and
the charge-discharge switching module is connected to a joint of the M phase windings.

In this implementation, the motor that comes with the electric vehicle is used for heating the battery group, which improves utilization of the motor and reduces the cost of heating the battery group. In addition, the M-phase motor is not only connected to the M phase legs in the switch module, but also connected to the charge-discharge switching module, allowing currents flowing through the M phase legs to simultaneously flow into all the windings of the M-phase motor and flow out of the other terminals of all the windings, so that the currents flowing through all the windings of the M-phase motor can be in a same direction and of a same magnitude, rather than being alternating currents in different directions. Therefore, the problem that the motor vibrates so much as to produce excessive noise during heating of the traction battery using a motor circuit can be effectively alleviated.

In an implementation, the M-phase motor includes a first M-phase motor and a second M-phase motor; and
a joint of M phase windings of the first M-phase motor is connected to a joint of M phase windings of the second M-phase motor.

In an implementation, the joints between the upper legs and the lower legs of the M phase legs in the switch module are connected to M phase windings of the first M-phase motor in one-to-one correspondence.

In an implementation, the charge-discharge switching module includes M phase legs; and joints between upper legs and lower legs of the M phase legs in the charge-discharge switching module are connected to M phase windings of the second M-phase motor in one-to-one correspondence.

For electric devices with two motors, the two motors can be used for heating the battery group, where an inverter of one motor is equivalent to a switch module, and an inverter of the other motor is equivalent to a charge-discharge switching module. Windings of the two motors are equivalent to an energy storage module. Legs in the inverters of the two motors are controlled to turn on or off to implement alternate switching between a charge loop and a discharge loop in a charge/discharge circuit.

Currents flowing into the phase windings of the first M-phase motor are controlled to be the same in magnitude and phase, so that vibration noise of the first M-phase motor can be effectively suppressed during heating of the traction battery using the motor circuit. Similarly, currents flowing out of the phase windings of the second M-phase motor are controlled to be the same in magnitude and phase, so that vibration noise of the second M-phase motor can be effectively suppressed during heating of the traction battery using the motor circuit. At the same time, non-running of the motor can also resolve the problem of rotor heating in the motor, thus prolonging self-heating service time of the battery.

In an implementation, the power supply module includes the first battery group; and
the charge-discharge switching module and the switch module are configured to: in response to a charge/discharge enable signal, produce an alternating current in the charge/discharge circuit, where a waveform of the alternating current includes any one of a triangular waveform, a quasi-triangular waveform, a sinusoidal waveform, and a quasi-sinusoidal waveform.

In this implementation, the power supply module includes one battery group, and alternate charge and discharge is performed between the battery group and the energy storage module. Because the energy storage module needs to discharge immediately after being full of energy, the heating current is constantly changing. Therefore, waveform of an alternating current produced in the charge/discharge circuit including only the first battery group is at least one of a triangular waveform, a quasi-triangular waveform, a sinusoidal waveform, and a quasi-sinusoidal waveform.

In an implementation, the power supply module includes at least the first battery group and a second battery group; and
the charge-discharge switching module and the switch module are configured to: in response to a first charge/discharge enable signal, produce a square or quasi-square wave alternating current in the charge/discharge circuit; or in response to a second charge/discharge enable signal, produce, in the charge/discharge circuit, an alternating current of any one of a triangular waveform, a quasi-triangular waveform, a sinusoidal waveform, and a quasi-sinusoidal waveform;
where a charge/discharge frequency corresponding to the first charge/discharge enable signal is greater than a charge/discharge frequency corresponding to the second charge/discharge enable signal.

In this implementation, the power supply includes at least two battery groups, and in each heating period, one battery group discharges to the energy storage module, and this battery group and the energy storage module charge the other battery group(s) simultaneously. The provision of two battery groups can effectively relieve constraints of the energy storage module on the magnitude of heating current and the heating current frequency. The heating with two battery groups allows energy of the energy storage module to discharge to one battery group in time, keeping the heating current of the battery group at a stable and large magnitude according to a preset heating frequency, such that the heating current frequency can be adjusted for the battery under different temperatures and SOCs to significantly increase the heating speed. As the heating current magnitude can be kept at a stable value, the alternating current produced in the charge/discharge circuit including two battery groups is a square or quasi-square wave in waveform. In another implementation, alternatively, the heating current frequency may be controlled so as to extend hold time of the discharge loop so that the energy storage module can store more electric energy before discharging, and extend hold time of the charge loop so that electric energy in the energy storage module can all be charged back to the battery group. In this case, an alternating current of any one of a triangular waveform, a quasi-triangular waveform, a sinusoidal waveform, and a quasi-sinusoidal waveform can also be produced in the charge/discharge circuit including at least two battery groups.

In an implementation, a first terminal of the second battery group is connected to a first terminal of the charge-discharge switching module, and a second terminal of the second battery group is collinearly connected to a second terminal of the first battery group, a second terminal of the switch module, and a second terminal of the charge-discharge switching module;
a first terminal of the first battery group is connected to a first terminal of the switch module; and
a tenth switch is connected between the first terminal of the first battery group and the first terminal of the second battery group.

In this implementation, connection manner between the first battery group and the second battery group can be controlled via the tenth switch. When the tenth switch turns off, a negative electrode of the first battery group is connected to a positive electrode of the second battery group. When the tenth switch turns on, a positive electrode of the first battery group is connected to the positive electrode of the second battery group. When the first battery group and the second battery group need to be heated, the tenth switch is controlled to turn off, so as to heat the first battery group and the second battery group. When power needs to be supplied to the outside, the tenth switch is controlled to turn on for the first battery group and the second battery group to supply power to the outside.

In an implementation, the first terminal of the energy storage module is connected to the first terminal of the switch module, and the second terminal of the energy storage module is connected to the first terminal of the charge-discharge switching module; or the first terminal of the energy storage module is connected to the second terminal of the switch module, and the second terminal of the energy storage module is connected to the second terminal of the charge-discharge switching module.

This implementation provides a variation scheme for the connection position of the energy storage module, so that the charge/discharge circuit has more varied structural compositions to suit more application scenarios.

In an implementation, a capacitor is connected in parallel to a battery group in the power supply module.

The capacitor can implement functions such as voltage stabilization, thus reducing voltage fluctuation of the battery group, and improving voltage stability of the battery group.

According to a second aspect, a charge/discharge system is provided, including a control module and the charge/discharge circuit according to the first aspect or any one of the implementations of the first aspect; where the control module is configured to send an instruction to the charge/discharge circuit to control charge/discharge of the power supply module.

In the charge/discharge system, the control module is used to control the switch module and the charge-discharge switching module in the charge/discharge circuit, thus implementing alternate switching between a charge loop and a discharge loop so as to heat the battery group.

In an implementation, the charge/discharge system further includes a charging apparatus connected to the charge/discharge circuit, where
the charging apparatus is configured to charge a battery group in the power supply module via the charge/discharge circuit.

In this implementation, the battery group can be heated using the charge/discharge circuit, and the battery group can also be charged using the charging apparatus.

According to a third aspect, a charge/discharge control method is provided, applied to the charge/discharge system according to the second aspect, where the method includes:
sending a charge/discharge enable signal to control the charge-discharge switching module and the switch module to turn on or off, so as to form alternately switched charge loop and discharge loop in the charge/discharge circuit to produce a current of an alternating-current waveform.

With the charge-discharge switching module and the switch module controlled to turn on or off, alternately switched charge loop and discharge loop are formed between the at least first battery group in the power supply module and the energy storage module. During alternate switching between the charge loop and the discharge loop, a current of an alternating-current waveform is produced in the charge/discharge circuit. The current of the alternating-current waveform flows through the at least first battery group in the power supply module, so that battery internal resistance of the at least first battery group generates heat, thereby achieving an effect of heating the battery group in the power supply module. In addition, in the charge/discharge circuit, it is implemented that a motor of an electric vehicle is not used for battery heating during which the motor is not subject to impact of a current frequency in the charge/discharge circuit in the heating process. This resolves the problem of high vibration noise produced by the motor in a process of heating the traction battery in the prior art. Moreover, when the charge/discharge circuit is being used to heat the battery, the motor can drive the motorized vehicle to run as normal, thus implementing heating in driving.

In an implementation, charge enable signals and discharge enable signals are sent to the charge-discharge switching module and the switch module alternately at a preset frequency to control alternate switching between the charge loop and discharge loop.

In this implementation, the frequency of switching between the charge loop and discharge loop is controlled so as to adjust frequency of the alternating current produced in the entire circuit, thus improving the heating speed of the battery group.

In an implementation, the charge-discharge switching module includes a first switching circuit and a second switching circuit connected in series, and the switch module includes at least one switch leg, each switch leg including an upper leg and a lower leg; and
the alternately switched charge loop and discharge loop include:
a loop including each upper leg in the switch module, the energy storage module, the second switching circuit, and the power supply module, and
a loop including each lower leg in the switch module, the energy storage module, the first switching circuit, and the power supply module.

In this implementation, alternate switching is implemented between the loop including each upper leg in the switch module, the energy storage module, the second switching circuit, and the power supply module and the loop including each lower leg in the switch module, the energy storage module, the first switching circuit, and the power supply module. With the alternate switching, an alternating current is produced in the charge/discharge circuit, and the alternating current flows through the battery group in the power supply module, so that internal resistance of the battery group generates heat, thereby achieving a self-heating effect of the battery group.

In an implementation, the power supply module includes at least a first battery group, and the charge-discharge switching module includes a first switching circuit and a second switching circuit, where the first switching circuit includes a first upper leg, and the second switching circuit includes a first lower leg; the switch module includes at least one switch leg; and the method further includes:
sending a discharge enable signal to control the first upper leg and a lower leg of each switch leg to turn on, so as to form a discharge loop including the power supply module, the first upper leg, the energy storage module, and the lower leg of each switch leg; and
sending a charge enable signal to control the first lower leg and an upper leg of each switch leg to turn on, so as to form a charge loop including the power supply module, the first lower leg, the energy storage module, and the upper leg of each switch leg.

In an implementation, the method further includes: sending a discharge enable signal to control the upper leg of each switch leg and the first lower leg to turn on, so as to form a discharge loop including the power supply module, the upper leg of each switch leg, the energy storage module, and the first lower leg; and
sending a charge enable signal to control the lower leg of each switch leg and the first upper leg to turn on, so as to form a charge loop including the power supply module, the lower leg of each switch leg, the energy storage module, and the first upper leg.

In the foregoing two implementations, the first upper leg, the first lower leg, and the upper leg and the lower leg of each switch leg are flexibly controlled to turn on or off to implement alternate switching between the discharge loop and the charge loop, so as to produce an alternating current in the charge/discharge circuit, thereby achieving an effect of heating the battery group.

In an implementation, the power supply module includes at least a first battery group, and the charge-discharge switching module includes a first switching circuit and a second switching circuit, where the first switching circuit includes a third diode, and the second switching circuit includes a fifth switch; the switch module includes at least one switch leg; and the method further includes:
sending a discharge enable signal to control an upper leg of each switch leg and the fifth switch to turn on, so as to form a discharge loop including the power supply module, the upper leg of each switch leg, the energy storage module, and the fifth switch; and
sending a charge enable signal to control a lower leg of each switch leg to turn on, so as to form a charge loop including the power supply module, the lower leg of each switch leg, the energy storage module, and the third diode.

In an implementation, the power supply module includes at least a first battery group, and the charge-discharge switching module includes a first switching circuit and a second switching circuit, where the first switching circuit includes a seventh switch, the second switching circuit includes a fourth diode, and an anode of the fourth diode is connected to a negative electrode of the first battery group; the switch module includes at least one switch leg; and the method further includes:
sending a discharge enable signal to control the seventh switch and a lower leg of each switch leg to turn on, so as to form a discharge loop including the power supply module, the seventh switch, the energy storage module, and the lower leg of each switch leg; and
sending a charge enable signal to control an upper leg of each switch leg to turn on, so as to form a charge loop including the power supply module, the fourth diode, the energy storage module, and the upper leg of each switch leg.

In the foregoing two implementations, the charge-discharge switching module includes a switch and a diode connected in series, featuring low costs. In addition, the diode spares the need of proactive control, where passive control is enough, facilitating simpler control of the entire circuit.

In an implementation, a cathode of the fourth diode is connected to the negative electrode of the first battery group; and the method further includes:
sending a discharge enable signal to control the upper leg of each switch leg to turn on, so as to form a discharge loop including the power supply module, the upper leg of each switch leg, the energy storage module, and the fourth diode; and
sending a charge enable signal to control the seventh switch and the lower leg of each switch leg to turn on, so as to form a charge loop including the power supply module, the lower leg of each switch leg, the energy storage module, and the seventh switch.

In this implementation, orientation of the fourth diode is changed, so that the charge/discharge circuit has more variation schemes. With the orientation of the fourth diode changed, only a simple adjustment and control scheme is required, facilitating easy control, and as compared with the case of the charge-discharge switching module including two switches, the cost is lower.

In an implementation, the power supply module includes at least a first battery group, the energy storage module includes a first M-phase motor and a second M-phase motor, the switch module includes M phase legs, and the charge-discharge switching module includes M phase legs; M phase windings of the first M-phase motor are connected to the M phase legs of the switch module in one-to-one correspondence, and M phase windings of the second M-phase motor are connected to the M phase legs of the charge-discharge switching module in one-to-one correspondence; a joint of the M phase windings of the first M-phase motor is connected to a joint of the M phase windings of the second M-phase motor; and the method further includes:
sending a discharge enable signal to control upper legs of the M phase legs of the switch module and lower legs of the M phase legs of the charge-discharge switching module to turn on, so as to form a discharge loop including the power supply module, the upper legs of the M phase legs of the switch module, the first M-phase motor, the second M-phase motor, and the lower legs of the M phase legs of the charge-discharge switching module; and
sending a charge enable signal to control upper legs of the M phase legs of the charge-discharge switching module and lower legs of the M phase legs of the switch module to turn on, so as to form a charge loop including the power supply module, the lower legs of the M phase legs of the switch module, the first M-phase motor, the second M-phase motor, and the upper legs of the M phase legs of the charge-discharge switching module.

In an implementation, the method further includes: sending a discharge enable signal to control the upper legs of the M phase legs of the charge-discharge switching module and the lower legs of the M phase legs of the switch module to turn on, so as to form a discharge loop including the power supply module, the lower legs of the M phase legs of the switch module, the first M-phase motor, the second M-phase motor, and the upper legs of the M phase legs of the charge-discharge switching module; and
sending a charge enable signal to control the upper legs of the M phase legs of the switch module and the lower legs of the M phase legs of the charge-discharge switching module to turn on, so as to form a charge loop including the power supply module, the lower legs of the M phase legs of the charge-discharge switching module, the first M-phase motor, the second M-phase motor, and the upper legs of the M phase legs of the switch module.

In the foregoing two implementations, for electric devices with two motors, the two motors can be used for heating the battery group, where an inverter of one motor is equivalent to a switch module, and an inverter of the other motor is equivalent to a charge-discharge switching module. Windings of the two motors are equivalent to an energy storage module. Legs in the inverters of the two motors are controlled to turn on or off to implement alternate switching between a charge loop and a discharge loop in a charge/discharge circuit.

Currents flowing into the phase windings of the first M-phase motor are controlled to be the same in magnitude and phase, so that vibration noise of the first M-phase motor can be effectively suppressed during heating of the traction battery using the motor circuit. Similarly, currents flowing out of the phase windings of the second M-phase motor are controlled to be the same in magnitude and phase, so that vibration noise of the second M-phase motor can be effectively suppressed during heating of the traction battery using the motor circuit. At the same time, non-running of the motor can also resolve the problem of rotor heating in the motor, thus prolonging self-heating service time of the battery.

In an implementation, the power supply module includes at least a first battery group and a second battery group; and the method further includes:
charging/discharging the first battery group or the second battery group via the charge loop or the discharge loop, where a square or quasi-square wave alternating current is produced in the charge/discharge circuit; and
the charging/discharging includes switching between charge/discharge states of the first battery group and the second battery group, where the charge/discharge state includes charging the first battery group and discharging the second battery group at the same time, or discharging the first battery group and charging the second battery group at the same time.

For the charge/discharge circuit including two battery groups, the charge/discharge states of the two battery groups are alternately switched. In each heating period, one battery group discharges, and the other battery group is charged at the same time. The provision of two battery groups can effectively relieve constraints of the energy storage module on the magnitude of heating current and the heating current frequency. The heating with two battery groups allows energy of the energy storage module to discharge to one battery group in time, keeping the heating current of the battery group at a stable magnitude according to a preset heating frequency, such that the heating current frequency can be adjusted for the battery under different temperatures and SOCs to significantly increase the heating speed. As the heating current magnitude can be kept at a stable value, the alternating current produced in the charge/discharge circuit including two battery groups is square or quasi-square wave in waveform.

In an implementation, a first terminal of the second battery group is connected to a first terminal of the charge-discharge switching module, and a second terminal of the second battery group is collinearly connected to a second terminal of the first battery group, a second terminal of the switch module, and a second terminal of the charge-discharge switching module; a first terminal of the first battery group is connected to a first terminal of the switch module; a tenth switch is connected between the first terminal of the first battery group and the first terminal of the second battery group; and the method further includes:
determining that the first battery group and the second battery group satisfy a heating condition, and controlling the tenth switch to turn off.

In this implementation, connection manner between the first battery group and the second battery group can be controlled via the tenth switch. When the tenth switch turns off, a negative electrode of the first battery group is connected to a positive electrode of the second battery group. When the tenth switch turns on, a positive electrode of the first battery group is connected to the positive electrode of the second battery group. When the first battery group and the second battery group need to be heated, the tenth switch is controlled to turn off, so as to heat the first battery group and the second battery group. When power needs to be supplied to the outside, the tenth switch is controlled to turn on for the first battery group and the second battery group to supply power to the outside.

In an implementation, the charge-discharge switching module includes a first switching circuit and a second switching circuit, the first switching circuit includes a first upper leg, and the second switching circuit includes a first lower leg; the switch module includes at least one switch leg; one terminal of the energy storage module is connected to a joint between the first upper leg and the first lower leg, and another terminal of the energy storage module is connected to a joint between an upper leg and a lower leg of the switch leg; and the method further includes:
sending a first enable signal to control the first upper leg and a lower leg of each switch leg to all turn on, so as to form a discharge loop including the first battery group, the first upper leg, the energy storage module, and the lower leg of each switch leg, causing the first battery group to discharge to the energy storage module; and
sending a second enable signal to control the first upper leg and an upper leg of each switch leg to all turn on, so as to form a charge loop including the first battery group, the first upper leg, the energy storage module, the upper leg of each switch leg, and the second battery group, causing the first battery group and the energy storage module to charge the second battery group.

In an implementation, the method further includes:
repeatedly switching between turn-on of the upper leg of each switch leg and turn-on of the lower leg of each switch leg so as to control time of charging the second battery group.

In an implementation, the method further includes:
sending a third enable signal to control the first lower leg and the upper leg of each switch leg to all turn on, so as to form a discharge loop including the second battery group, the upper leg of each switch leg, the energy storage module, and the first lower leg, causing the second battery group to discharge to the energy storage module; and
sending a fourth enable signal to control the first upper leg and the upper leg of each switch leg to all turn on, so as to form a charge loop including the second battery group, the upper leg of each switch leg, the energy storage module, the first upper leg, and the first battery group, causing the second battery group and the energy storage module to charge the first battery group.

In an implementation, the method further includes:
repeatedly switching between turn-on of the first upper leg and turn-on of the first lower leg to control time of charging the first battery group.

In the charge/discharge circuit including two battery groups, the first upper leg, the first lower leg, and the upper leg and the lower leg of each switch leg are controlled to turn on or off, so that one battery group discharges to the energy storage module, and this battery group and the energy storage module charges the other battery group simultaneously. In addiction, repeatedly switching between turn-on of the upper leg of each switch leg and turn-on of the lower leg of each switch leg facilitates flexible control on the time of charging each battery group.

In an implementation, the charge-discharge switching module includes a first switching circuit and a second switching circuit, where the first switching circuit includes a first upper leg, and the second switching circuit includes a first lower leg; the switch module includes at least one switch leg; a first terminal of the energy storage module is connected to the first terminal of the switch module, and a second terminal of the energy storage module is connected to the first terminal of the charge-discharge switching module; and the method further includes:
sending a first enable signal to control the first lower leg and an upper leg of each switch leg to turn on simultaneously, so as to form a loop via which the first battery group discharges to the energy storage module; and
sending a second enable signal to control a lower leg of each switch leg and the first lower leg to turn on simultaneously, so as to form a loop via which the first battery group and the energy storage module charges the second battery group.

In an implementation, the method further includes:
sending a third enable signal to control the first upper leg and the lower leg of each switch leg to turn on simultaneously, so as to form a loop via which the second battery group discharges to the energy storage module; and
sending a fourth enable signal to control the first lower leg and the lower leg of each switch leg to turn on simultaneously, so as to form a loop via which the second battery group and the energy storage module charges the first battery group.

In an implementation, the charge-discharge switching module includes a first switching circuit and a second switching circuit, where the first switching circuit includes a first upper leg, and the second switching circuit includes a first lower leg; the switch module includes at least one switch leg; a first terminal of the energy storage module is connected to the second terminal of the switch module, and a second terminal of the energy storage module is connected to the second terminal of the charge-discharge switching module; and the method further includes:
sending a first enable signal to control the first lower leg and an upper leg of each switch leg to turn on simultaneously, so as to form a loop via which the second battery group discharges to the energy storage module; and
sending a second enable signal to control the upper leg of each switch leg and the first upper leg to turn on simultaneously, so as to form a loop via which the second battery group and the energy storage module charge the first battery group.

In an implementation, the method further includes:
sending a third enable signal to control the first upper leg and a lower leg of each switch leg to turn on simultaneously, so as to form a loop via which the first battery group discharges to the energy storage module; and
sending a fourth enable signal to control the first upper leg and the upper leg of each switch leg to turn on simultaneously, so as to form a loop via which the first battery group and the energy storage module charges the second battery group.

In an implementation, the charge-discharge switching module includes a first switching circuit and a second switching circuit, where the first switching circuit includes a first upper leg, and the second switching circuit includes a first lower leg; the switch module includes at least one switch leg; one terminal of the energy storage module is connected to a joint between the first upper leg and the first lower leg, and another terminal of the energy storage module is connected to a joint between an upper leg and a lower leg of the switch leg; and the method further includes:
sending a first enable signal to control the first upper leg and an upper leg of each switch leg to all turn on, so as to form a charge/discharge loop including the first battery group, the upper leg of each switch leg, the energy storage module, the first upper leg, and the second battery group, causing the first battery group to discharge to the energy storage module, and the first battery group and the energy storage module to charge the second battery group; and
sending a second enable signal to control the first upper leg and the upper leg of each switch leg to all turn on, so as to form a charge/discharge loop including the first battery group, the first upper leg, the energy storage module, the upper leg of each switch leg, and the second battery group, causing the second battery group to discharge to the energy storage module, and the second battery group and the energy storage module to charge the first battery group.

In an implementation, a ninth switch is connected between the energy storage module and the charge-discharge switching module; and the method further includes:
determining that a battery group in the power supply module satisfies a heating condition, and controlling the ninth switch to turn on; or determining that the battery group module satisfies a stop-heating condition, and controlling the ninth switch to turn off.

The ninth switch is configured to protect normal operation of components such as the energy storage module, the second energy storage element, and the switch module. If in heating mode, the first switching circuit and/or the second switching circuit becomes faulty so as to result in breakdown or short circuit, it is necessary to ensure that connection between the energy storage module and the second energy storage element and the power supply module is broken, so that the energy storage module and the second energy storage element are not short circuited with the power supply module. The risk of short circuit in this case can be effectively mitigated by controlling the ninth switch to turn off.

In an implementation, before the sending a charge/discharge enable signal, the method further includes:
determining whether a state of charge value of each battery group in the power supply module is greater than or equal to a preset charge threshold; and
if the state of charge value of each battery group is greater than or equal to the preset threshold, sending charge/discharge enable signals to the charge-discharge switching module and the switch module alternately at a preset frequency.

In this implementation, the battery group is heated only when the state of charge value of the battery group is greater than the preset charge threshold, avoiding excessively low power of the battery group which cannot support discharge energy required for heating.

In an implementation, before the determining whether a state of charge value of each battery group in the power supply module is greater than or equal to a preset charge threshold, the method further includes:
determining whether temperature of the power supply module is lower than a preset temperature threshold; and if the temperature of the power supply module is lower than the preset temperature threshold, executing the operation of determining whether a state of charge value of each battery group in the power supply module is greater than or equal to a preset charge threshold.

In this implementation, it is determined first whether the temperature of the power supply module is lower than the preset temperature threshold. Only under a low temperature condition will further determination be made as to whether the state of charge value of the battery group is greater than or equal to the preset charge threshold, and the battery group starts to be heated when the state of charge value is determined to be greater than or equal to the preset charge threshold.

In an implementation, before the sending a charge/discharge enable signal, the method further includes:
obtaining a working state of the motor; and under a condition that the working state indicates that the motor is not being driven, sending charge/discharge enable signals to the charge-discharge switching module and the switch module alternately at a preset frequency.

In an application scenario where the motor is used for heating the battery group, the battery group starts to be heated only when the motor is not being driven, so as to prevent the heating mode from affecting normal operation of the motor.

In an implementation, before the sending a charge/discharge enable signal, the method further includes:
receiving a control signal from a vehicle control unit; and under a condition that the control signal indicates heating the power supply module, sending charge/discharge enable signals to the charge-discharge switching module and the switch module alternately at a preset frequency.

In this implementation, heating the battery group can be started by the vehicle control unit sending a control signal to a motor control unit, where the motor control unit controls the switch module and the charge-discharge switching module to start the heating.

In an implementation, before the sending a charge/discharge enable signal, the method further includes:
receiving a request from a battery management system; and under a condition that the request indicates that the power supply module has satisfied a heating condition, sending charge/discharge enable signals to the charge-discharge switching module and the switch module alternately at a preset frequency.

In this implementation, the battery management system can monitor whether the battery group satisfies the heating condition, and send a request to the vehicle control unit or motor control unit when the heating condition is satisfied. Starting of the heating process is controlled by the vehicle control unit or the motor control unit.

In an implementation, the method further includes:
during the charging/discharging, determining whether temperature of each battery group in the power supply module satisfies a stop-heating condition, where the stop-heating condition includes that the battery group reaches a preset temperature or experiences an abnormal temperature rise; and if the temperature of any battery group in the power supply module satisfies the stop-heating condition, sending a stop-heating signal to the charge-discharge switching module and the switch module, where the stop-heating signal triggers the charge-discharge switching module and the switch module to break the charge/discharge loop.

The temperature of the battery group is also monitored in real time during charging/discharging. When the battery group experiences an abnormal temperature rise or reaches the preset temperature, the heating is controlled to be stopped in time, for continuous heating leads to damage of the battery group when the battery group has reached the preset temperature or experienced an abnormal temperature rise.

In an implementation, the charge/discharge system further includes a charging apparatus, and the method further includes:
when voltage of the charging apparatus is lower than voltage of the power supply module, controlling the switch module and the charge-discharge switching module to form a loop via which the charging apparatus charges the energy storage module and a loop via which the charging apparatus and the energy storage module charges the power supply module simultaneously; or
when voltage of the charging apparatus is higher than voltage of the power supply module, controlling the switch module and the charge-discharge switching module to form a loop via which the charging apparatus charges the power supply module and the energy storage module and a loop via which the energy storage module charges the power supply module.

In this implementation, the charge/discharge circuit has both a heating mode and a charge mode, which can not only be used for heating the traction battery, but also adjust charging voltage when the charging apparatus charges the traction battery. In this way, when the voltage of the charging apparatus does not match voltage of the traction battery, for example, when the voltage of the charging apparatus is lower than or higher than the voltage of the traction battery, the charging apparatus can charge the traction battery at a boosted voltage or at a stepped-down voltage via the charge/discharge circuit, so as to improve adaptability between the charging apparatus and the traction battery.

In an implementation, the terminal of the energy storage module connected to the switch module is connected to one terminal of the charging apparatus through a first tube switch, the second terminal of the switch module is connected to another terminal of the charging apparatus, the charging apparatus is configured to charge the power supply module via the heating module, the switch module includes at least one switch leg, the charge-discharge switching module includes a first switching circuit and a second switching circuit, and the method further includes:
controlling an upper leg of each switch leg to turn off; when voltage of the charging apparatus is lower than voltage of the power supply module, controlling the second switching circuit and the first tube switch to turn on and the first switching circuit and a lower leg of each switch leg to turn off, so as to form a loop including the charging apparatus, the energy storage module, and the second switching circuit for the charging apparatus to charge the energy storage module; and
controlling the first switching circuit and the first tube switch to turn on and the second switching circuit and the lower leg of each switch leg to turn off, so as to form a loop including the charging apparatus, the energy storage module, the first switching circuit, and the power supply module for the charging apparatus and the energy storage module to charge the power supply module simultaneously.

When the voltage of the charging apparatus is lower than the voltage of the power supply module, proper control timing is designed to control the legs to turn on or off, so as to form, in each charge period, a first stage in which the charging apparatus charges the energy storage module and a second stage in which the charging apparatus and the energy storage module charge the power supply module simultaneously. In this way, in the first stage in which the charging apparatus charges the energy storage module, some amount of power is stored in the energy storage module. Therefore, the energy storage module can charge the power supply module jointly with the charging apparatus in the second stage, narrowing down the voltage difference between the charging apparatus and the power supply module and improving charge efficiency.

In an implementation, the lower leg of each switch leg includes a switch and a diode connected in parallel; and the method further includes:
when voltage of the charging apparatus is higher than voltage of the power supply module, controlling the first switching circuit and the first tube switch to turn on and the second switching circuit and the lower leg of each switch leg to turn off, so as to form a loop including the charging apparatus, the energy storage module, the first switching circuit, and the power supply module for the charging apparatus to charge the power supply module and the energy storage module; and
controlling the first switching circuit to turn on and the second switching circuit, the lower leg of each switch leg, and the first tube switch to turn off, so as to form a loop including the energy storage module, the first switching circuit, the power supply module, and the diode in the lower leg of each switch leg for the energy storage module to charge the power supply module.

When the voltage of the charging apparatus is higher than the voltage of the power supply module, proper control timing is designed to control the legs to turn on or off, so as to form, in each charge period, a stage in which the charging apparatus charges the energy storage module and the power supply module and a stage in which only the energy storage module charges the power supply module. On one hand, because the energy storage module can absorb part of the voltage when the charging apparatus charges the energy storage module and the power supply module, voltage difference between the charging apparatus and the power supply module is appropriately reduced. On the other hand, as the voltage of the charging apparatus is higher than the voltage of the power supply module, in order to prevent the charging apparatus from charging the power supply module at continuous high voltage, the charging apparatus and the energy storage module can charge the power supply module alternately. When the charging apparatus charges the energy storage module and the power supply module, some amount of power is stored in the energy storage module. With this amount of power, the energy storage module can charge the power supply module alone.

According to a fourth aspect, an electric device is provided, including the charge/discharge system according to the second aspect.

When the electric device is in a low-temperature environment, discharge capacity of a traction battery in the electric device severely degrades due to the low temperature, and the traction battery is unable to be charged in the low-temperature environment, affecting proper use of the electric device in the low-temperature environment. For the electric device in the embodiments of this application, the traction battery is heated using the charge/discharge circuit, and alternately switched charge loop and discharge loop are formed in the charge/discharge circuit so as to produce an alternating current in the charge/discharge circuit, where the alternating current flows through the traction battery, so that internal resistance of the traction battery generates heat to implement heating of the traction battery.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following descriptions show merely some embodiments of this application, and persons of ordinary skill in the art may still derive other drawings from the accompanying drawings without creative efforts.
FIG. 1 is a circuit diagram of a conventional charge/discharge circuit.
FIG. 2 is a schematic block diagram of a charge/discharge circuit according to an embodiment of this application.
FIG. 3 is another schematic block diagram of a charge/discharge circuit according to an embodiment of this application.
FIG. 4 shows a first schematic structure of a charge-discharge switching module in a schematic block diagram of a charge/discharge circuit according to an embodiment of this application.
FIG. 5 shows a second schematic structure of a charge-discharge switching module in a schematic block diagram of a charge/discharge circuit according to an embodiment of this application.
FIG. 6 shows a third schematic structure of a charge-discharge switching module in a schematic block diagram of a charge/discharge circuit according to an embodiment of this application.
FIG. 7 shows a fourth schematic structure of a charge-discharge switching module in a schematic block diagram of a charge/discharge circuit according to an embodiment of this application.
FIG. 8 is another schematic block diagram of a charge/discharge circuit according to an embodiment of this application.
FIG. 9 is a circuit diagram of a charge/discharge circuit according to an embodiment of this application.
FIG. 10 is a schematic diagram of a waveform of an alternating current of a triangular waveform produced in a charge/discharge circuit including only one battery group according to an embodiment of this application.
FIG. 11 is a schematic block diagram of a charge/discharge circuit including at least two battery groups according to an embodiment of this application.
FIG. 12 is a circuit diagram of a charge/discharge circuit according to an embodiment of this application.
FIG. 13 is a circuit diagram of a charge/discharge circuit according to an embodiment of this application.
FIG. 14 is a circuit diagram of a charge/discharge circuit according to an embodiment of this application.
FIG. 15 is a circuit diagram of a charge/discharge circuit according to an embodiment of this application.
FIG. 16 is a schematic diagram of a waveform of a square or quasi-square wave alternating current produced in a charge/discharge circuit including at least two battery groups according to an embodiment of this application.
FIG. 17 is a circuit diagram of a charge/discharge circuit according to an embodiment of this application.
FIG. 18 is a circuit diagram of a charge/discharge circuit according to an embodiment of this application.
FIG. 19 is a circuit diagram of a charge/discharge circuit according to an embodiment of this application.
FIG. 20 is a circuit diagram of a charge/discharge circuit according to an embodiment of this application.
FIG. 21 is a circuit diagram of a charge/discharge circuit according to an embodiment of this application.
FIG. 22 is a circuit diagram of a charge/discharge circuit according to an embodiment of this application.
FIG. 23 is a circuit diagram of a charge/discharge circuit according to an embodiment of this application.
FIG. 24 is a circuit diagram of a charge/discharge circuit according to an embodiment of this application.
FIG. 25 is a circuit diagram of a charge/discharge circuit according to an embodiment of this application.
FIG. 26 is a circuit diagram of a charge/discharge circuit according to an embodiment of this application.
FIG. 27 is another schematic block diagram of a charge/discharge circuit according to an embodiment of this application.
FIG. 28 is a circuit diagram of a charge/discharge circuit according to an embodiment of this application.
FIG. 29 is a circuit diagram of a charge/discharge circuit according to an embodiment of this application.
FIG. 30 is a circuit diagram of a charge/discharge circuit according to an embodiment of this application.
FIG. 31 is a schematic block diagram of a charge/discharge system according to an embodiment of this application.
FIG. 32 is another schematic block diagram of a charge/discharge system according to an embodiment of this application.
FIG. 33 is a circuit diagram of a charge/discharge system according to an embodiment of this application.
FIG. 34 is a circuit diagram of a charge/discharge system according to an embodiment of this application.
FIG. 35 is a circuit diagram of a charge/discharge system according to an embodiment of this application.
FIG. 36 is a flowchart of a control method in a traction battery heating scenario according to an embodiment of this application.
FIG. 37 is a schematic block diagram of a charge/discharge control device according to an embodiment of this application.

### DESCRIPTION OF EMBODIMENTS

The following further describes implementations of this application in detail with reference to accompanying drawings and embodiments. The following detailed description of embodiments and the accompanying drawings are used to illustrate the principle of this application, rather than to limit the scope of this application, and therefore this application is not limited to the embodiments described herein.

In the description of this application, it should be noted that, unless otherwise stated, "a plurality of" means at least two; and the orientations or positional relationships indicated by the terms "upper", "lower", "left", "right", "inside", "outside", and the like are merely for ease and brevity of description of this application rather than indicating or implying that the apparatuses or components mentioned must have specific orientations or must be constructed or manipulated according to specific orientations. These terms shall therefore not be construed as limitations on this application. In addition, the terms "first", "second", and "third", and the like are merely for the purpose of description and shall not be understood as any indication or implication of relative importance. "Perpendicular" is not perpendicular in the strict sense but within an allowable range of error. "Parallel" is not parallel in the strict sense but within an allowable range of error.

The orientation terms appearing in the following description all are directions shown in the figures, and do not limit the specific structure of the application. In the description of this application, it should also be noted that unless otherwise specified and defined explicitly, the terms "mount", "connect", and "join" should be understood in their general senses. For example, they may refer to a fixed connection, a detachable connection, or an integral connection, and may refer to a direct connection or an indirect connection via an intermediate medium. Persons of ordinary skill in the art can understand specific meanings of these terms in this application as appropriate to specific situations.

With the development over time, new energy vehicles, with their advantages such as environment friendliness, low noise, and low use costs, have great market prospects and can effectively promote energy conservation and emission reduction, conducive to the development and progress of society.

Due to the electrochemical characteristics of traction batteries, charging and discharging capacity of the traction batteries is greatly limited in low-temperature environments, which severely affects user experience of vehicles in winter. Therefore, for proper use of traction batteries, it is necessary to heat them up in low-temperature environments.

The traction battery in the embodiments of this application may be a solid-state battery, a lithium-ion battery, a lithium metal battery, a lead-acid battery, a nickel-cadmium battery, a nickel-metal hydride battery, a lithium-sulfur battery, a lithium-air battery, a sodium-ion battery, or the like. This is not limited herein. In terms of scale, the battery in the embodiments of this application may be a battery cell, or may be a battery module or a battery pack. This is not limited herein. In terms of application scenario, the battery can be used in motorized apparatuses such as automobiles and ships. For example, the battery can be used in a motorized vehicle to power a motor of the motorized vehicle as a traction source for the electric vehicle. The battery can also power other electric devices in the electric vehicle, for example, powering a vehicular air conditioner, a vehicular player, and the like.

For ease of description, an example in which the traction battery is applied to a new energy vehicle (motorized vehicle) is described below.

A drive motor and a control system thereof are a core part of a new energy vehicle, with its drive characteristics determine main performance indicators of the vehicle in driving. A motor drive system of a new energy vehicle mainly includes an electromotor (that is, a motor), a motor control unit (for example, an inverter), various detection sensors, a power supply, and the like. The motor is a rotary electromagnetic machine that operates on the electromagnetic induction principle, used to convert electrical energy into mechanical energy. In operating, the motor takes electric power from an electric system, and outs mechanical power to a mechanical system.

To avoid increasing unnecessary cost when the traction battery is heated, a motor circuit can be used for heating the traction battery.

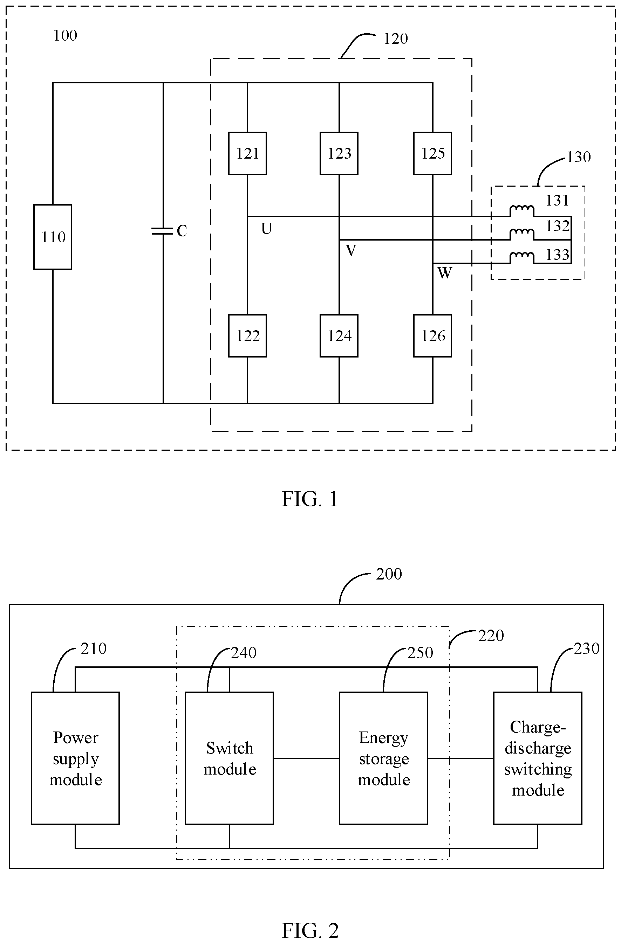

FIG. 1 is a diagram of a charge/discharge circuit of a conventional traction battery heating system. As shown in FIG. 1, the traction battery heating system 100 may include a power supply module 110, an inversion module 120 connected to the power supply module 110, and a drive module 130 connected to the inversion module 120.

The power supply module 110 may be implemented by the traction battery or may be implemented by an external power supply module, for example, a charging pile. Heating energy provided by the external power supply module, for example, may be output by an external direct current charger or be output after being rectified by the external direct current charger. This is not specifically limited herein.

The inversion module 120 may be implemented by various types of switches. For example, the inversion module 120 may be implemented by an inverter in a motor drive system, where the inverter may be implemented by a leg switch which uses an insulated gate bipolar transistor (Insulated Gate Bipolar Transistor, IGBT). Specifically, the quantity of legs of the inverter is the same as the quantity of windings of the drive module 130. For example, the drive module 130 includes a three-phase-winding motor. The inverter includes three phase legs, which are a U-phase leg, a V-phase leg, and a W-phase leg. Each phase leg of the three phase legs includes an upper leg and a lower leg, where the upper leg and the lower leg are each provided with a switch unit, that is, the inversion module 120 includes an upper leg switch 121 and a lower leg switch 122 of the U-phase leg, an upper leg switch 123 and a lower leg switch 124 of the V-phase leg, and an upper leg switch 125 and a lower leg switch 126 of the W-phase leg.

The drive module 130 may specifically include a winding 131 connected to the U-phase leg, a winding 132 connected to the V-phase leg, and a winding 133 connected to the W-phase leg. One terminal of the winding 131 is connected to a joint between the upper leg and the lower leg of the U-phase leg. One terminal of the winding 132 is connected to a joint between the upper leg and the lower leg of the V-phase leg. One terminal of the winding 133 is connected to a joint between the upper leg and the lower leg of the W-phase leg. Another terminal of the winding 131, another terminal of the winding 132, and another terminal of the winding 133 are collinearly connected.

It should be noted that the drive module 130 is not limited to a three-phase-winding motor and may alternatively be a six-phase-winding motor or a twelve-phase-winding motor. Correspondingly, the inversion module 120 may include three phase legs, six phase legs, or twelve phase legs.

In some embodiments, the switches in the inversion module 120 may be controlled to periodically turn on and off so as to modulate current. For example, a target upper leg switch and a target lower leg switch in the inversion module 120 are controlled to periodically turn on and off so as to modulate current. In an example, if the target upper leg switch is an upper leg switch 121, the target lower leg switch is a lower leg switch 124 and/or a lower leg switch 126. In another example, if the target upper leg switch is an upper leg switch 123, the target lower leg switch is a lower leg switch 122 and/or a lower leg switch 126. In another example, if the target upper leg switch is an upper leg switch 125, the target lower leg switch is 122 and/or a lower leg switch 124. In another example, if the target upper leg switch is an upper leg switch 121 and/or an upper leg switch 123, the target lower leg switch is 126. In another example, if the target upper leg switch is an upper leg switch 123 and/or an upper leg switch 125, the target lower leg switch is a lower leg switch 122. In another example, if the target upper leg switch is an upper leg switch 121 and/or an upper leg switch 125, the target lower leg switch is 124.

It should be noted that, in the periodic turning on and off, each period may have the same or different target upper leg switch and the same or different target lower leg switch. This is not limited herein. For example, the upper leg switch 121 and the lower leg switch 124 are controlled to turn on and off in each period. For another example, the upper leg switch 121 is controlled to turn on and the lower leg switch 124 is controlled to turn off in the first period, the upper leg switch 123 is controlled to turn on and the lower leg switch 122 off in the second period, and the upper leg switch 121 is controlled to turn on and the lower leg switch 124 and the lower leg switch 126 off in the third period. That is, different target upper leg switches and different lower leg switches may be controlled in different periods.

Therefore, it can be seen that when the charge/discharge circuit shown in FIG. 1, a target turn-on switch includes at least one upper leg switch and at least one lower leg switch, where the at least one upper leg switch and the at least one lower leg switch are located on different legs. Therefore, it is not likely to turn on all the upper legs or lower legs simultaneously in one period, so current directions in different loops formed between the power supply module, the target upper leg switch, the target lower leg switch and the windings of the motor are different, resulting in an alternating current.

Magnetomotive force of a single-phase-winding is a pulsation magnetomotive force distributed stepwise in space and alternating with time according to a change rule of current. Magnetomotive forces of three single-phase-windings are superposed to obtain a resultant magnetic field of the three phase windings. Generally, currents flowing into three phase windings of a three-phase-winding motor in a heating process are not quite the same in magnitude, currents flowing through two phase windings have a phase difference of 180°, and two phase currents having no phase difference are the same in magnitude. This may lead to mutual asymmetry of three phases in the currents flowing through the windings of the motor and high vibration noise of the motor in a process of heating the traction battery due to a high current frequency.

FIG. 2 is a schematic block diagram of a charge/discharge circuit 200 according to an embodiment of this application. In the charge/discharge circuit 200, a motor is not used for heating a battery, so that such heating process has no impact on normal operation of the motor, and a vehicle with the battery can travel normally in the process of heating the battery. The motor being not used for heating resolves a problem of high vibration noise of the motor in the process of heating the battery from the root.

As shown in FIG. 2, the charge/discharge circuit 200 includes a power supply module 210, a heating module 220, and a charge-discharge switching module 230. The heating module 220 includes a switch module 240 and an energy storage module 250. The power supply module 210 includes at least a first battery group.

The charge-discharge switching module 230, the switch module 240, and the at least first battery group in the power supply module 210 are connected in parallel. A first terminal of the energy storage module 250 is connected to the switch module 240, and a second terminal of the energy storage module 250 is connected to the charge-discharge switching module 230.

To form a charge loop or a discharge loop in the charge/discharge circuit shown in FIG. 2, the charge-discharge switching module 230 and the switch module 240 need to be controlled through a charge/discharge enable signal, so as to form alternately switched charge loop and discharge loop between the at least first battery group in the power supply module 210 and the energy storage module 250. During alternate switching between the charge loop and the discharge loop, a current of an alternating-current waveform is produced in the charge/discharge circuit 200. The current of the alternating-current waveform flows through the at least first battery group in the power supply module 210, so that battery internal resistance of the at least first battery group generates heat, thereby achieving an effect of heating the battery group in the power supply module 210.

In addition, in the charge/discharge circuit shown in FIG. 2, a motor of an electric vehicle is not used for heating a battery, and in a process of heating the battery, the motor is not subject to impact of a current frequency in the charge/discharge circuit 200 in the heating process. This resolves a problem of high vibration noise of the motor in a process of heating the traction battery in the prior art. Moreover, when the charge/discharge circuit 200 shown in FIG. 2 is being used to heat the battery, the motor can drive the motorized vehicle to run as normal, thus implementing heating in driving.

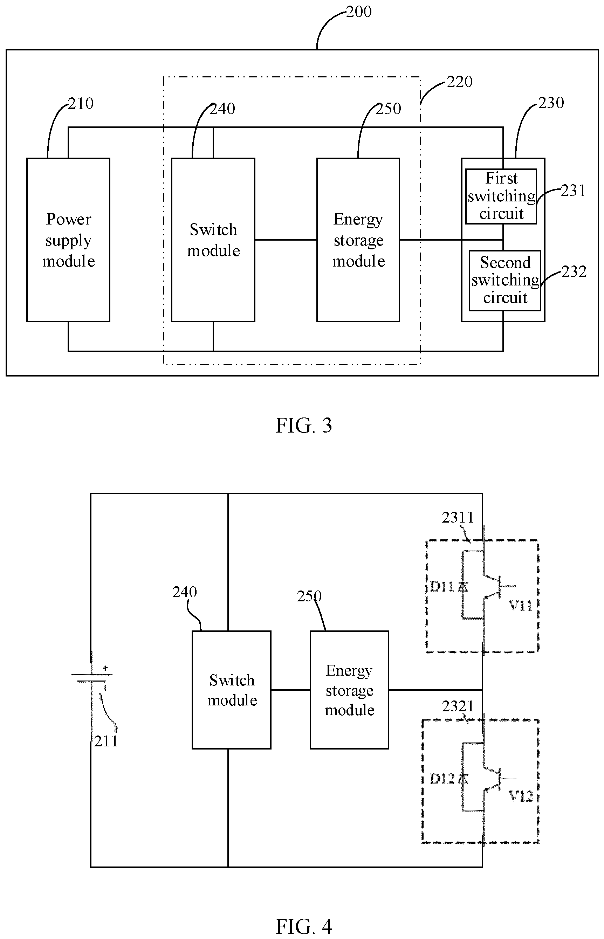

FIG. 3 is another schematic block diagram of a charge/discharge circuit 200 according to an embodiment of this application.

As shown in FIG. 3, the charge-discharge switching module 230 includes a first switching circuit 231 and a second switching circuit 232 connected in series. A joint between the first switching circuit 231 and the second switching circuit 232 is connected to the second terminal of the energy storage module 250. The first switching circuit 231 and the second switching circuit 232 are configured to turn on or off under triggering of a charge/discharge enable signal.

The charge-discharge switching module 230 includes two switching circuits, using which the charge/discharge circuit can be controlled to form a charge loop or a discharge loop. The first switching circuit 231, the second switching circuit 232, and the switch module 240 are controlled through the charge/discharge enable signal, so as to form alternately switched charge loop and discharge loop including the power supply module 210 and the energy storage module 250 to produce a current of an alternating-current waveform in the charge/discharge circuit 200, thus achieving an effect of heating the battery group in the power supply module 210. The joint between the first switching circuit 231 and the second switching circuit 232 is connected to the second terminal of the energy storage module 250, and the first terminal of the energy storage module 250 is connected to the switch module 240. In this way, the switch module 240, the first switching circuit 231, and the second switching circuit 232 are properly controlled to implement alternate charge and discharge between the power supply module 210 and the energy storage module 250, so that the internal resistance of the battery group in the power supply module 210 generates heat, thereby achieving an effect of self-heating of the battery group from the inside. Heating the battery group from the inside brings a higher heating efficiency.

FIG. 4 is a schematic circuit diagram of a charge/discharge circuit 200 according to an embodiment of this application.

The first switching circuit 231 and the second switching circuit 232 may constitute a leg structure. As shown in FIG. 4, the first switching circuit 231 includes a first upper leg 2311, where the second switching circuit 232 includes a first lower leg 2321. A joint between the first upper leg 2311 and the first lower leg 2321 is connected to the second terminal of the energy storage module 250. The first upper leg 2311 and the first lower leg 2321 are configured to turn on or off under triggering of a charge/discharge enable signal. The first upper leg 2311, the first lower leg 2321, and the switch module 240 are controlled through the charge/discharge enable signal, so that a current of an alternating-current waveform is produced in the charge/discharge circuit 200, thereby achieving an effect of heating the battery group in the power supply module 210.

As shown in FIG. 4, the first upper leg 2311 includes a first switch V11 and a first diode D11 connected in parallel, and the first lower leg 2321 includes a second switch V12 and a second diode D12 connected in parallel. A cathode D11 of the first diode is connected to a positive electrode of a first battery group 211, an anode of the first diode D11 is connected to a cathode of the second diode D12, and an anode of the second diode D12 is connected to a negative electrode of the first battery group 211.

The first switch V11 and the second switch V12 may both be triode switches. The first diode D11 and the second diode D12 may both be freewheeling diodes. The triode switch and the freewheeling diode may both be referred to as an insulated gate bipolar translator (Insulated Gate Bipolar Translator, IGBT). Freewheeling diodes are typically used together with inductors. An abrupt change of current flowing through the inductor leads to an abrupt change of voltage between two terminals of the inductor, which is likely to damage other elements in the circuit loop. When the inductor cooperates with a freewheeling diode, the current flowing through the inductor can change smoothly, which avoids the abrupt change of voltage, thereby improving safety of the circuit. Therefore, the first upper leg 2311 and the first lower leg 2321 both use a structure with a switch and a freewheeling diode connected in parallel, which can not only implement the function of a switch, but also control switches in the first upper leg 2311 and the first lower leg 2321 to turn on or off to implement switching between the charge loop and the discharge loop. The abrupt change of voltage can also be avoided by the freewheeling diodes in the first upper leg 2311 and the first lower leg 2321, improving safety of the entire charge/discharge circuit.

When the first switch V 11 turns on, the first switch V 11 is equivalent to a wire, and a current may flow bidirectionally through the first switch V11 turns on; and when the first switch V11 turns off, a current may unidirectionally flow through the first diode D11 from the anode of the first diode D11 to the cathode thereof. The second switch V12 and the second diode D12 have the same structure and effect on a flowing direction of a current as the first switch V11 and the first diode D 11.

The first upper leg 2311 and the first lower leg 2321 both including the structure with a switch and a diode connected in parallel allows the charge-discharge switching module 230 to have more control combinations for controlling the circuit to turn on or off, facilitating more flexible and variable control. Different devices being properly controlled to turn on or off can not only form a charge loop or a discharge loop in the charge/discharge circuit 200, but also balance use frequency of different devices and prolong service life of all the devices in the charge-discharge switching module 230.

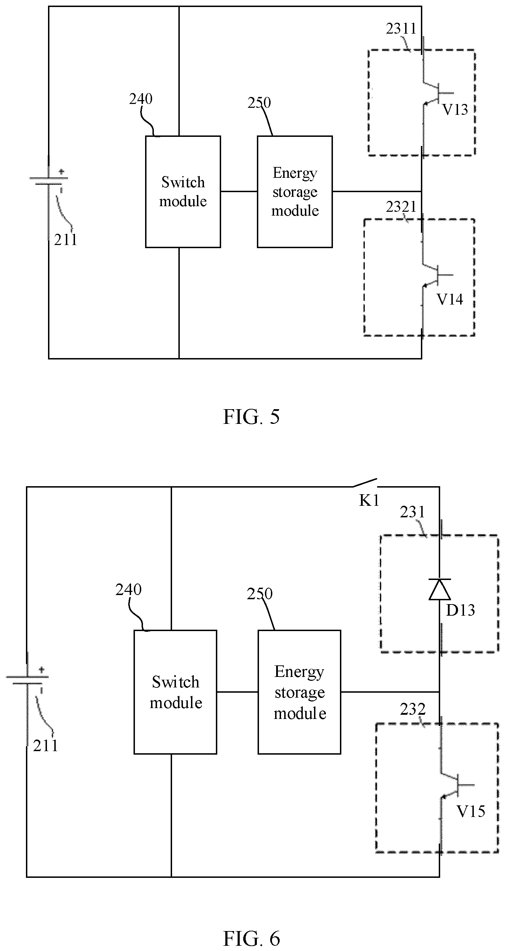

The first upper leg 2311 and the first lower leg 2321 are mainly used to control the circuit to turn on or off, so that they mainly use the function of the switch. Therefore, the first upper leg 2311 and the first lower leg 2321 may include no freewheeling diode, but include only the switch. As shown in FIG. 5, the first upper leg 2311 includes a third switch V13, and the first lower leg 2321 includes a fourth switch V14. The third switch V13 and the fourth switch V14 may be a triode switch or relay switch.

The structure that the first upper leg 2311 and the first lower leg 2321 include only switches allows the charge-discharge switching module 230 to more simply control the circuit to turn on or off, so that the charge loop or the discharge loop is formed in the charge/discharge circuit 200, thereby heating the battery group.

In some other embodiments of this application, the first switching circuit 231 and the second switching circuit 232 in the charge-discharge switching module 230 may alternatively have other variant structures. As shown in FIG. 6, the first switching circuit 231 includes a third diode D13, and the second switching circuit 232 includes a fifth switch V15. A cathode of the third diode D13 is connected to a positive electrode of the first battery group 211, an anode of the third diode D13 is connected to one terminal of the fifth switch V15, and another terminal of the fifth switch V15 is connected to a negative electrode of the first battery group 211.

In another implementation, an orientation of the third diode D13 may alternatively be reversed, that is, the anode of the third diode D13 is connected to the positive electrode of the first battery group 211 through a sixth switch K1, and the cathode of the third diode D13 is connected to the negative electrode of the first battery group 211 through the fifth switch V15.

The fifth switch V15 may be a switch triode or relay switch.

In the charge/discharge circuit shown in FIG. 6, the first switching circuit 231 turns on unidirectionally, so that the current can only flow from the anode of the third diode D13 to the cathode thereof. The second switching circuit 232 may turn on bidirectionally, and the fifth switch V15 is equivalent to a wire after turning on, the current can flow from a first terminal of the fifth switch V15 to a second terminal thereof and alternatively flow from the second terminal of the fifth switch V15 to the first terminal thereof. The charge-discharge switching module 230 uses only one diode and one switch. As compared with a charge-discharge switching module using two tube switches, the cost of the charge-discharge switching module 230 is reduced by half, so that the cost of turn-on or turn-off is saved. In addition, the structure using only one diode and one switch facilitates a simpler control policy, because the diode provides passive control such that proactive control is not required. In this way, the charge-discharge switching module 230 is able to flexibly switch to the charge loop or the discharge loop in the charge/discharge circuit so as to form an alternating current in the charge/discharge circuit.

As shown in FIG. 6, in the embodiment in which the first switching circuit 231 includes the third diode D13, the first switching circuit 231 further includes a sixth switch K1, where one terminal of the sixth switch K1 is connected to the positive electrode of the first battery group 211, and another terminal of the sixth switch K 1 is connected to the negative electrode of the third diode D13.

The sixth switch K1 may be a triode switch or relay switch. The provision of the sixth switch K1 is intended to prevent the current from flowing through the third diode D13 in scenarios requiring no battery heating, thus avoiding circuit faults caused by passage of the current flow through the third diode in such scenarios, prolonging service life of electric devices in the circuit.

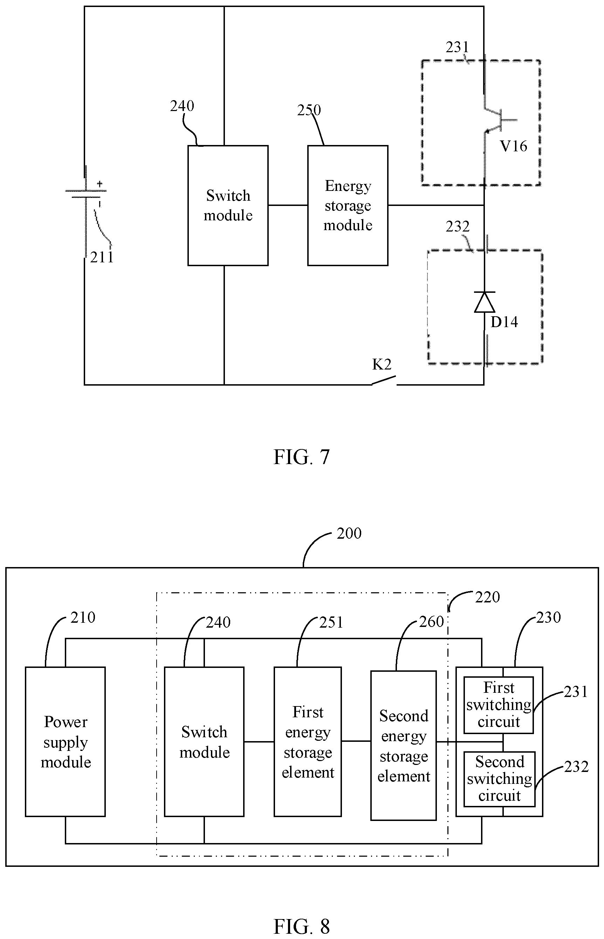

FIG. 7 is a variant structure of the charge-discharge switching module 230 shown in FIG. 6. As shown in FIG. 7, the first switching circuit 231 includes a seventh switch V16, and the second switching circuit 232 includes a fourth diode D14. One terminal of the seventh switch V16 is connected to the positive electrode of the first battery group 211, another terminal of the seventh switch V16 is connected to a cathode of the fourth diode D 14, and an anode of the fourth diode D14 is connected to the negative electrode of the first battery group 211.

In another implementation, an orientation of the fourth diode D14 may alternatively be reversed, that is, the anode of the fourth diode D14 is connected to the seventh switch V16, and the cathode of the fourth diode D14 is connected to the negative electrode of the first battery group 211.

In the charge/discharge circuit shown in FIG. 7, the first switching circuit 231 may turn on bidirectionally, and the seventh switch V16 is equivalent to a wire after turning on, the current can flow from a first terminal of the seventh switch V16 to a second terminal thereof and alternatively flow from the second terminal of the seventh switch V16 to the first terminal thereof. The second switching circuit 232 turns on unidirectionally, so that the current can only flow from the anode of the fourth diode D14 to the cathode thereof. The charge-discharge switching module 230 uses only one diode and one switch. As compared with a charge-discharge switching module using two tube switches, the cost of the charge-discharge switching module 230 is reduced by half, so that the cost of turn-on or turn-off is saved. In addition, the structure using only one diode and one switch facilitates a simpler control policy, because the diode provides passive control such that proactive control is not required. In this way, the charge-discharge switching module 230 is able to flexibly switch to the charge loop or the discharge loop in the charge/discharge circuit so as to form an alternating current in the charge/discharge circuit.

As shown in FIG. 7, in the embodiment in which the second switching circuit 232 includes the fourth diode D14, the second switching circuit 232 further includes an eighth switch K2. The eighth switch K2 is connected in series between the fourth diode D14 and the negative electrode of the first battery group 211.

The eighth switch K2 may be a triode switch or relay switch. The provision of the eighth switch K2 is intended to prevent the current from flowing through the fourth diode D14 in scenarios requiring no battery heating, thus avoiding circuit faults caused by passage of the current flow through the third diode in such scenarios, prolonging service life of electric devices in the circuit.

The energy storage module 250 shown in FIG. 2 to FIG. 7 may include only a first energy storage element 251 (not drawn in FIG. 2 to FIG. 7), where the first energy storage element 251 includes at least one inductor; and a first terminal of the first energy storage element 251 is connected to the switch module 240, and a second terminal of the first energy storage element 251 is connected to the charge-discharge switching module 230.

The energy storage module 250 may include only the first energy storage element 251, where the first energy storage element 251 may include one or more inductors. The first energy storage element 251 provided, electric energy discharged by the power supply module 210 when a discharge loop is formed in the charge/discharge circuit can be stored in the first energy storage element 251. When the charge/discharge circuit switches to a charge loop, the first energy storage element 251 can charge the electric energy stored inside back to the power supply module 210, so that an alternating current flows through the power supply module 210 and the internal resistance of the battery group in the power supply module 210 generates heat, thereby achieving an effect of heating the battery group from the inside. Compared with heating the battery group from the outside, such self-heating manner where the battery group produces heat inside has a better heating effect.

As shown in FIG. 8, the energy storage module 250 may further include a second energy storage element 260, where the second energy storage element 260 is connected between a second terminal of the first energy storage element 251 and the charge-discharge switching module 230. The second energy storage element 260 includes at least one inductor and/or capacitor.

The second energy storage element 260 is added between the first energy storage element 251 and the charge-discharge switching module 230, and the first energy storage element 251 is connected in series with the second energy storage element 260. In this way, when a discharge loop is formed in the charge/discharge circuit, electric energy discharged by the power supply module 210 can be jointly stored by the first energy storage element 251 and the second energy storage element 260, so that more energy can be stored. When the charge/discharge circuit switches to the charge loop, the electric energy stored by the first energy storage element 251 and the second energy storage element 260 is charged back to the battery group in the power supply module 210. In this way, as more electric energy is charged/discharged, a larger charge/discharge current can be produced in the charge/discharge circuit, and when the larger current flows through the battery group, more heat is generated by the internal resistance of the battery, so that the temperature rise speed of the battery group is increased, improving the self-heating efficiency of the battery. Thus, the temperature of the battery group can rise to an expected value at a fastest speed. In addition, more energy charged/discharged can optimize current and frequency parameters in the self-heating process of the battery, improving the self-heating effect of the battery.

After the second energy storage element 260 is added, when the discharge loop is formed in the charge/discharge circuit, energy is stored by the energy storage module 250 and the second energy storage element 260, so that more energy can be stored, thereby optimizing the parameters of current and frequency in the self-heating process of the battery and improving the self-heating effect of the battery.

A ninth switch K3 may also be connected between the energy storage module 250 and the charge-discharge switching module 230, and the ninth switch K3 is connected in series with the second energy storage element 260. The ninth switch K3 may be connected between the energy storage module 250 and the second energy storage element 260 and may alternatively be connected between the second energy storage element 260 and the charge-discharge switching module 230.

The ninth switch K3 is configured to protect normal operation of components such as the energy storage module 250, the second energy storage element 260, and the switch module 240. Specifically, if in heating mode, the first switching circuit 231 and/or the second switching circuit 232 becomes faulty so as to result in breakdown or short circuit, it is necessary to ensure that connection between the energy storage module 250 and the second energy storage element 260 and the power supply module 210 is broken, so that the energy storage module 250 and the second energy storage element 260 are not short circuited with the power supply module 210. The risk of short circuit in this case can be effectively mitigated by controlling the ninth switch K3.

In some embodiments of this application, the switch module 240 includes at least one switch leg, and the energy storage module 250 includes at least one energy storage device, where the energy storage device(s) and the switch leg(s) are equal in quantity, and the energy storage device(s) are connected to the switch leg(s) in one-to-one correspondence. A joint of a second terminal of each energy storage device is connected to the charge-discharge switching module 230.

Each switch leg includes an upper leg and a lower leg, and both the upper leg and the lower leg include a switch and a diode connected in parallel, or both the upper leg and lower leg include a switch. The switch may be a triode switch or relay switch.

The switch module 240 includes at least one switch leg, where the switch leg is of a symmetrical structure. Each switch leg and the charge-discharge switching module 230 are controlled to turn on or off, so as to form an alternately switched charge loop and discharge loop in the charge/discharge circuit, thereby producing a current of an alternating-current waveform in the charge/discharge circuit. The current flows through the battery group, so that the internal resistance of the battery group generates heat, thereby achieving a self-heating effect of the traction battery. Control of the switch leg(s) is simple. The energy storage device(s) in the first energy storage element are connected to the switch leg(s) in one-to-one correspondence. A manner of expanding the energy storage scale of the energy storage module 250 in the charge/discharge circuit is provided. When fewer energy storage devices and switch legs are provided, product costs can be reduced while self-heating of the battery group is implemented. When more energy storage devices and switch legs are provided, complexity of control in not significantly increased, while the amount of energy storable by the energy storage module 250 will greatly increase. The increase of the energy stored can produce a larger charge/discharge current in the charge/discharge circuit, and when the larger current flows through the battery group, more heat is generated by the internal resistance of the battery, so that the temperature rise speed of the battery group is increased, improving the self-heating efficiency of the battery. Thus, the temperature of the battery group can rise to an expected value at a fastest speed. In addition, more energy charged/discharged can optimize current and frequency parameters in the self-heating process of the battery, improving the self-heating effect of the battery.

Each switch leg and the charge-discharge switching module 230 are controlled to turn on or off, so as to form an alternately switched charge loop and discharge loop in the charge/discharge circuit, thereby producing a current of an alternating-current waveform in the charge/discharge circuit. The current flows through the battery group, so that the internal resistance of the battery group generates heat, thereby achieving the self-heating effect of the traction battery.

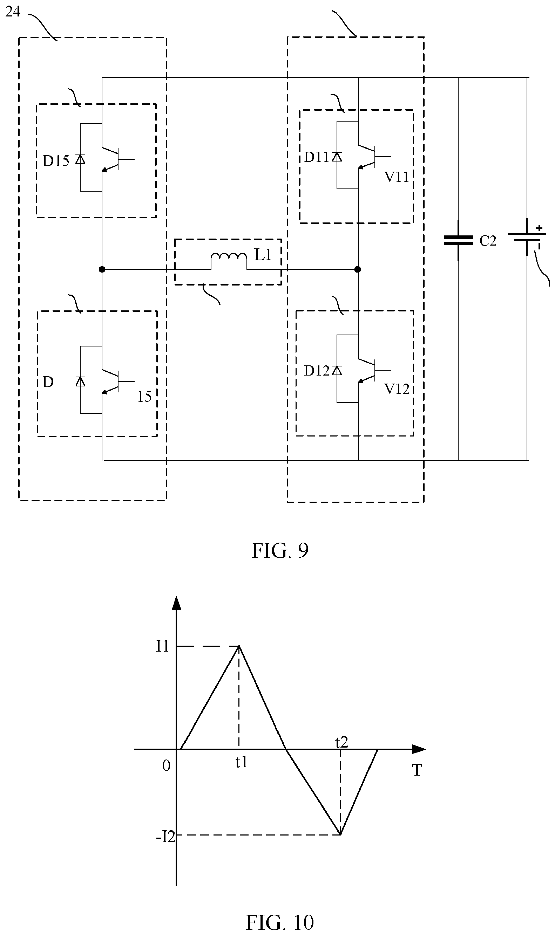

In an example, as shown in FIG. 9, the switch module 240 includes a first switch leg 241, where the first switch leg 241 includes a second upper leg 2411 and a second lower leg 2412 connected in series. A first terminal of the first switch leg 241, a first terminal of the charge-discharge switching module 230, and a first terminal of the power supply module 210 are collinearly connected. A second terminal of the first switch leg 241, a second terminal of the charge-discharge switching module 230, and a second terminal of the power supply module 210 are collinearly connected.

The energy storage module 250 includes a first energy storage element, where the first energy storage element includes at least one inductor; and a first terminal of the first energy storage element is connected to the switch module, and a second terminal of the first energy storage element is connected to the charge-discharge switching module 230. The first energy storage element includes at least one inductor, or the first energy storage element includes at least one inductor and/or capacitor. A joint between the second upper leg 2411 and the second lower leg 2412 is connected to the first terminal of the energy storage module 250, and the second terminal of the energy storage module 250 is connected to the charge-discharge switching module 230.

As shown in FIG. 9, an example in which the first energy storage element 251 is an inductor L1 is used for illustration. In actual use, the first energy storage element may alternatively be a capacitor, a plurality of inductors connected in series or inductors and capacitors connected in series. An example in which both the second upper leg 2411 and the second lower leg 2412 use a triode switch and a freewheeling diode connected in parallel is used for illustration. The second upper leg 2411 includes a tenth switch V17 and a fifth diode D15 connected in parallel, and the second lower leg 2412 includes an eleventh switch V18 and a sixth diode D16 connected in parallel. In actual use, the structure of the second upper leg 2411 and the second lower leg 2412 may alternatively be any structure capable of implementing the function of the switch. For example, the second upper leg 2411 and the second lower leg 2412 may both be triode switches.

As shown in FIG. 9, the charge-discharge switching module 230 uses a first upper leg 2311 and a first lower leg 2321 connected in series. The first upper leg 2311 includes a first switch V11 and a first diode D11 connected in parallel, and the first lower leg 2321 includes a second switch V12 and a second diode D12 connected in parallel. In addition to the structure shown in FIG. 9, the structure of the charge-discharge switching module 230 may alternatively be any one of the structures shown in FIG. 5 to FIG. 7.

In the circuit structure shown in FIG. 9, the first upper leg 2311, the second upper leg 2411, and the positive electrode of the first battery group 211 are collinearly connected, and the first lower leg 2321, the second lower leg 2412, and the negative electrode of the first battery group 211 are collinearly connected. One terminal of the inductor L1 is connected to the joint between the second upper leg 2411 and the second lower leg 2412, and another terminal of the inductor L1 is connected to a joint between the first upper leg 2311 and the first lower leg 2321.

As shown in FIG. 9, a capacitor C2 is connected in parallel to the first battery group 211. The capacitor C2 can implement functions such as voltage stabilization, thus reducing voltage fluctuation of the first battery group 211, and improving voltage stability of the first battery group 211. In this way, requirements of a motor control unit on sampling accuracy of voltage of the battery can be reduced during driving.

In a motorized vehicle, a control module controls the switch module 240 and the charge-discharge switching module 230, so as to alternately switch between the charge loop and the discharge loop in the charge/discharge circuit. Specifically, in the circuit structure shown in FIG. 9, the control module controls the first upper leg 2311, the first lower leg 2321, the second upper leg 2411, and the second lower leg 2412 to turn on or off, so as to form a loop via which the first battery group 211 discharges to the inductor L1 and a loop via which the inductor L1 charges the first battery group 211, thereby heating the first battery group 211 during charge and discharge.

The control module may be a VCU (vehicle control unit) or an MCU (motor control unit) and may alternatively be another control module relatively independent of the VCU and MCU, for example, a domain controller. This is not specifically limited in the embodiments of this application.

It can be seen that when the first battery group 211 is heated, the first upper leg 2311, the first lower leg 2321, the second upper leg 2411, and the second lower leg 2412 are controlled to turn on or off, so as to form a loop via which the first battery group 211 discharges to the inductor L1 and a loop via which the inductor L 1 charges the first battery group 211. The discharge loop and the charge loop switch back and forth, so as to perform charge and discharge repeatedly between the first battery group 211 and the inductor L1. An alternating current flowing in the battery during charge and discharge can increase the temperature of the battery and implement self-heating of the battery.

Specifically, each heating period of heating the first battery group 211 may include a first stage and a second stage. In the first stage, the control module may control the first upper leg 2311 and the second lower leg 2412 to turn on simultaneously and control the first lower leg 2321 and the second upper leg 2411 to turn off, so as to form a loop including the first battery group 211, the first upper leg 2311, the inductor L 1, and the second lower leg 2412, so that the first battery group 211 discharges to the inductor L1, and the inductor L1 stores electric energy. A path of current flow in discharge is as follows: positive electrode of the first battery group 211 → V11 → inductor L1 → V18 → negative electrode of the first battery group 211.

In the second stage, the first lower leg 2321 and the second upper leg 2411 are controlled to turn on simultaneously and the first upper leg 2311, and the second lower leg 2412 are controlled to turn off, so as to form a loop including the first battery group 211, the first lower leg 2321, the inductor L1, and the second upper leg 2411 for the inductor L1 to charge the first battery group 211. A path of current flow in charge is as follows: negative electrode of the first battery group 211 → V12 → inductor L1 → V17 → positive electrode of the first battery group 211.

In another implementation, in the first stage, the control module may alternatively control the first lower leg 2321 and the second upper leg 2411 to turn on simultaneously and control the first upper leg 2311 and the second lower leg 2412 to turn off, so as to form a loop including the first battery group 211, the second upper leg 2411, the inductor L1, and the first lower leg 2321, so that the first battery group 211 discharges to the inductor L1, and the inductor L1 stores electric energy. A path of current flow in discharge is as follows: positive electrode of the first battery group 211 → V17 → inductor L1 → V12 → negative electrode of the first battery group 211. In the second stage, the first upper leg 2311 and the second lower leg 2412 are controlled to turn on simultaneously, and the first lower leg 2321 and the second upper leg 2411 are controlled to turn off, so as to form a charge loop including the first battery group 211, the second lower leg 2412, the inductor L1, and the first upper leg 2311 for the inductor L1 to charge the first battery group 211. A path of current flow in charge is as follows: negative electrode of the first battery group 211 → V18 → inductor L1 → V11 → positive electrode of the first battery group 211.

In this application, proper control timing is designed to control the first upper leg 2311, the first lower leg 2321, the second upper leg 2411, and the second lower leg 2412 to turn on or off, so as to form a loop via which the first battery group 211 discharges to the inductor L1 and a loop via which the inductor L1 charges the first battery group 211. The discharge loop and the charge loop switch back and forth, so as to perform charge and discharge repeatedly between the first battery group 211 and the inductor L1, thereby persistently heating the battery.

In some other embodiments of this application, the energy storage module 250 may include a structure with combination of a plurality of inductors and/or capacitors, provided that a specific structure of the energy storage module 250 can cooperate with the first battery group 211 to store energy. The switch module 240 may includes a plurality of switch legs. When the first battery group 211 is heated by the charge/discharge circuit, the motor of the vehicle can operate normally. Therefore, when the motor operates under heating mode, normal driving of the vehicle is not impacted.

In the foregoing embodiments, the power supply module 210 includes at least a first battery group 211. In FIG. 9, an example in which the power supply module 210 includes only the first battery group 211 is used for description. In an embodiment in which the charge/discharge circuit includes only one battery group, the energy storage module 250 stores energy in a discharge stage of the battery group, and the energy storage module 250 charges the battery group in a charge stage of the battery group. In such charge/discharge process, the energy storage module 250 needs to discharge immediately after being fully stored with the energy, so that an amplitude of the current in the charge/discharge circuit decreases immediately after reaching the highest value, thereby enabling a waveform of an alternating current produced to be any one of a triangular waveform, a quasi-triangular waveform, a sinusoidal waveform, and a quasi-sinusoidal waveform. FIG. 10 is a schematic diagram of a waveform of alternating current of a triangular waveform produced in a charge/discharge circuit including only one battery group.

In this embodiment of this application, the quasi-triangular waveform is a waveform distortion caused by problems such as some errors of a device or current modulation accuracy, causing the waveform to distort from a regular triangular waveform to the quasi-triangular waveform. The errors causing distortion may include problems such as device response time latency and electromagnetic interference. Each period of the triangular waveform and the quasi-triangular waveform has only one maximum discharge peak value and one maximum charge peak value. With reference to the triangular wave shown in FIG. 10, for the quasi-triangular wave, each period of the quasi-triangular wave also has only a maximum discharge peak value I1 at time t1 and a maximum charge peak value -I2 at time t2, where I1 and -I2 have different current directions.

Similarly, the quasi-sinusoidal wave is also a waveform distortion caused by problems such as some errors of a device or current modulation accuracy, causing the waveform to distort from regular sinusoidal wave to the quasi-triangular wave. Each period of the sinusoidal wave and the quasi-triangular wave also has only one maximum discharge peak value and one maximum charge peak value.

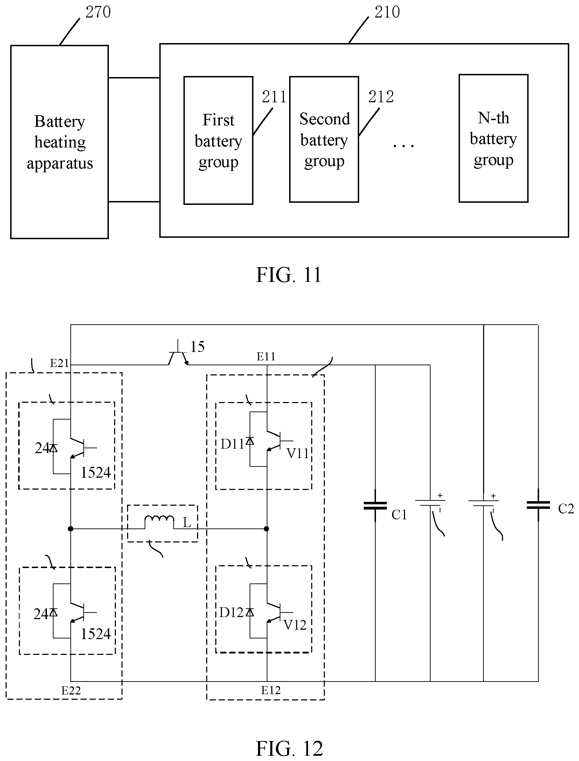

In some other embodiments of this application, the power supply module 210 may alternatively include two or more than two battery groups. Any two battery groups in the power supply module 210 can be heated simultaneously by the charge/discharge circuit according to the embodiments of this application. A plurality of battery groups in the power supply module 210 may alternatively be divided into two sets of battery groups. Each set of battery groups are connected from end to end (that is, a negative electrode of a former battery group is connected to a positive electrode of a latter battery group adjacent to the former battery group), so as to be equivalent to one battery group. In this way, all the battery groups can be heated simultaneously by the charge/discharge circuit. In the embodiments of this application, the heating module 220 and the charge-discharge switching module 230 are collectively referred to as a battery heating apparatus 270. As shown in FIG. 11, the battery heating apparatus 270 is connected to the power supply module 210, and the battery heating apparatus 270 is configured to heat the power supply module 210. The power supply module 210 includes N battery groups, N being a positive integer greater than or equal to 2, for example, a first battery group 211, a second battery group 212, ..., and an N-th battery group shown in FIG. 11. The battery heating apparatus 270 in the embodiments of this application can heat two of the battery groups simultaneously at each time. In other words, the N battery groups may be divided into multiple sets, where each set includes two battery groups, and the battery heating apparatus 270 heats two of the battery groups at each time. The embodiments of this application make no limitation on how the N battery groups are grouped and also make no limitation on a heating sequence of each group of batteries. In another implementation, the N battery groups may alternatively be divided into two sets. A plurality of battery groups in each set may be equivalent to a larger battery group. In this way, the N battery groups are equivalent to two battery groups.

Based on the above analysis, a case in which two or more battery groups are provided may be simplified to a case in which two battery groups are heated simultaneously. The following describes in detail a structure and a control process of the charge/discharge circuit for heating the first battery group 211 and the second battery group 212 simultaneously by using the first battery group 211 and the second battery group 212 as an example.

A first terminal of the first battery group 211 is connected to a first terminal of the charge-discharge switching module 230, and a second terminal of the first battery group 211 is collinearly connected to a second terminal of the second battery group 212, a second terminal of the switch module 240, and a second terminal of the charge-discharge switching module 230; a first terminal of the second battery group 212 is connected to a first terminal of the switch module 240; and a tenth switch K4 is connected between the first terminal of the first battery group 211 and the first terminal of the second battery group 212.

In an application scenario with two battery groups, structures of the switch module 240 and the charge-discharge switching module 230 are the same as structures in the foregoing application scenario with a single battery group. The energy storage module 250 is connected between the charge-discharge switching module 230 and the switch module 240. In an implementation, one terminal of the energy storage module 250 is connected to the joint between the first switching circuit 231 and the second switching circuit 232 in the charge-discharge switching module 230, and another terminal of the energy storage module 250 is connected to a joint between an upper leg and a lower leg of each switch leg in the switch module 240. In another implementation, the energy storage module 250 may alternatively not be connected between the joint between the first switching circuit 231 and the second switching circuit 232 and the joint between the upper leg and the lower leg of each switch leg. Instead, the energy storage module 250 is connected between the first terminal of the switch module 240 and the first terminal of the charge-discharge switching module 230 or connected between the second terminal of the switch module 240 and the second terminal of the charge-discharge switching module 230. The first terminal of the switch module 240 and the first terminal of the charge-discharge switching module 230 are terminals where the switch module 240 and the charge-discharge switching module 230 are collinearly connected, and the second terminal of the switching module 240 and the second terminal of the charge-discharge switching module 230 are other terminals where the switch module 240 and the charge-discharge switching module 230 are collinearly connected.

The first terminal of the first battery group 211 may be a positive electrode of the first battery group 211, and the second terminal of the first battery group 211 may be a negative electrode of the first battery group 211. The first terminal of the second battery group 212 may be a positive electrode of the second battery group 212, and the second terminal of the second battery group 212 may be a negative electrode of the second battery group 212.

When the tenth switch K4 is turned off, the negative electrode of the first battery group 211 is connected to the positive electrode of the second battery group 212. When the tenth switch K4 is turned on, the positive electrode of the first battery group 211 is connected to the positive electrode of the second battery group 212. When the first battery group 211 and the second battery group 212 need to be heated, the tenth switch K4 may be controlled to turn off. In other cases, for example, when the first battery group 211 and the second battery group 212 supply power to a power system, the tenth switch K4 may be controlled to turn on.

When the tenth switch K4 is turned off, the positive electrode of the first battery group 211 is connected to the positive electrode of the second battery group 212, and the negative electrode of the first battery group 211 is connected to the negative electrode of the second battery group 212. In this way, a current flows between the first battery group 211 and the second battery 122, and energy is exchanged between the first battery group 211 and the second battery group 212.

The charge/discharge circuit shown in FIG. 12 includes a first battery group 211 and a second battery group 212. The charge-discharge switching module 230 includes a first upper leg 2311 and a first lower leg 2321 connected in series, where the first upper leg 2311 includes a first switch V11 and a first diode D11 connected in parallel, and the first lower leg 2321 includes a second switch V12 and a second diode D12 connected in parallel. The energy storage module 250 includes an inductor L1. The switch module 240 includes a second upper leg 2411 and a second lower leg 2412, where the second upper leg 2411 includes a tenth switch V17 and a fifth diode D15 connected in parallel, and the second lower leg 2412 includes an eleventh switch V18 and a sixth diode D16 connected in parallel.

The first upper leg 2311, the second upper leg 2411, and a positive electrode of the first battery group 212 are collinearly connected, and the first lower leg 2321, the second lower leg 2412, a negative electrode of the first battery group 211, and a negative electrode of the second battery group 212 are collinearly connected. One terminal of the inductor L1 is connected to a joint between the second upper leg 2411 and the second lower leg 2412, and another terminal of the inductor L1 is connected to a joint between the first upper leg 2311 and the first lower leg 2321. A positive electrode of the first battery group 211 is connected to the second upper leg 2411. A joint between the positive electrode of the first battery group 211 and the second upper leg 2411 is connected to one terminal of the tenth switch K4, and another terminal of the tenth switch K4, the first upper leg 2311, and the positive electrode of the second battery group 212 are collinearly connected.

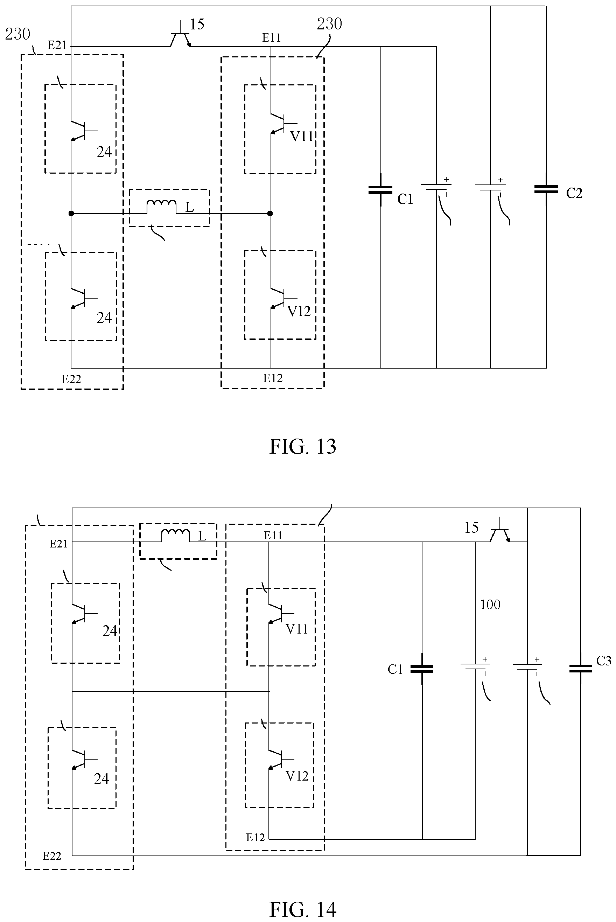

In FIG. 12, the first upper leg 2311, the first lower leg 2321, the second upper leg 2411, and the second lower leg 2412 all include a triode switch and a freewheeling diode connected in parallel. Such structure may alternatively be replaced with a structure shown in FIG. 13 that the first upper leg 2311, the first lower leg 2321, the second upper leg 2411, and the second lower leg 2412 all include only a triode switch. The triode switch may alternatively be replaced with any element with the function of the switch, for example, a relay switch. In actual use, any one of the first upper leg 2311, the first lower leg 2321, the second upper leg 2411, and the second lower leg 2412 may include a triode switch and a freewheeling diode connected in parallel and may alternatively include only a switch, which is not limited in this application. The charge-discharge switching module 230 may alternatively not include the first upper leg 2311 and the first lower leg 2321, but include a combined structure shown in FIG. 6 or FIG. 7 that has a diode and a switch connected in series. The energy storage module 250 may alternatively include a plurality of inductors connected in series or inductors and capacitors connected in series.

The energy storage module 250 may be connected between the charge-discharge switching module 230 and the switch module 240. For example, as shown in FIG. 12 and FIG. 13, one terminal of the energy storage module 250 is connected between the first upper leg 2311 and the first lower leg 2321, and another terminal of the energy storage module 250 is connected between the second upper leg 2411 and the second lower leg 2412.

For another example, as shown in FIG. 14, one terminal of the energy storage module 250 is connected to a first terminal E11 of the charge-discharge switching module 230, and another terminal of the energy storage module 250 is connected to a first terminal E21 of the switch module 240. The joint between the first upper leg 2311 and the first lower leg 2321 is connected to the joint between the second upper leg 2411 and the second lower leg 2412 through a wire. The first lower leg 2321 is connected to the negative electrode of the first battery group 211, the second lower leg 2412 is connected to the negative electrode of the second battery group 212, and the first lower leg 2321 is not connected to the second lower leg 2412.

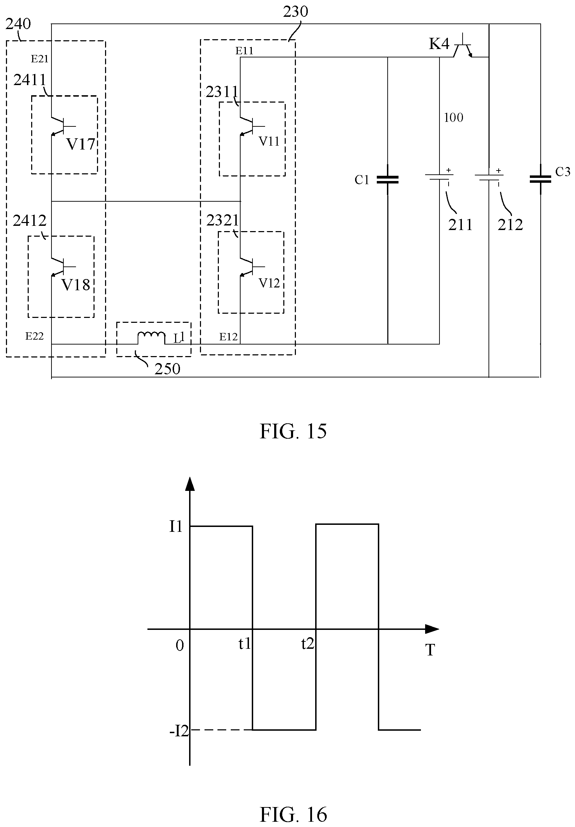

For another example, as shown in FIG. 15, one terminal of the energy storage module 250 is connected to a second terminal E12 of the charge-discharge switching module 230, and another terminal of the energy storage module 250 is connected to a second terminal E22 of the switch module 240. The joint between the first upper leg 2311 and the first lower leg 2321 is connected to the joint between the second upper leg 2411 and the second lower leg 2412 through a wire. The first upper leg 2311 is connected to the positive electrode of the first battery group 211, the second upper leg 2411 is connected to the positive electrode of the second battery group 212, and the first upper leg 2311 is not connected to the second upper leg 2411.

As shown in FIG. 12 to FIG. 15, for example, a capacitor C1 is connected in parallel to two terminals of the first battery group 211, and a capacitor C2 is connected in parallel to two terminals of the second battery group 212. The capacitor C1 and the capacitor C2 can implement functions such as voltage stabilization, thus reducing voltage fluctuation of the first battery group 211 and the second battery group 212, and improving voltage stability of the second battery group 212 and the second battery group 212. In this way, requirements of a motor control unit on sampling accuracy of voltage of the battery can be reduced during driving.

A control module such as a VCU or an MCU in a motorized vehicle controls the switch module 240 and the charge-discharge switching module 230, so as to form a loop via which the second battery group 212 discharges to the energy storage module 250 and a loop via which the energy storage module 250 and the second battery group 212 charge the first battery group 211, thereby heating the first battery group 211 and the second battery group 212 during charge and discharge. And/or, the control module controls the switch module 240 and the charge-discharge switching module 230, so as to form a loop via which the first battery group 211 discharges to the energy storage module 250 and a loop via which the energy storage module 250 and the first battery group 211 charge the second battery group 212, thereby heating the first battery group 211 and the second battery group 212 during charge and discharge.

That is, when the first battery group 211 and the second battery group 212 are heated by the control module, the switch module 240 and the charge-discharge switching module 230 need to be controlled. The switch module 240 and the charge-discharge switching module 230 are controlled to turn on or off, so as to form a loop via which one battery group of the first battery group 211 and the second battery group 212 discharges to the energy storage module 250 and a loop via which this battery group and the energy storage module 250 charges the other battery group. The discharge loop and the charge loop switch back and forth. A current flows in two battery groups during discharge and charge, so that the temperature of the battery group increases, thereby heating the two battery groups simultaneously and featuring high heating efficiency.

In an implementation, for the charge/discharge circuit shown in FIG. 12 and FIG. 13, when the first battery group 211 and the second battery group 212 need to be heated, each heating period includes a first stage and a second stage. In the first stage, the control module first controls the tenth switch K4 to turn off. The control module may control the first upper leg 2311 and the second lower leg 2412 to turn on simultaneously, so as to form a loop including the first battery group 211, the first upper leg 2311, the energy storage module 250, and the second lower leg 2412 for the first battery group 211 to discharge to the energy storage module 250. A path of current flow in discharge is as follows: positive electrode of the first battery group 211 —> V11 —> inductor L1 → V18 → negative electrode of the first battery group 211. In the second stage, the first upper leg 2311 and the second upper leg 2411 are controlled to turn on simultaneously, so as to form a loop including the first battery group 211, the first upper leg 2311, the energy storage module 250, the second upper leg 2411, and the second battery group 212 for the first battery group 211 and the energy storage module 250 to charge the second battery group 212. A path of current flow in charge is as follows: negative electrode of the first battery group 211 → V11 → inductor L1 → V17 —> positive electrode of the second battery group 212 → negative electrode of the second battery group 212 —> negative electrode of the first battery group 211. In addition, to keep such state unchanged, the V17 and the V18 may be controlled to switch repeatedly, so as to control time of charging the second battery group 212.

Further, in addition to the first stage and the second stage, each heating period may further include a third stage and a fourth stage. In the third stage, the control module controls the first lower leg 2321 and the second upper leg 2411 to turn on simultaneously, so as to form a loop including the second battery group 212, the second upper leg 2411, the energy storage module 250, and the first lower leg 2321 for the second battery group 212 to discharge to the energy storage module 250. A path of current flow in discharge is as follows: positive electrode of the second battery group 212 → V17 → inductor L1 → V12 → negative electrode of the second battery group 212. In the fourth stage, the first upper leg 2311 and the second upper leg 2411 are controlled to turn on simultaneously, so as to form a loop including the second battery group 212, the second upper leg 2411, the energy storage module 250, the first upper leg 2311, and the first battery group 211 for the second battery group 212 and the energy storage module 250 to charge the first battery group 211. A path of current flow in charge is as follows: negative electrode of the second battery group 212 → V17 → inductor L1 → V11 → positive electrode of the first battery group 211 → negative electrode of the first battery group 211 —> negative electrode of the second battery group 212. In addition, to keep such state unchanged, the first upper leg 2311 and the first lower leg 2321 may be controlled to switch repeatedly, so as to control time of charging the first battery group 211.

Similarly, for the charge/discharge circuit shown in FIG. 14, in the first stage, the first lower leg 2321 and the second upper leg 2411 are controlled to turn on simultaneously, so as to form a loop via which the first battery group 211 discharges to the energy storage module 250. A path of current flow in discharge is as follows: positive electrode of the first battery group 211 —> inductor L1 → V17 → V12 → negative electrode of the first battery group 211. In the second stage, the second lower leg 2412 and the first lower leg 2321 are controlled to turn on simultaneously, so as to form a loop via which the first battery group 211 and the energy storage module 250 charge the second battery group 212. A path of current flow in charge is as follows: negative electrode of the first battery group 211 → inductor L1 → positive electrode of the second battery group 212 → negative electrode of the second battery group 212 → V18 → V12 → negative electrode of the first battery group 211.

Further, in the third stage, the first upper leg 2311 and the second lower leg 2412 are controlled to turn on simultaneously, so as to form a loop via which the second battery group 212 discharges to the energy storage module 250. A path of current flow in discharge is as follows: positive electrode of the second battery group 212 —> inductor L1 —> V11 —> V18 —> negative electrode of the second battery group 212. In the fourth stage, the first lower leg 2321 and the second lower leg 2412 are controlled to turn on simultaneously, so as to form a loop via which the second battery group 212 and the energy storage module 250 charge the first battery group 211. A path of current flow in charge is as follows: negative electrode of the second battery group 212 → inductor L1 → positive electrode of the first battery group 211 → negative electrode of the first battery group 211 → V12 → V18 → negative electrode of the second battery group 212. The tube switches of the legs may be controlled to turn on or off the legs.

For the charge/discharge circuit shown in FIG. 15, in the first stage, the first lower leg 2321 and the second upper leg 2411 are controlled to turn on simultaneously, so as to form a loop via which the second battery group 212 discharges to the energy storage module 250. A path of current flow in discharge is as follows: positive electrode of the second battery group 212 → V17 → V12 → inductor L1 → negative electrode of the second battery group 212. In the second stage, the second upper leg 2411 and the first upper leg 2311 are controlled to turn on simultaneously, so as to form a loop via which the second battery group 212 and the energy storage module 250 charge the first battery group 211. A path of current flow in charge is as follows: negative electrode of the second battery group 212 → V17 → V11 → positive electrode of the first battery group 211 → negative electrode of the first battery group 211 → inductor L1 → negative electrode of the second battery group 212.

Further, in the third stage, the first upper leg 2311 and the second lower leg 2412 are controlled to turn on simultaneously, so as to form a loop via which the first battery group 211 discharges to the energy storage module 250. A path of current flow in discharge is as follows: positive electrode of the first battery group 211 —> V11 —> V18 —> inductor L1 —> negative electrode of the first battery group 211. In the fourth stage, the first upper leg 2311 and the second upper leg 2411 are controlled to turn on simultaneously, so as to form a loop via which the first battery group 211 and the energy storage module 250 charge the second battery group 212. A path of current flow in charge is as follows: negative electrode of the first battery group 211 —> V11 —> V17 → positive electrode of the first battery group 212 → negative electrode of the second battery group 212 → inductor L1 → negative electrode of the first battery group 211.

It can be seen that for a specific circuit structure of the charge/discharge circuit including two or more battery groups, proper control timing is designed to control the legs in the charge/discharge circuit shown in FIG. 12 to FIG. 15, so as to form a loop via which one battery group discharges to the energy storage module 250 and a loop via which the energy storage module 250 and this battery group charge the other battery. The discharge loop and the charge loop switch back and forth, so as to heat two batteries simultaneously during discharge and charge, featuring high heating efficiency.

It should be understood that the charge/discharge circuit shown in FIG. 12 to FIG. 15 is merely an example. The legs in the figure may alternatively have other implementations. For example, in a more preferable implementation shown in FIG. 12, the first upper leg 2311 may include a tube switch V11 and a freewheeling diode D11 connected in parallel to the tube switch V11. The first lower leg 2321 may include a tube switch V12 and a freewheeling diode D12 connected in parallel to the tube switch V12. The switch module 240 includes only one switch leg. The second upper leg 2411 in the switch leg may include a tube switch V17 and a freewheeling diode D15 connected in parallel to the tube switch V17. The second lower leg 2412 may include a tube switch V18 and a freewheeling diode D16 connected in parallel to the tube switch V18. Specific forms of the legs are not limited in the embodiments of this application. In a case that the legs do not include the freewheeling diode, the function of the charge/discharge circuit can still be implemented.

Freewheeling diodes are typically used together with inductors. An abrupt change of current flowing through the inductor leads to an abrupt change of voltage between two terminals of the inductor, which is likely to damage other elements in the circuit loop. When the inductor cooperates with a freewheeling diode, the current flowing through the inductor can change smoothly, which avoids the abrupt change of voltage, thereby improving safety of the circuit.

For example, as shown in FIG. 12, for transition from a first stage to a second stage in one heating period, that is, when switching is from the tube switch V17 to the tube switch V18, due to presence of switching latency, the current may hold for a short time in the first stage in the path in which the first battery group 211 discharges to the inductor L1. During this time, current can be buffered by the freewheeling diode D16, avoiding the abrupt change of voltage, thereby improving safety of the circuit.

In the foregoing embodiment with two or more battery groups, in each heating period, one battery group discharges to the energy storage module, and then this battery group and the energy storage module together charge the other battery group(s). Therefore, a charge current or a discharge current can be kept at a stable and high current value, so that a square or quasi-square wave alternating current is produced in the charge/discharge circuit. FIG. 16 is a schematic diagram of square wave. The provision of two battery groups can effectively relieve constraints of the energy storage module on the magnitude of heating current and the heating current frequency. The heating with two battery groups allows energy of the energy storage module to discharge to one battery group in time, keeping the heating current of the battery group at a stable and large magnitude according to a preset heating frequency, such that the heating current frequency can be adjusted for the battery under different temperatures and SOCs to significantly increase the heating speed. As the heating current magnitude can be kept at a stable value, the alternating current produced in the charge/discharge circuit including two battery groups is a square or quasi-square wave in waveform.

In this embodiment of this application, the quasi-square wave is a waveform distortion caused by problems such as some errors of a device or current modulation accuracy, causing the waveform to distort from a regular square wave to the quasi-square wave. The errors causing distortion may include problems such as device response time latency and electromagnetic interference. In each period of the square wave and the quasi-square wave, there is a duration of time where a stable discharge current peak is kept and a duration of time where a stable charge current peak is kept. With reference to the square wave shown in FIG. 16, for the quasi-square wave, in a single period of the quasi-square wave, current is kept at I1 in a duration of 0-t1 and kept at -I2 in a duration of t1-t2, where I1 and -I2 are opposite in direction. The quasi-square wave may include trapezoidal wave or any other waveforms which have a period of time for keeping a stable discharge current peak value and a period of time for keeping a stable charge current peak value.

In some other embodiments, a charge/discharge current frequency may alternatively be controlled by a motor control unit, so that the current frequency is reduced, and electric energy stored in the energy storage module in each period is charged back to the battery group as much as possible, so as to produce an alternating current of any one of a triangular waveform, a quasi-triangular waveform, a sinusoidal waveform, and a quasi-sinusoidal waveform in the charge/discharge circuit, as shown in FIG. 10.

Current frequency of charge/discharge in scenarios where a square or quasi-square wave is produced is greater than current frequency in scenarios where waveforms such as triangular, quasi-triangular, sinusoidal, and quasi-sinusoidal waveforms are produced.

In some other embodiments of this application, the switch module 240 includes at least one switch branch, where the at least one switch branch each includes a switch and a diode connected in series; and the first energy storage element 251 in the energy storage module 250 includes at least one energy storage device, where the energy storage device(s) and the switch branch(es) are equal in quantity, and the energy storage device(s) are connected to the switch branch(es) in one-to-one correspondence. A cathode of the diode in the switch branch is connected to a positive electrode of the power supply module 210, and an anode of the diode in the switch branch is connected to a negative electrode of the power supply module 210.

In this embodiment, the switch module includes the switch branch composed of the switch and the diode connected in series, and uses one diode and one switch connected in series. As compared with a switch leg composed of two tube switches, the cost of the switch module is reduced by half, so that the cost of turn-on or turn-off is saved. In addition, the diode provides passive control such that proactive control is not required. The structure using only one diode and one switch facilitates a simpler control policy. In addition, more structural variants of the switch module are provided, which can be combined with different variant structures of the charge-discharge switching module to produce a larger variety of specific circuit structures for the charge/discharge circuit, so as to satisfy requirements of different users or industrial production for the charge/discharge circuit structure. The cathode of the diode in the switch branch is connected to the positive electrode of the power supply module. The cathode of the diode can cut off current to prevent the positive electrode and negative electrode of the power supply module from being connected directly in forward direction through the diode, improving safety of the charge/discharge circuit.

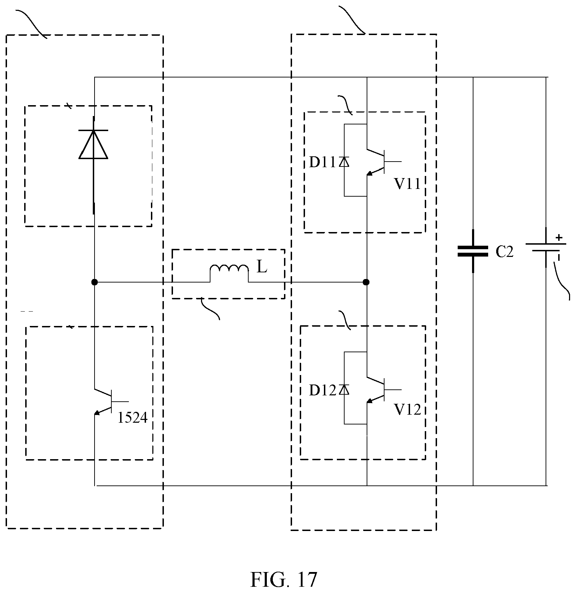

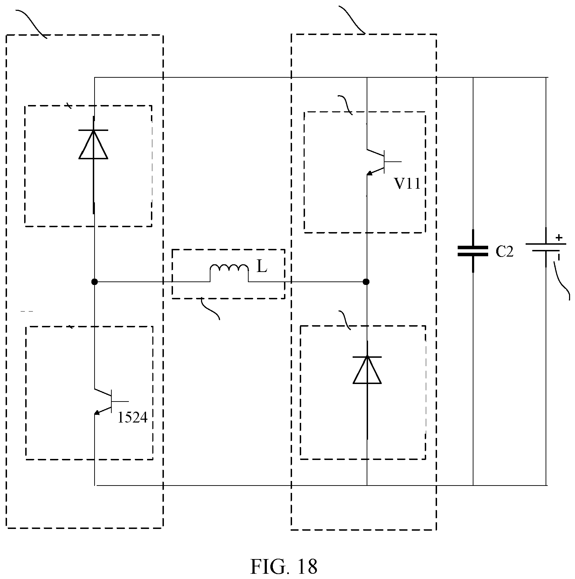

The structure of the switch module 240 in FIG. 9 and FIG. 12 to FIG. 15 may be replaced with the structure of the foregoing switch branch. For example, as shown in FIG. 9, the structure of the switch module 240 is varied. As shown in FIG. 17, the switch module 240 includes a switch V18 and a diode D15 connected in series. For another example, as shown in FIG. 9, the structures of the switch module 240 and the charge-discharge switching module 230 in FIG. 9 are varied. As shown in FIG. 18, the switch module 240 includes a switch V18 and a diode D15 connected in series, and the charge-discharge switching module 230 includes a switch V11 and a diode D11 connected in series. Different structure combinations of the switch module 240 and the charge-discharge switching module 230 in FIG. 12 to FIG. 15 are not described herein one by one with examples.

In the charge/discharge circuits provided in the foregoing embodiments, a motor of a vehicle is not directly used for heating the battery, but components such as the heating module 220 and the charge-discharge switching module 230 are additionally provided for implementing a self-heating function of the battery. In this way, the motor can operate normally in a process of heating the battery, and the traction battery is heated without influence on normal traveling of the vehicle with the traction battery.

In some other embodiments of this application, to avoid increase in unnecessary cost when the traction battery is heated, a motor circuit of the vehicle can alternatively be used for heating the traction battery. Correspondingly, the energy storage module 250 includes an M-phase motor, and the switch module 240 includes M phase legs, M being a positive integer. The M phase legs are connected in parallel to the power supply module 210 and the charge-discharge switching module 230; joints between upper legs and lower legs of the M phase legs are connected to M phase windings of the M-phase motor in one-to-one correspondence; and the charge-discharge switching module 230 is connected to a joint of the M phase windings.

The power supply module 210 includes at least one battery group, where the battery group may be a set of a plurality of battery modules and may alternatively be a battery module including a plurality of battery cells. The M phase legs in the switch module 240 may be implemented by an inverter corresponding to the motor. Each phase leg includes an upper leg and a lower leg. For example, an inverter corresponding to a three-phase motor includes three phase legs, where the three phase legs include three upper legs and three lower legs.

To form a charge loop or a discharge loop in the charge/discharge circuit, the upper legs or the lower legs of the M phase legs need to turn on, and the first switching circuit 231 or the second switching circuit 232 of the charge-discharge switching module 230 need to turn on. It is assumed that an upper terminal of the power supply module 210 is a positive electrode, and a lower terminal thereof is a negative electrode. When the upper legs of the M phase legs and the second switching circuit 232 turn on, a discharge loop is formed where a current flows out of the positive electrode of the power supply module 210, through M upper legs of the M phase legs, then through the M-phase motor, and then flows back from the second switching circuit 232 to the negative electrode of the power supply module. When the upper legs of the M phase legs and the first switching circuit 231 turn on, a charge loop is formed where a current flows out of the negative electrode of the power supply module 210, through M lower legs of the M phase legs, then through the M-phase motor, and then flows back from the first switching circuit 231 to the positive electrode of the power supply module 210.

As the charge loop and the discharge loop are switched periodically, current flows inside the power supply module 210, generating heat to heat the power supply module 210.

In this embodiment, the M-phase motor in the energy storage module 250 is not only connected to the M phase legs in the switch module 240, but also connected to the charge-discharge switching module 230, allowing currents flowing through the M phase legs to simultaneously flow into all the windings of the M-phase motor and flow out of the other terminals of all the windings, so that the currents flowing through all the windings of the M-phase motor can be in a same direction and of a same magnitude, rather than being alternating currents in different directions. Therefore, the problem that the motor vibrates so much as to produce excessive noise during heating of the traction battery using a motor circuit can be effectively alleviated.

The following describes in detail a circuit structure of a charge/discharge circuit in which a battery is heated by a motor with reference to the accompanying drawings. For a charge/discharge circuit including only one battery group, this battery group may be a battery pack and may alternatively be a combination of a plurality of battery packs. This battery group in the charge/discharge circuit in this embodiment of this application is referred to as a first battery group.

In the charge/discharge loop, the power supply module 210 includes a first battery group 211, the switch module 240 includes M phase legs, the energy storage module 250 includes an M-phase motor, and the charge-discharge switching module 230 includes a first switching circuit 231 and a second switching circuit 232 connected in series. The first battery group 211, the M phase legs and the charge-discharge switching module 230 are connected in parallel; joints between upper legs and lower legs of the M phase legs are connected to M phase windings of the M-phase motor in one-to-one correspondence; and a joint between the first switching circuit 231 and the second switching circuit 232 in the charge-discharge switching module 230 is connected to the M-phase motor.

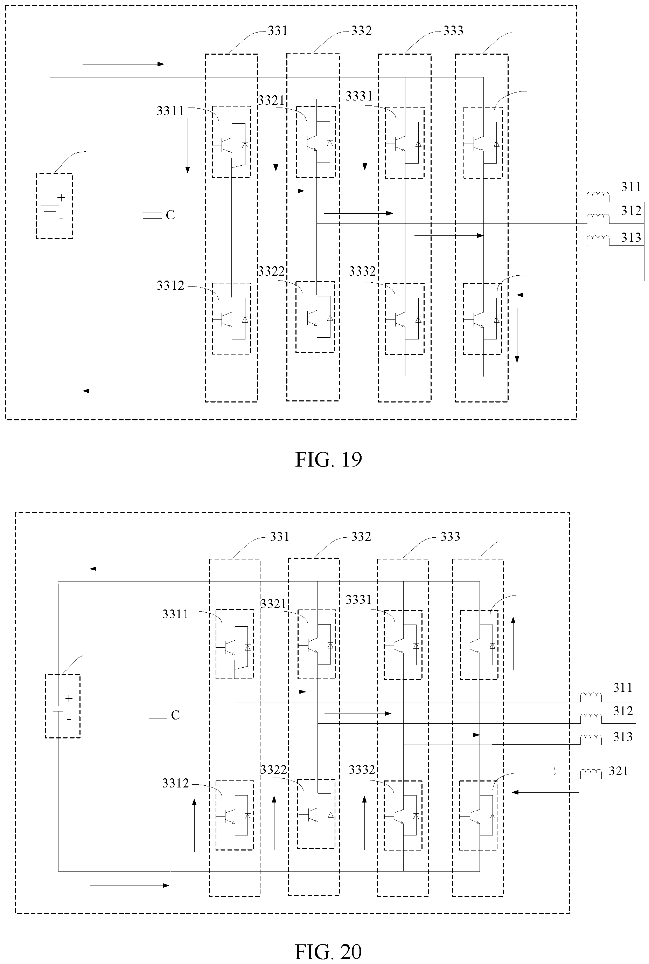

As shown in FIG. 19, for an example in which the M phase legs are three phase legs, the M phase legs include a leg 331, a leg 332, and a leg 333. Correspondingly, the M-phase motor is a three-phase-winding motor and includes three windings: a winding 311, a winding 312, and a winding 313. The first battery group 211, the leg 331, the leg 332, the leg 333, and the charge-discharge switching module 230 are connected in parallel. A joint between an upper leg 3311 and a lower leg 3312 of the leg 331 is connected to one terminal of the winding 311; a joint between an upper leg 3321 and a lower leg 3322 of the leg 332 is connected to one terminal of the winding 312; and a joint between an upper leg 3331 and a lower leg 3332 of the leg 333 is connected to one terminal of the winding 313. Another terminal of the winding 311, another terminal of the winding 312, and another terminal of the winding 313 are collinearly connected. A joint at which the winding 311, the winding 312, and the winding 313 are collinearly connected is a neutral point. The joint between the first switching circuit 231 and the second switching circuit 232 of the charge-discharge switching module 230 is connected to a neutral point of the motor.

As shown in FIG. 19, a leg structure is used as an example of a structure of the charge-discharge switching module 230. The first switching circuit 231 includes a first upper leg 2311, and the second switching circuit 232 includes a first lower leg 2321.

As shown in FIG. 19, the first battery group 211, the upper legs 3311-3331, the windings 311-313, and the first lower leg 2321 of the charge-discharge switching module 230 together form a discharge loop. A path of current flow in discharge is as follows: positive electrode of the first battery group 211 → upper leg 3321 of the leg 331 → upper leg 3321 of the leg 332 and upper leg 3331 of the leg 333 → windings 311, 312, and 313 → first lower leg 2321 → negative electrode of the first battery group 211.

On the other hand, the first battery group 211, the lower legs 3312-3332, the windings 311-313, and the first upper leg 2311 of the charge-discharge switching module 230 together form a charge loop (not shown in the figure). A path of current flow in charge is as follows: negative electrode of the first battery group 211 → lower leg 3312 of the leg 331, the lower leg 3322 of the leg 332, and the upper leg 3332 of the leg 333 → windings 311, 312, and 313 → first upper leg 2311 → positive electrode of the first battery group 211.

In this embodiment shown in FIG. 19, a joint of the windings of the motor is connected to the joint between the first upper leg 2311 and the first lower leg 2321, allowing a current to flow into all the windings during charge or discharge, rather than flow out through any one phase winding. Currents flowing into or out of three phase windings are equal in magnitude all the time and have a phase difference of zero, so that a stator magnetic field generated by the three phase windings with symmetrical spaces is approximately zero, thereby effectively suppressing vibration noise generated by interaction of the stator magnetic field and a rotor magnetic field when the motor circuit is used for heating the traction battery. At the same time, non-running of the motor can also resolve the problem of rotor heating in the motor, thus prolonging self-heating service time of the battery.

In an example, a second energy storage element 260 is disposed between the M-phase motor and the charge-discharge switching module 230. The second energy storage element 260 may include at least one external inductor or include at least one capacitor or include at least one inductor and/or capacitor connected in series. Specifically, the joint between the first switching circuit 231 and the second switching circuit 232 in the charge-discharge switching module 230 is connected to one terminal of the second energy storage element 260, and another terminal of the second energy storage element 260 is connected to the neutral point of the M-phase motor.

The charge/discharge circuit shown in FIG. 20 differs from the circuit structure shown in FIG. 19 in that an external inductor unit 321 is disposed between the neutral point in the three-phase motor in FIG. 20 and the joint between the first upper leg 2311 and the first lower leg 2321. Optionally, the external inductor unit 321 may alternatively be a wire, as shown in FIG. 19. In addition, a quantity of the external inductor unit in this embodiment of this application may alternatively be not limited.

The second energy storage element 260 is added between the windings of the motor and the charge-discharge switching module 230. The second energy storage element 260 and the windings of the motor together store energy, helping improve the electric energy stored in the discharge loop. The electric energy stored in the charge loop is charged back to the battery group, thus improving the heating efficiency of the battery group. In FIG. 20, the external inductor unit being disposed between the motor and the charge-discharge switching module 230 can increase inductance and help reduce ripples of the current in a heating process, thereby effectively improving the current of charge/discharge and improving a charge/discharge efficiency.

Optionally, the M-phase motor may alternatively be a six-phase-winding motor. Correspondingly, the M phase windings may be all windings in the six-phase-winding motor. Optionally, the M phase legs may be three phase legs and may alternatively be six phase legs.

The structure of the charge-discharge switching module 230 in FIG. 19 and FIG. 20 may be a structure of any charge-discharge switching module 230 shown in FIG. 4 to FIG. 7. Specifically, in an example, the freewheeling diode in the first upper leg 2311 and the first lower leg 2321 in FIG. 19 and FIG. 20 may be removed, and the triode switch is only left. The triode switch may alternatively be replaced with another element with the function of the switch, for example, a relay switch.

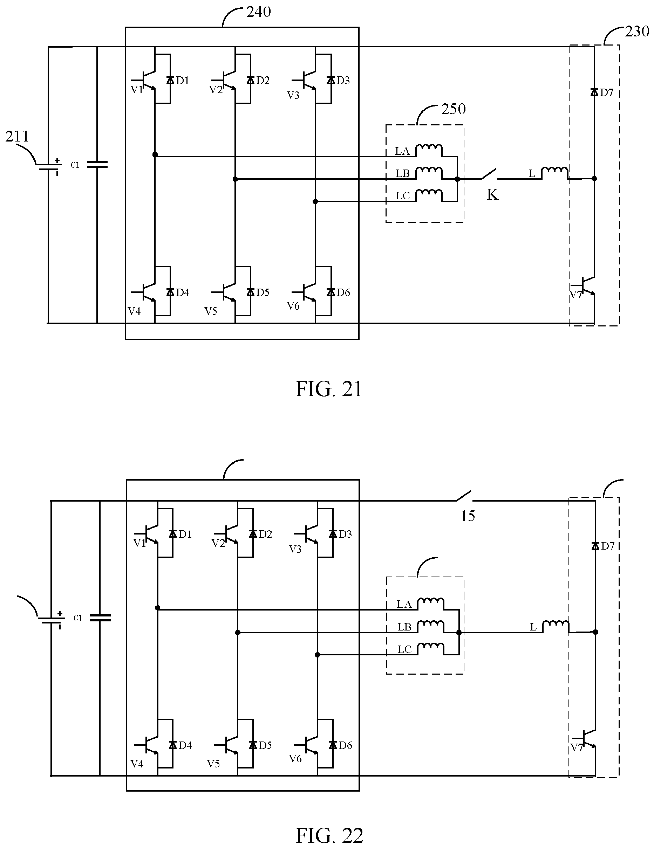

In another example, the structure of the charge-discharge switching module 230 may alternatively not be a leg structure, but includes a diode and a switch connected in series. As shown in FIG. 21, the charge-discharge switching module 230 includes a diode D7 and a tube switch V7 connected in series. The positive electrode of the first battery group 211, all the upper legs of the switch module 240, and a cathode of the diode D7 are collinearly connected. The negative electrode of the first battery group 211, all the lower legs of the switch module 240, and one terminal of the tube switch V7 are collinearly connected. Joints between upper legs and lower legs of each leg in the switch module 240 are respectively connected to three phase windings LA, LB, and LC of the three-phase motor in one-to-one correspondence. A common j oint of the three phase windings LA, LB, and LC is connected to a joint between the diode D7 and the tube switch V7. An anode of the diode D7 is connected to one terminal of the tube switch V7, and another terminal of the tube switch V7 is connected to the negative electrode of the first battery group 211.

In the circuit structure shown in FIG. 21, all the upper legs of the switch module 240, a switch K, and the tube switch V7 are controlled to turn on, so as to form a discharge loop including the first battery group 211, all the upper legs of the control switch module 240, the windings LA, LB, and LC, the switch K, the inductor L, and the tube switch V7. A path of current flow in discharge is as follows: positive electrode of the first battery group 211 → all upper legs of the control switch module 240 → windings LA, LB, and LC → switch K → inductor L → tube switch V7 → negative electrode of the first battery group 211. In addition, all the lower legs of the control switch module 240 and the switch K are controlled to turn on, and all the upper legs of the switch module 240 and the tube switch V7 are controlled to turn off. In this way, a charge loop including the first battery group 211, all the lower legs of the switch module 240, the windings LA, LB, and LC, the switch K, the inductor L, and the diode D7 is formed. A path of current flow in charge is as follows: negative electrode of the first battery group 211 —> all the lower legs of the switch module 240 —> windings LA, LB, and LC —> switch K —> inductor L —> diode D7 —> positive electrode of the first battery group 211.

The diode D7 in FIG. 21 may alternatively be reversely arranged, that is, the cathode of the diode D7 is connected to the tube switch V7, and the anode of the diode D7 is connected to the positive electrode of the first battery group 211. After the diode D7 is reversely arranged, during discharge, the switch K and all the lower legs of the switch module 240 are controlled to turn on, and all the upper legs of the switch module 240 and the tube switch V7 are controlled to turn off, so as to form a discharge loop including the first battery group 211, the switch K, the diode D7, the inductor L, the windings LA, LB, and LC, and all the lower legs of the switch module 240. A path of current flow in discharge is as follows: positive electrode of the first battery group 211 —> diode D7 —> inductor L —> switch K —> windings LA, LB, and LC —> all lower legs of the switch module 240 —> negative electrode of the first battery group 211. During charge, all the upper legs of the switch module 240, the switch K, and the tube switch V7 are controlled to turn on, and all the lower legs of the switch module 240 are controlled to turn off, so as to form a charge loop including the first battery group 211, all the upper legs of the switch module 240, the windings LA, LB, and LC, the switch K, the inductor L, and the tube switch V7. A path of current flow in charge is as follows: negative electrode of the first battery group 211 → tube switch V7 → inductor L → switch K → windings LA, LB, and LC → all the upper legs of the switch module 240 → positive electrode of the first battery group 211.

Either of the switch K and the inductor L in FIG. 21 may alternatively be only disposed. Neither of the switch K and the inductor L may alternatively be disposed. The neutral point of the windings LA, LB, and LC and the charge-discharge switching module 230 are connected through a wire.

In the circuit structure shown in FIG. 21, the charge-discharge switching module 230 uses only one freewheeling diode and one triode. As compared with a charge-discharge switching module using two tube switches, the cost of the charge-discharge switching module 230 is reduced by half, so that the cost of turn-on or turn-off is saved. In addition, the diode D7 provides passive control such that proactive control is not required, facilitating a simpler control policy.

The circuit structure in FIG. 21 may alternatively be varied to be the circuit structure shown in FIG. 20. FIG. 22 differs from FIG. 21 in that the switch K is disposed between the cathode of the diode D7 and the joint of the switch module 240. As shown in FIG. 22, all the upper legs of the switch module 240 and the tube switch V7 are controlled to turn on, so as to form a discharge loop including the first battery group 211, all the upper legs of the control switch module 240, the windings LA, LB, and LC, the inductor L, and the tube switch V7. A path of current flow in discharge is as follows: positive electrode of the first battery group 211 —> all upper legs of the control switch module 240 —> windings LA, LB, and LC —> inductor L —> tube switch V7 —> negative electrode of the first battery group 211. In addition, all the lower legs of the control switch module 240 and the switch K are controlled to turn on, and all the upper legs of the switch module 240 and the tube switch V7 are controlled to turn off. In this way, a charge loop including the first battery group 211, all the lower legs of the switch module 240, the windings LA, LB, and LC, the inductor L, the diode D7, and the switch K is formed. A path of current flow in charge is as follows: negative electrode of the first battery group 211 → all the lower legs of the switch module 240 —> windings LA, LB, and LC → inductor L → diode D7 → switch K → positive electrode of the first battery group 211.

An orientation of the diode D7 in FIG. 22 may alternatively be reversely arranged. That is, the anode of the diode D7 is connected to the switch K, and the cathode of the diode D7 is connected to the tube switch V7. After the diode D7 is reversely arranged, during discharge, the switch K and all the lower legs of the switch module 240 are controlled to turn on, and all the upper legs of the switch module 240 and the tube switch V7 are controlled to turn off, so as to form a discharge loop including the first battery group 211, the switch K, the diode D7, the inductor L, the windings LA, LB, and LC, and all the lower legs of the switch module 240. A path of current flow in discharge is as follows: positive electrode of the first battery group 211 → diode D7 → inductor L → windings LA, LB, and LC → all lower legs of the switch module 240 → negative electrode of the first battery group 211. During charge, all the upper legs of the switch module 240 and the tube switch V7 are controlled to turn on, and all the lower legs of the switch module 240 and the switch K are controlled to turn off, so as to form a charge loop including the first battery group 211, all the upper legs of the switch module 240, the windings LA, LB, and LC, the inductor L, and the tube switch V7. A path of current flow in charge is as follows: negative electrode of the first battery group 211 → tube switch V7 —> inductor L —> windings LA, LB, and LC —> all the upper legs of the switch module 240 —> positive electrode of the first battery group 211.

In FIG. 22, the switch K is disposed between the diode D7 and the positive electrode of the first battery group 211, so that the switch K may turn off when the charge-discharge switching module 230 has faults, thereby preventing the faults of the charge-discharge switching module 230 from causing damage to other devices in the circuit.

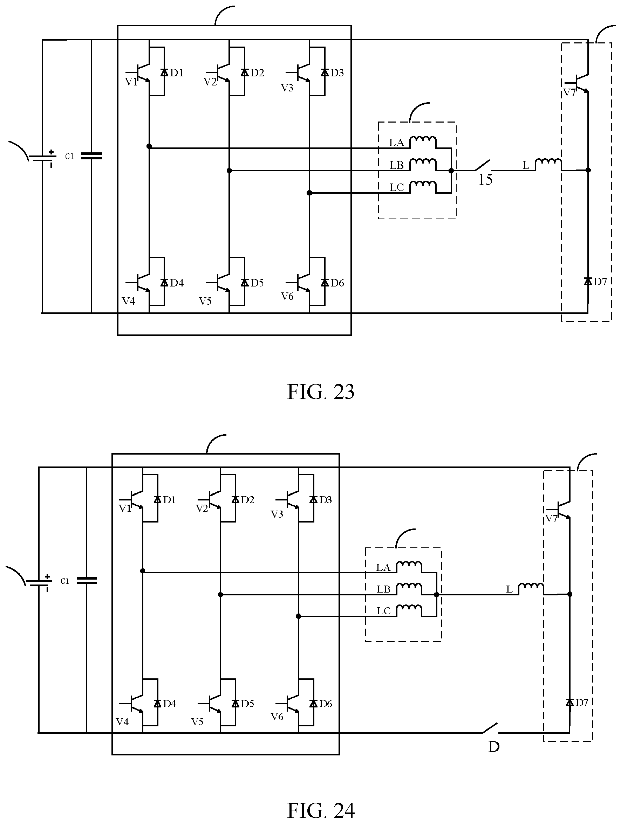

The circuit structure in FIG. 19 may alternatively be varied to be a circuit structure shown in FIG. 23. FIG. 23 differs from FIG. 21 in that a position of the diode D7 and a position of the tube switch V7 are interchanged. In FIG. 23, the tube switch V7 is connected to the positive electrode of the first battery group 211, and the diode D7 is connected to the negative electrode of the first battery group 211. In the circuit structure shown in FIG. 23, all the lower legs of the switch module 240, the switch K, and the tube switch V7 are controlled to turn on, so as to form a discharge loop including the first battery group 211, all the lower legs of the control switch module 240, the windings LA, LB, and LC, the switch K, the inductor L, and the tube switch V7. A path of current flow in discharge is as follows: positive electrode of the first battery group 211 → tube switch V7 → inductor L → switch K → windings LA, LB, and LC → all lower legs of the control switch module 240 —> negative electrode of the first battery group 211. In addition, all the upper legs of the control switch module 240 and the switch K are controlled to turn on, and all the lower legs of the switch module 240 and the tube switch V7 are controlled to turn off. In this way, a charge loop including the first battery group 211, all the upper legs of the switch module 240, the windings LA, LB, and LC, the switch K, the inductor L, and the diode D7 is formed. A path of current flow in charge is as follows: negative electrode of the first battery group 211 → diode D7 → inductor L → switch K → windings LA, LB, and LC → all the upper legs of the switch module 240 → positive electrode of the first battery group 211.

An orientation of the diode D7 in FIG. 23 may alternatively be reversely arranged, that is, the anode of the diode D7 is connected to the tube switch V7, and the cathode of the diode D7 is connected to the negative electrode of the first battery group 211. A control manner is also correspondingly adjusted, which is not described herein.

Either of the switch K and the inductor L in FIG. 23 may alternatively be only disposed. Neither of the switch K and the inductor L may alternatively be disposed. The neutral point of the windings LA, LB, and LC and the charge-discharge switching module 230 are connected through a wire.

In the circuit structure shown in FIG. 23, the charge-discharge switching module 230 uses only one freewheeling diode and one triode. As compared with a charge-discharge switching module using two tube switches, the cost of the charge-discharge switching module 230 is reduced by half, so that the cost of turn-on or turn-off is saved. In addition, the diode D7 provides passive control such that proactive control is not required, facilitating a simpler control policy.

The circuit structure in FIG. 23 may alternatively be varied to be a circuit structure shown in FIG. 24. FIG. 24 differs from FIG. 23 in that the switch K is disposed between the diode D7 and the negative electrode of the first battery group 211. In the circuit structure shown in FIG. 24, all the lower legs of the switch module 240 and the tube switch V7 are controlled to turn on, so as to form a discharge loop including the first battery group 211, all the lower legs of the control switch module 240, the windings LA, LB, and LC, the inductor L, and the tube switch V7. A path of current flow in discharge is as follows: positive electrode of the first battery group 211 → tube switch V7 —> inductor L —> windings LA, LB, and LC —> all lower legs of the control switch module 240 —> negative electrode of the first battery group 211. In addition, all the upper legs of the control switch module 240 and the switch K are controlled to turn on, and all the lower legs of the switch module 240 and the tube switch V7 are controlled to turn off. In this way, a charge loop including the first battery group 211, all the upper legs of the switch module 240, the windings LA, LB, and LC, the switch K, the inductor L, and the diode D7 is formed. A path of current flow in charge is as follows: negative electrode of the first battery group 211 —> switch K —> diode D7 —> inductor L → windings LA, LB, and LC → all the upper legs of the switch module 240 → positive electrode of the first battery group 211.

An orientation of the diode D7 in FIG. 24 may alternatively be reversely arranged, that is, the anode of the diode D7 is connected to the tube switch V7, and the cathode of the diode D7 is connected to the switch K. A control manner is also correspondingly adjusted, which is not described herein.

In FIG. 24, the switch K is disposed between the diode D7 and the negative electrode of the first battery group 211, so that the switch K may turn off when the charge-discharge switching module 230 has faults, thereby preventing the faults of the charge-discharge switching module 230 from causing damage to other devices in the circuit.

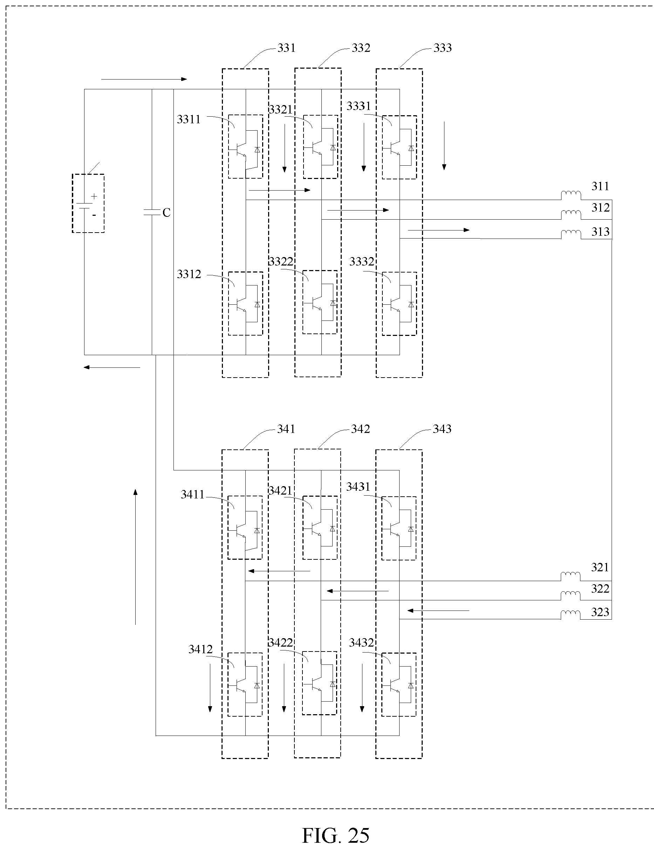

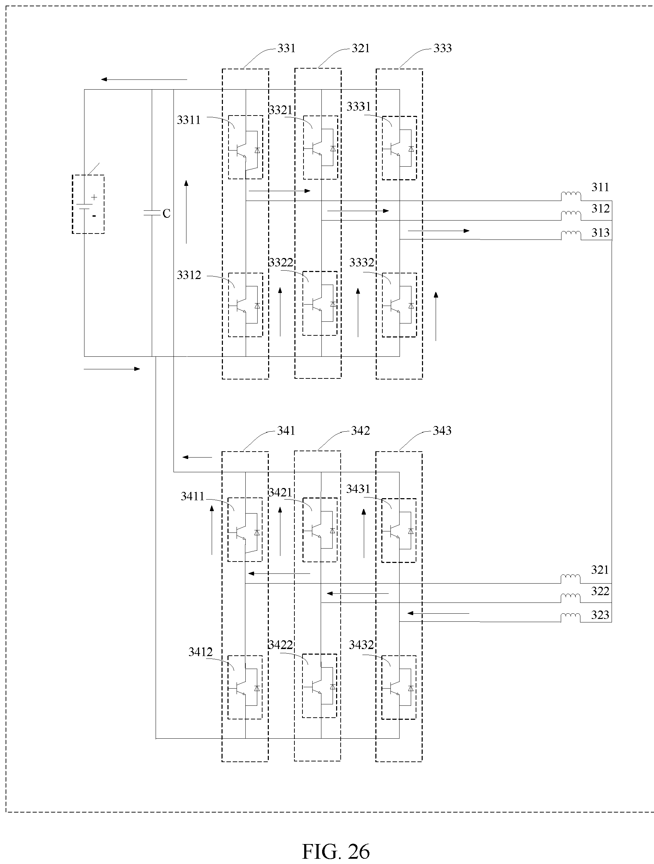

In the foregoing embodiments, one motor is used for heating the battery. In an actual use scenario, some electric vehicles have two motors, so that the two motors can alternatively be used for heating the traction battery. For electric devices with two motors, the two motors can be used for heating the battery group, where an inverter of one motor is equivalent to a switch module, and an inverter of the other motor is equivalent to a charge-discharge switching module. Windings of the two motors are equivalent to an energy storage module. Legs in the inverters of the two motors are controlled to turn on or off to implement alternate switching between a charge loop and a discharge loop in a charge/discharge circuit. FIG. 25 and FIG. 26 show a circuit structure of a charge/discharge circuit in which two motors are used for heating a battery in the embodiments of this application.

In an example, two M-phase motors are provided, including a first M-phase motor and a second M-phase motor, where a joint of M phase windings of the first M-phase motor is connected to a joint of M phase windings of the second M-phase motor. Specifically, the first M-phase motor and the second M-phase motor may both be three-phase-winding motors. The first M-phase motor includes a winding 311, a winding 312, and a winding 313, and the second M-phase motor includes a winding 321, a winding 322, and a winding 323. A common joint of the windings 311, 312, and 313 is connected to a common joint of the windings 321, 322, and 323.

In the circuit structure including two motors, joints between upper legs and lower legs of M phase legs in the switch module 240 are connected to M phase windings of the first M-phase motor in one-to-one correspondence. Specifically, the M phase legs in the switch module 240 include a leg 331, a leg 332, and a leg 333. Specifically, a joint between an upper leg 3311 and a lower leg 3312 of the leg 331 is connected to one terminal of the winding 311; a joint between an upper leg 3321 and a lower leg 3322 of the leg 332 is connected to one terminal of the winding 312; and a joint between an upper leg 3331 and a lower leg 3332 of the leg 333 is connected to one terminal of the winding 313.

In the circuit structure including two motors, the charge-discharge switching module 230 also includes M phase legs, where joints between upper legs and lower legs of the M phase legs are connected to M phase windings of the second M-phase motor in one-to-one correspondence. Specifically, the charge-discharge switching module 230 includes a leg 341, a leg 342, and a leg 343. A joint between an upper leg 3411 and a lower leg 3412 of the leg 341 is connected to one terminal of the winding 321; a joint between an upper leg 3421 and a lower leg 3422 of the leg 342 is connected to one terminal of the winding 322; a joint between an upper leg 3431 and a lower leg 3432 of the leg 343 is connected to one terminal of the winding 323; and a common joint of another terminal of the winding 311, another terminal of the winding 312, and another terminal of the winding 313 is connected to a common joint of another terminal of the winding 321, another terminal of the winding 322, and another terminal of the winding 323.

As shown in FIG. 25, the power supply module 210, the upper legs 3311, 3321, and 3331, the windings 311-313, the windings 321-323, and the lower legs 3412, 3422, and 3432 together form a discharge loop. As shown in FIG. 26, the power supply module 210, the upper legs 3312, 3322, and 3332, the windings 311-313, the windings 321-323, and the upper legs 3411, 3421, and 3431 together form a charge loop. The charge loop and the discharge loop are controlled by a control module (not shown in the figure) to periodically and alternately turn on.

In another implementation, the upper legs of the M phase legs of the charge-discharge switching module 230 and the lower legs of the M phase legs of the switch module may alternatively be controlled to turn on, so as to form a discharge loop including the power supply module 210, the lower legs of the M phase legs of the switch module 240, the first M-phase motor, the second M-phase motor, and the upper legs of the M phase legs of the charge-discharge switching module. In the circuit structure shown in FIG. 25 or FIG. 22, the lower legs 3312, 3322, and 3332 and the upper legs 3411, 3421, and 3431 are controlled to turn on, so as to form a discharge loop including the first battery group 211, the upper legs 3411, 3421, and 3431, the windings 321-323, the windings 311-313, and the lower legs 3312, 3322, and 3332.

In addition, the upper legs of the M phase legs in the switch module 240 and the lower legs of the M phase legs in the charge-discharge switching module 230 are controlled to turn on, so as to form a charge loop including the power supply module 210, the lower legs of the M phase legs of the charge-discharge switching module 230, the first M-phase motor, the second M-phase motor, and the upper legs of the M phase legs of the switch module 210. In the circuit structure shown in FIG. 25 or FIG. 22, the upper legs 3311, 3321, and 3331 and the lower legs 3412, 3422, and 3432 are controlled to turn on, so as to form a charge loop including the first battery group 211, the lower legs 3412, 3422, and 3432, the windings 321-323, the windings 311-313, and the upper legs 3311, 3321, and 3331.

In the embodiments shown in FIG. 25 and FIG. 26, currents flowing into the windings 311-313 are controlled to be the same in magnitude and phase, so that vibration noise of the first motor can be effectively suppressed during heating of the traction battery using the motor circuit. Similarly, currents flowing out of the windings 321-323 are controlled to be the same in magnitude and phase, so that vibration noise of the second motor can be effectively suppressed during heating of the traction battery using the motor circuit. At the same time, non-running of the motor can also resolve the problem of rotor heating in the motor, thus prolonging self-heating service time of the battery.

Optionally, the first M-phase motor may be a six-phase motor, and the second M-phase motor is a three-phase motor. The energy storage module 250 is all windings in the six-phase motor. The second energy storage element 260 is all windings in the three-phase motor.

Optionally, the first M-phase motor may be a three-phase motor, the second M-phase motor is a six-phase motor, the energy storage module 250 is all windings in the three-phase motor, and the second energy storage element 260 is all windings in the six-phase motor.

Optionally, the first M-phase motor is a three-phase motor, the second M-phase motor is a six-phase motor, the energy storage module 250 is all windings in the six-phase motor, and the energy storage module 250 is all windings in another six-phase motor.

The first M-phase motor and the second M-phase motor may alternatively be a combination of other arbitrary-phase motors, which is not limited by the embodiments of this application.

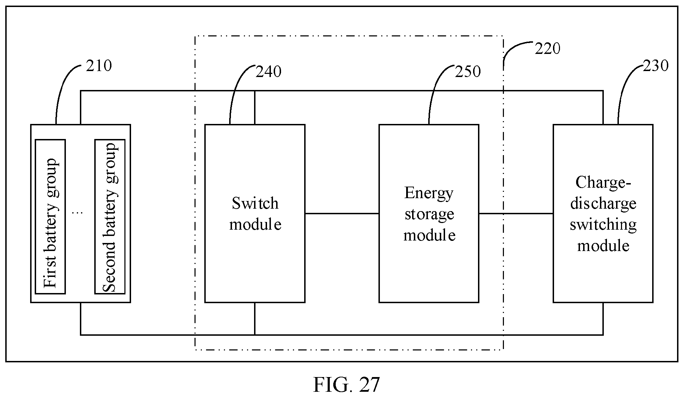

In some other embodiments of this application, the charge/discharge circuit in which the motor is used for heating the battery may alternatively include two or more battery groups. FIG. 27 is a schematic block diagram of a charge/discharge circuit including two or more battery groups.

As shown in FIG. 27, the charge/discharge circuit includes a power supply module 210, a switch module 240, an energy storage module 250, and a charge-discharge switching module 230.

Specifically, the power supply module 210 includes a first battery group 211 and a second battery group 212. A tenth switch is connected between the first battery group 211 and the second battery group 212 (not shown in the figure, a dotted line shows a changeable connection relationship). Turn-on or turn-off of the tenth switch changes the connection relationship between the first battery group 211 and the second battery group 212. Specifically, when the tenth switch turns on, the first battery group 211 and the second battery group 212 are connected in parallel; and when the tenth switch turns off, the first battery group 211 and the second battery group 212 are connected in series. The battery group may be a set of a plurality of battery modules and may alternatively be a battery module including a plurality of battery cells. The switch module 240 may be implemented by an inverter and includes M phase legs, M being a positive integer. Each phase leg includes an upper leg and a lower leg. For example, three phase legs include three upper legs and three lower legs. The energy storage module 250 may include an M-phase motor. For example, the M-phase motor is a three-phase-winding motor and includes three phase windings. The charge-discharge switching module 230 includes a first switching circuit 231 and a second switching circuit 232. In the charge/discharge circuit including two battery groups, the first switching circuit 231 includes a first upper leg 2311, and the second switching circuit 232 includes a first lower leg 2321. The first upper leg 2311 and the first lower leg 2321 may use a structure with a triode switch and a freewheeling diode that are connected in parallel, and may alternatively include only a switch.

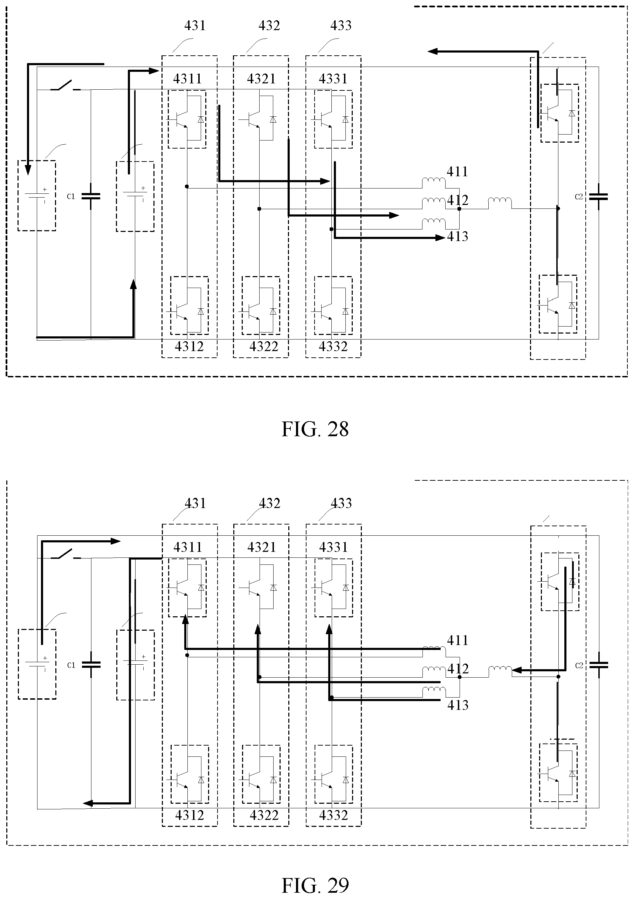

In an example, as shown in FIG. 28, the first battery group 211 and the M phase legs in the switch module 240 are connected in parallel; a first terminal of the first battery group 211 and upper legs of the M phase legs are collinearly connected; joints between upper legs and lower legs of the M phase legs are connected to M phase windings of the M-phase motor in one-to-one correspondence; and a joint between an upper leg and a lower leg of the charge-discharge switching module 230 is connected to a neutral point of the M-phase motor. The joint between the upper leg and the lower leg of the charge-discharge switching module 230 may be directly connected to the neutral point of the M-phase motor through a wire. A second energy storage element 260 may alternatively be connected between the joint between the upper leg and the lower leg of the charge-discharge switching module 230 and the neutral point of the M-phase motor, where the second energy storage element 260 may include at least one inductor or include an inductor and a capacitor connected in series. A ninth switch may alternatively be disposed between the joint between the upper leg and the lower leg of the charge-discharge switching module 230 and the neutral point of the M-phase motor.

A first terminal of the second battery group 212 and the first upper leg 2311 of the charge-discharge switching module 230 are collinearly connected; a second terminal of the second battery group 212, a second terminal of the first battery group 211, the M phase legs, and the first lower leg 2321 of the charge-discharge switching module 230 are collinearly connected; and a tenth switch K4 is disposed between the first terminal of the first battery group 211 and the first terminal of the second battery group 212.

Specifically, the M phase legs may be three phase legs and include a leg 431, a leg 432, and a leg 433. Correspondingly, the M-phase motor is a three-phase-winding motor and includes three phase windings: a winding 411, a winding 412, and a winding 413.

When a motor needs to be used for heating the power supply module 210, the tenth switch K4 turns off. In this case, the first battery group 211 and the second battery group 212 are connected in series. Upper legs or lower legs of the M phase legs, the first upper leg 2311 and the first lower leg 2321 of the charge-discharge switching module 230 may be controlled to implement charge/discharge control of the first battery group 211 and the second battery group 212. It is assumed that in a first period, the first battery group 211 discharges, and the second battery group 212 is charged. In this case, a discharge current of the first battery group 211 flows out of a positive electrode of the first battery group 211, through upper legs 4311, 4321, and 4331 of legs 431-433, into windings 411-413, and then flows through the first upper leg 2311 of the charge-discharge switching module 230 into a positive electrode of the second battery group 212 and flows out of a negative electrode of the second battery group 212, and finally flows back to a negative electrode of the first battery group 211.

As shown in FIG. 29, in a second period, the first battery group 211 is charged, and the second battery group 212 discharges. In this case, a discharge current of the second battery group 212 flows out of the positive electrode of the second battery group 212, through the first upper leg 2311 of the charge-discharge switching module 230, into the windings 411-413, and then flows through the upper legs 4311, 4321, and 4331 of the legs 43 1-433 into the positive electrode of the first battery group 211 and flows out of the negative electrode of the first battery group 211, and finally flows back to the negative electrode of the second battery group 212.

In this embodiment, the design with two battery groups can effectively relieve constraints of motor inductance on the magnitude of heating current and the heating current frequency. The heating with two batteries allows energy of the energy storage module to discharge to one battery in time, keeping the heating current of the battery at a stable magnitude according to a preset heating frequency. Thus, a square or quasi-square wave alternating current can be produced in the charge/discharge circuit, such that the heating current frequency can be adjusted for the battery under different temperatures and SOCs to significantly increase the heating speed.

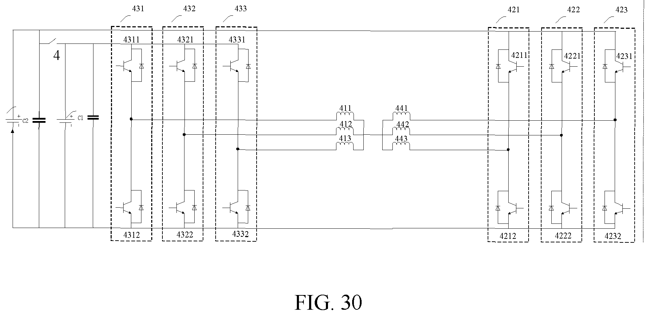

FIG. 30 shows a circuit structure of a charge/discharge circuit in which two motors are used for heating two battery groups, where the circuit structure is a circuit topology where two M motors are provided.

Specifically, as shown in FIG. 30, two M-phase motors are provided, including a first M-phase motor and a second M-phase motor, where a joint of M phase windings of the first M-phase motor is connected to a joint of M phase windings of the second M-phase motor. Specifically, the first M-phase motor and the second M-phase motor may both be three-phase-winding motors. The first M-phase motor includes a winding 411, a winding 412, and a winding 413, and the second M-phase motor includes a winding 441, a winding 442, and a winding 443. A common joint of the windings 411, 412, and 413 is connected to a common joint of the windings 441, 442, and 443.

Joints between upper legs and lower legs of M phase legs in the switch module 240 are connected to the M phase windings of the first M-phase motor in one-to-one correspondence. Specifically, the M phase legs in the switch module 240 include a leg 431, a leg 432, and a leg 433. Specifically, a joint between an upper leg 4311 and a lower leg 4312 of the leg 431 is connected to one terminal of the winding 411; a joint between an upper leg 4321 and a lower leg 4322 of the leg 432 is connected to one terminal of the winding 412; and a joint between an upper leg 4331 and a lower leg 4332 of the leg 433 is connected to one terminal of the winding 413.

The charge-discharge switching module 230 also includes M phase legs, where joints between upper legs and lower legs of the M phase legs are connected to M phase windings of the second M-phase motor in one-to-one correspondence. Specifically, the charge-discharge switching module 230 includes a leg 421, a leg 422, and a leg 423. A joint between an upper leg 4211 and a lower leg 4212 of the leg 421 is connected to one terminal of the winding 441; a joint between an upper leg 4221 and a lower leg 4222 of the leg 422 is connected to one terminal of the winding 442; a joint between an upper leg 4231 and a lower leg 4232 of the leg 423 is connected to one terminal of the winding 443; and a common j oint of another terminal of the winding 441, another terminal of the winding 442, and another terminal of the winding 443 is connected to a common joint of another terminal of the winding 411, another terminal of the winding 412, and another terminal of the winding 413.

In the embodiment shown in FIG. 30, currents flowing into the windings 411-413 are controlled to be the same in magnitude and phase, so that vibration noise of the first motor can be effectively suppressed during heating of the traction battery using the motor circuit. Similarly, currents flowing out of the windings 441-443 are controlled to be the same in magnitude and phase, so that vibration noise of the second motor can be effectively suppressed during heating of the traction battery using the motor circuit. At the same time, non-running of the motor can also resolve the problem of rotor heating in the motor, thus prolonging self-heating service time of the battery.

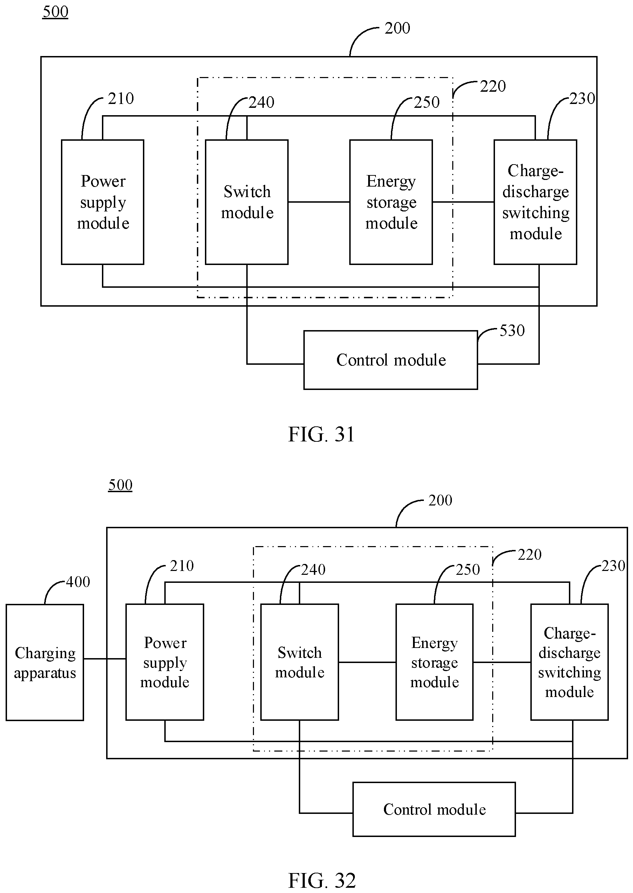

FIG. 31 is a schematic structural diagram of a charge/discharge system 500 according to an embodiment of this application. The charge/discharge system 500 includes a control module 530 and the charge/discharge circuit 200 in any one of the foregoing embodiments.

The control module 530 is configured to send an instruction to the charge/discharge circuit 200 to control charge/discharge of a power supply module 210. As shown in FIG. 31, the charge/discharge circuit 200 includes a power supply module 210, a switch module 240, an energy storage module 250, and a charge-discharge switching module 230. The control module 530 is connected to the switch module 240 and the charge-discharge switching module 230 and is configured to send a charge/discharge enable signal to the switch module 240 and the charge-discharge switching module 230 to control the switch module 240 and the charge-discharge switching module 230 to turn on or off, so as to form alternately switched charge loop and discharge loop in the charge/discharge circuit 200.

In an example, the control module 530 may include a vehicle control unit or a vehicle control unit (Vehicle control unit, VCU) and/or a motor control unit.

In an example, the power supply module 210 is a traction battery.

When the charge/discharge system is configured to heat the power supply module 210, the control module 530 sends an enable signal to the switch module 240 and the charge-discharge switching module 230 to control the switch module 240 and the charge-discharge switching module 230 in the charge/discharge circuit to turn on or off, so as to form a charge loop or a discharge loop.

When the charge/discharge circuit includes only one battery group, the switch module 240 includes at least one switch leg, and the charge-discharge switching module 230 includes a first switching circuit 231 and a second switching circuit 232. In response to the enable signal sent by the control module 530, an upper leg or a lower leg of each switch leg turns on, and the first switching circuit 231 or the second switching circuit 232 in the charge-discharge switching module 230 turns on, so as to form a charge loop or a discharge loop; and repeatedly switching between the charge loop or the discharge loop implements charge/discharge of the power supply module 210, so as to heat the power supply module 210 using heat generated when a current flows through the inside of the power supply module 210.

When the charge/discharge circuit includes at least two battery groups, in response to the enable signal sent by the control module 530, the upper leg or the lower leg of each switch leg turns on, and the first switching circuit 231 or the second switching circuit 232 in the charge-discharge switching module 230 turns on, so as to form a charge loop or a discharge loop; charging/discharging of the first battery group or the second battery group is implemented by the charge loop or the discharge loop; the charging/discharging includes switching between charge/discharge states of the first battery group and the second battery group; and the charge/discharge state includes charging the first battery group and discharging the second battery group at the same time, or discharging the first battery group discharges and charging the second battery group at the same time.

In an example, the control module 530 is configured to determine a state of charge SOC of the traction battery. State of charge (State Of Charge, SOC) is a ratio of remaining capacity to rated capacity of a battery under a same condition at a specified discharge rate. SOC is one of important parameters of a battery management system and also a basis of the charge/discharge control policy and balanced operation of the battery of a vehicle. However, a state of charge of a lithium battery cannot be directly measured due to its structural complexity. The SOC can only be estimated using a related characteristic curve or computational formula according to some external characteristics of the battery, for example, related parameters such as internal resistance, temperature, and current of the battery.

In on example, the control module 530 is further configured to receive a heating request from the battery management system BMS, where the heating request is used to indicate that the traction battery satisfies a heating condition.

In an example, by receiving the heating request from the battery management system (Battery Management System, BMS), the control module 530 is able to heat the traction battery in time, avoiding impact on use of motive devices such as a vehicle.

In an example, the control module 530 is further configured to: when temperature of the traction battery reaches the preset temperature or the traction battery experiences the abnormal temperature rise, send a heating stopping signal to the switch module 240 and the charge-discharge switching module 230, and turn off the charge loop or the discharge loop, so as to stop heating the traction battery.

In an example, when the vehicle control unit receives the heating request from the BMS, the vehicle control unit is able to send a control signal to the motor control unit, where the control signal is used to indicate that the traction battery is heated, that is, the control signal is used to instruct the motor control unit to send an enable signal to the switch module 240 and the charge-discharge switching module 230, so as to form a charge loop or a discharge loop in the charge/discharge circuit.

In the system of this embodiment, the switch module 240 and the charge-discharge switching module 230 being controlled by the control module 530 can determine when charge/discharge is performed based on a condition of the vehicle, so as to ensure that the battery can heat the traction battery; and charge/discharge currents being controlled to be the same in magnitude and phase can effectively suppress vibration noise of the motor. At the same time, non-running of the motor can also resolve the problem of rotor heating in the motor, thus prolonging self-heating service time of the battery.

As shown in FIG. 32, in some other embodiments of this application, the charge/discharge system 500 further includes a charging apparatus 140 connected to the charge/discharge circuit 200, where the charging apparatus 140 is configured to charge the battery group in the power supply module 210 via the charge/discharge circuit 200. The charging apparatus 140 includes but is not limited to a charging pile, a charger, or another electric vehicle. The charge/discharge circuit 200 is connected to the charging apparatus 140, and the charging apparatus 140 is configured to charge the traction battery via the charge/discharge circuit 200.

The charge/discharge circuit 200 has both a heating mode and a charge mode, which can not only be used for heating the traction battery, but also adjust charging voltage when the charging apparatus 140 charges the traction battery. In this way, when the voltage of the charging apparatus 140 does not match voltage of the traction battery, for example, when the voltage of the charging apparatus 140 is lower than or higher than the voltage of the traction battery, the charging apparatus 140 can charge the traction battery at a boosted voltage or at a stepped-down voltage via the charge/discharge circuit 200, so as to improve adaptability between the charging apparatus 140 and the traction battery.

For example, when the voltage of the charging apparatus 140 is lower than the voltage of the traction battery, the control module 530 controls the switch module 240 and the charge-discharge switching module 230 to form a loop via which the charging apparatus 140 charges the energy storage module 250 and a loop via which the charging apparatus 140 and the energy storage module 250 charge the power supply module 210 simultaneously.

For another example, when the voltage of the charging apparatus 140 is higher than the voltage of the traction battery, the control module 530 controls the switch module 240 and the charge-discharge switching module 230 to form a loop via which the charging apparatus 140 charges the power supply module 210 and the energy storage module 250 and a loop via which the energy storage module 250 charges the power supply module 210.

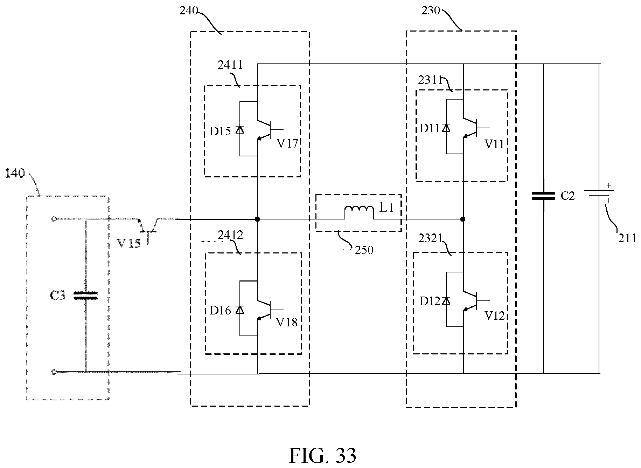

In an implementation, as shown in FIG. 32, an example in which the energy storage module 250 is an inductor L1 is used. A second terminal of the energy storage module 250 is connected to one terminal of the charging apparatus 140 through a tube switch V15; a second terminal of the switch module 240 is connected to another terminal of the charging apparatus 140; and the charging apparatus 140 is configured to charge a first battery group 211 via the charge/discharge circuit 200. A capacitor C3 in FIG. 33 may be a capacitor of the charging apparatus 140, for example, providing voltage stabilization during charge.

In an implementation, a tube switch V17 may alternatively be used as a mode switching switch. When the charge/discharge circuit 200 is in heating mode, the control module 530 controls the tube switch V17 to turn on; and when the charge/discharge circuit 200 is in charge mode, the control module 530 controls the tube switch V13 to turn off.

It should be understood that when the tube switch V17 is used as the mode switching switch, a freewheeling diode D15 is not connected to two terminals of the tube switch V17. In this case, one heating period may include only the following processes: a tube switch V12 and the tube switch V17 turn on simultaneously, so as to form a loop including the first battery group 211, the tube switch V17, the inductor L1, and the tube switch V12 for the first battery group 211 to discharge to the inductor L1; and then, the tube switch V12 and the tube switch V17 turn off, so as to form a loop including the first battery group 211, a freewheeling diode D16, the inductor L1, and a freewheeling diode D11 for the inductor L1 to charge the first battery group 211. In this case, it is also possible that no freewheeling diode D12 is connected across two terminals of the tube switch V12.

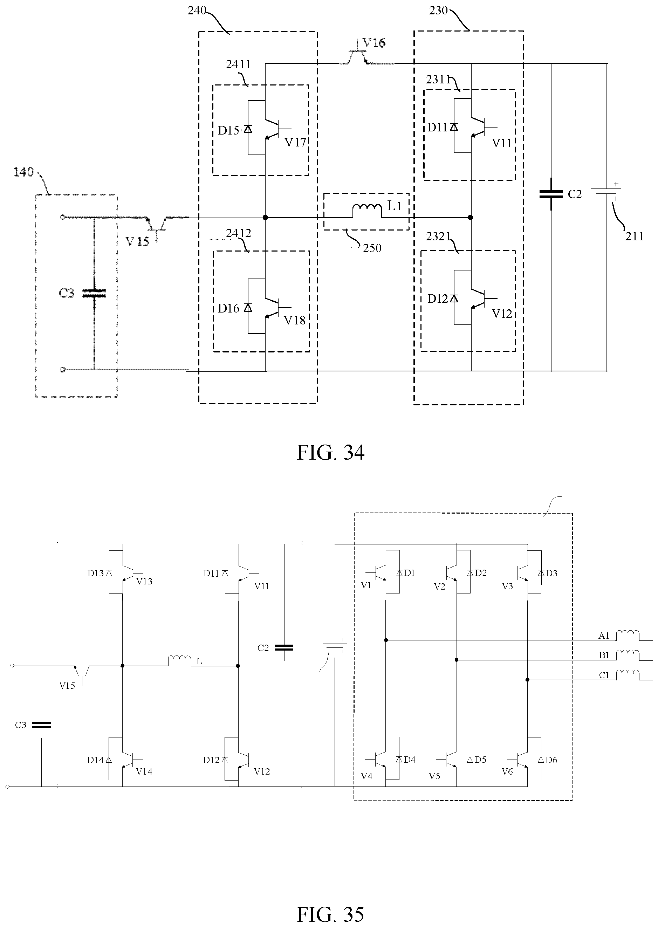

Alternatively, in another implementation, as shown in FIG. 34, a tube switch V16 may be connected between a first terminal of the switch module 240 and a first terminal of the charge-discharge switching module 230 to serve as a mode switching switch. In heating mode, the tube switch V16 turns on; and in charge mode, the tube switch V16 turns off.

When the charge/discharge circuit 200 switches from the heating mode to the charge mode, the control module 530 is further configured to: control an upper leg of the switch module 240 to turn off, for example, control the tube switch V17 or the tube switch V16 to turn off; when the voltage of the charging apparatus 140 is lower than the voltage of the first battery group 211, control the tube switch V12 and the first tube switch V15 to turn on and control the tube switch V11 and the tube switch V18 to turn off, so as to form a loop including the charging apparatus 140, the energy storage module 250, and the second tube switch V12 for the charging apparatus 140 to charge the energy storage module 250; and control the tube switch V11 and the first tube switch V15 to turn on and control the tube switch V12 and the tube switch V18 to turn off, so as to form a loop including the charging apparatus 140, the energy storage module 250, the tube switch V11, and the first battery group 211 for the charging apparatus 140 and the energy storage module 250 to charge the first battery group 211 simultaneously.

It can be seen that when the voltage of the charging apparatus 140 is lower than the voltage of the first battery group 211, proper control timing is designed to control the legs to turn on or off, so as to form, in each charge period, a first stage in which the charging apparatus 140 charges the energy storage module 250 and a second stage in which the charging apparatus 140 and the energy storage module 250 charge the first battery group 211 simultaneously. In this way, in the first stage in which the charging apparatus 140 charges the energy storage module 250, some amount of power is stored in the energy storage module 250. Therefore, the energy storage module 250 can charge the first battery group 211 jointly with the charging apparatus 140 in the second stage, narrowing down the voltage difference between the charging apparatus 140 and the first battery group 211 and improving charge efficiency.

Further, the control module 530 is further configured to: when the voltage of the charging apparatus 140 is higher than the voltage of the first battery group 211, control the tube switch V11 and the first tube switch V15 to turn on and control the tube switch V12 and the tube switch V18 to turn off, so as to form a loop including the charging apparatus 140, the energy storage module 250, the tube switch V11, and the first battery group 211 for the charging apparatus 140 to charge the first battery group 211 and the energy storage module 250; and control the tube switch V11 to turn on and control the tube switch V12, the tube switch V18, and the first tube switch V15 to turn off, so as to form a loop including the energy storage module 250, the tube switch V11, the first battery group 211, and a freewheeling diode D18 for the energy storage module 250 to charge the first battery group 211.

It can be seen that when the voltage of the charging apparatus 140 is higher than the voltage of the first battery group 211, proper control timing is designed to control the legs to turn on or off, so as to form, in each charge period, a stage in which the charging apparatus 140 charges the energy storage module 250 and the first battery group 211 and a stage in which only the energy storage module 250 charges the first battery group 211. On one hand, because the energy storage module 250 can absorb part of the voltage when the charging apparatus 140 charges the energy storage module 250 and the first battery group 211, voltage difference between the charging apparatus 140 and the first battery group 211 is appropriately reduced. On the other hand, as the voltage of the charging apparatus 140 is higher than the voltage of the first battery group 211, in order to prevent the charging apparatus 140 from charging the first battery group 211 at continuous high voltage, the charging apparatus 140 and the energy storage module 250 can charge the first battery group 211 alternately. When the charging apparatus 140 charges the energy storage module 250 and the first battery group 211, some amount of power can be stored in the energy storage module 250. With this amount of power, the energy storage module 250 can charge the first battery group 211 alone.

The charge/discharge circuits shown in FIG. 33 and FIG. 34 are all connected to the charging apparatus 140 based on the charge/discharge circuit shown in FIG. 9. It should be understood that the charge/discharge circuits shown in FIG. 12 to FIG. 15, FIG. 19 to FIG. 26, and FIG. 28 to FIG. 30 may also be connected to the charging apparatus 140, achieving the technical effects that can be achieved by connection between the circuit structure shown in FIG. 9 and the charging apparatus 140.

In an implementation, as shown in FIG. 35, the first battery group 211 is further connected to a drive circuit 141 and is configured to supply power to the drive circuit 141. In FIG. 35, a three-phase motor is used as an example. The drive circuit 141 is an inverter circuit, includes legs constituted by a tube switch V1, a tube switch V2, a tube switch V3, a tube switch V4, a tube switch V5, and a tube switch V6, and is connected to a winding A1, a winding B1, and a winding C1 of the motor.

It can be seen that when the charge/discharge circuit is used for heating the first battery group 211, the first battery group 211 can still supply power to the drive circuit 141 of the motor connected to the first battery group 211, so as to heat the first battery group 211 during driving.

Based on the above description, with the additional charge/discharge circuit disposed, the motor can drive the vehicle to run as normal when the charge/discharge circuit is being used to heat the first battery group 211, thereby implementing heating in driving. Specifically, the proper control timing is designed to control the legs in the charge/discharge circuit, so as to form a loop via which the first battery group 211 discharges to the energy storage module 250 in the charge/discharge circuit and a loop via which the energy storage module 250 charges the first battery group 211, thereby implementing heating of the traction battery by effectively using the energy storage module 250.

When the charging apparatus 140 charges the first battery group 211 via the charge/discharge circuit, the charge/discharge circuit enters the charge mode. In this case, the charge/discharge circuit cannot be used for heating the first battery group 211, and therefore the drive circuit 141 of the motor can be used for heating the first battery group 211. Different from a manner of heating cooling liquid by using heat generated by operation loss of the motor, in this case, an IGBT in the drive circuit 141 can be controlled to form a charge/discharge circuit, thereby implementing heating of the first battery group 211. For example, when the VCU receives the heating request from the BMS and the charge/discharge circuit is being in the charge mode, the VCU can inform the motor control unit to control the drive circuit 141 of the motor so as to heat the first battery group 211, for example, control the IGBT including the tube switch V1 to the tube switch V6 in the drive circuit 141 to turn on or off, thereby heating the first battery group 211 via the drive circuit 141.

In other words, in addition to the foregoing heating mode and charge mode, the charge/discharge circuit may further have another mode that is a charge heating mode. When the charge/discharge circuit is in the charge heating mode, the charging apparatus 140 charges the first battery group 211 via the charge/discharge circuit, and the drive circuit 141 of the motor is used for heating the first battery group 211.

In an implementation, a control signal of tube switches of legs in the drive circuit 141 can be generated by a space vector control method (Space Vector Pulse Width Modulation, SVPWM), and turn-on or off states of the tube switches of the legs are controlled by the control signal, so as to modulate a current flowing into a motor winding to an alternating current. For an example, a direct axis current component of the winding current can be controlled to be an alternating current, and a quadrature axis current component of the winding current can be controlled to be 0, so as to modulate the current of the motor winding to an alternating current.

Any two phase currents ia and ib collected by a three-phase connection circuit between the drive circuit 141 and the motor. Any two phase currents ia and ib flow from the drive circuit 141 to the motor. The motor control unit converts the collected current from an abc coordinate system to a dq coordinate system, and then decomposes the collected current in the dq coordinate system to obtain a direct axis component id and a quadrature axis component iq. The quadrature axis component iq, the direct axis component id, a quadrature axis signal given value i_q^*, and a direct axis signal given value i_d^* are used for obtaining a modulation signal of a tube switch that needs to turn on. The quadrature axis signal given value i_q^* is equal to 0. In this way, energy stored in the motor winding can be used for implementing charge/discharge of the first battery group 211.

Voltage fluctuation may be caused in a process of heating the first battery group 211 by using the drive circuit 141 of the motor. However, due to presence of the charge/discharge circuit, a voltage output to the first battery group 211 by the charging apparatus 140 via the charge/discharge circuit can be dynamically adjusted with the voltage fluctuation in the battery heating process, reducing influence on the charging apparatus 140 by the battery heating process.

It should be understood that "join" or "connect" in the embodiments of this application may be a direct connection or an indirect connection, which is not limited in this application. For example, the first terminal of the first upper leg 2311 being connected to the first terminal of the second upper leg 2411 may be as shown in FIG. 9 where the first terminal of the first upper leg 2311 and the first terminal of the second upper leg 2411 are directly and electrically connected, and may alternatively be as shown in FIG. 12 where the first terminal of the first upper leg 2311 and the first terminal of the second upper leg 2411 are connected via other elements such as the tube switch K4.

The charge/discharge circuit shown in FIG. 12 to FIG. 15 that includes two battery groups may alternatively be connected to the drive circuit 141 of the motor and is used for supplying power to the drive circuit 141, so as to enable the motorized vehicle to travel.

In an implementation, the battery management system (Battery Management System, BMS) of the power supply module 210 collects state information of the battery group in the power supply module 210, such as battery temperature, state of charge (State of Charge, SOC), voltage signal, and current signal, and determines, based on the state information, whether the power supply module 210 needs to be heated. When the power supply module 210 needs to be heated, the BMS may send a heating request to a vehicle control unit (Vehicle Control Unit, VCU). The VCU determines, based on the heating request sent by the BMS, whether to turn on the battery group in the power supply module 210 for heating.

For example, after receiving the heating request sent by the BMS, the VCU determines, based on the SOC of the battery group, whether to heat the battery group in the power supply module 210. When the battery group has sufficient power, that is, the SOC is high, for example, the SOC is higher than a threshold, the battery group in the power supply module 210 can be heated.

For another example, when the battery group in the power supply module 210 has insufficient power, that is, the SOC is low, for example, the SOC is lower than a threshold, to reduce heating loss of the battery, the traction battery may alternatively not be heated. A motor control unit, for example, a microprogrammed control unit (Microprogrammed Control Unit, MCU) can determine a state of the motor according to information such as voltage and current of the motor and send the state of the motor to the VCU. Therefore, if in this case the motor is in a normal operation state, the heat produced from operation loss of the motor can be used for heating or keeping warm the power supply module 210. For example, the heat produced from the operation loss of the motor during driving is used for heating a cooling liquid of the power supply module 210, so that the cooling liquid heats or keeps warm the battery group in the power supply module 210.

Alternatively, when the SOC of the battery group in the power supply module 210 is low, the battery group in the power supply module 210 can alternatively be heated, and a length of a heating period can be adjusted, or a heating frequency can be adjusted.

Use scenarios of the charge/discharge circuit are not limited in this application. The charge/discharge circuit in the embodiments of this application can heat the battery group in the power supply module 210 when needed.

In the process of heating the battery group in the power supply module 210, the BMS is also capable of monitoring whether temperature of the battery group in the power supply module 210 is abnormal. When the temperature of the battery group is abnormal, the BMS can send temperature abnormality information to the VCU, and the VCU controls to stop heating the battery group in the power supply module 210. In this case, the heat produced from operation loss of the motor can be used for heating or keeping warm the battery group in the power supply module 210. For example, the heat produced from the operation loss of the motor is used for heating a cooling liquid of the power supply module 210, so that the cooling liquid heats or keeps warm the battery group in the power supply module 210.

In the process of heating the battery group in the power supply module 210, if temperature of the battery group in the power supply module 210 has satisfied the requirement, the VCU may control to stop heating the battery group in the power supply module 210. In this case, the heat produced from operation loss of the motor can be used for keeping warm the battery group in the power supply module 210. For example, the heat produced from the operation loss of the motor is used for heating a cooling liquid of the power supply module 210, so that the cooling liquid keeps warm the battery group in the power supply module 210.

Some other embodiments of this application further provide an electric device. The electric device includes the charge/discharge system in the foregoing embodiments. The electric device includes devices which may be vehicles, ships, or aircrafts using traction batteries. When the electric device is in a low-temperature environment, discharge capacity of a traction battery in the electric device severely degrades due to the low temperature, and the traction battery is unable to be charged in the low-temperature environment, affecting proper use of the electric device in the low-temperature environment. For the electric device in the embodiments of this application, the traction battery is heated using the charge/discharge circuit, and alternately switched charge loop and discharge loop are formed in the charge/discharge circuit, so as to produce an alternating current in the charge/discharge circuit, where the alternating current flows through the traction battery, so that internal resistance of the traction battery generates heat to implement heating of the traction battery.

The circuit structure of the charge/discharge circuit and the charge/discharge system including the circuit structure in the embodiments of this application are described in detail above. The following describes in detail the charge/discharge control method in the embodiments of this application with reference to the accompanying drawings. The technical features described in the apparatus embodiments are applicable to the following method embodiment.

The charge/discharge control method is performed by a control module, where the control module may include a VCU or an MCU or a domain controller, and may alternatively include a BMS, a VCU, and an MCU, and the charge/discharge control method is performed by cooperation of the BMS, the VCU, and the MCU. An example in which the BMS, the VCU, and the MCU cooperate is used for detailed description of a complete process of the charge/discharge control method.

The motor control unit MCU directly controls the switch module and the charge-discharge switching module in the charge/discharge circuit. When the BMS or the VCU determines the battery group needs to be heated, the BMS or the VCU can send a control instruction to the MCU. The control instruction is used to indicate that the battery group satisfies a heating condition. The heating condition may include temperature of the battery group being lower than a given threshold and a state of charge value SOC of the battery group being greater than a given charge threshold. After the MCU receives the control instruction from the BMS or the VCU, the MCU sends a charge/discharge enable signal to the switch module and the charge-discharge switching module in the charge/discharge circuit.

The control module sends the charge/discharge enable signal to control the charge-discharge switching module and the switch module to turn on or off, so as to form alternately switched charge loop and discharge loop in the charge/discharge circuit to produce a current of an alternating-current waveform. The current flows through the battery group, so that internal resistance of the battery group generates heat, thereby achieving a purpose of heating the battery group. The control module includes any one of a motor control unit MCU, a vehicle control unit VCU, a battery management system BMS, or a domain controller.

Structures of the charge/discharge circuits shown in FIG. 9, and FIG. 19 to FIG. 26 include only a first battery group. In these circuit structures, in a charge stage of the first battery group, electric energy is stored in the energy storage module. In a charge stage, the energy storage module charges the electric energy stored inside back to the first battery group. Because the energy storage module needs to discharge immediately after being full of energy, the current cannot be kept at a stable heating current magnitude. Therefore, waveform of an alternating current produced in the charge/discharge circuit including only the first battery group is at least one of a triangular waveform, a quasi-triangular waveform, a sinusoidal waveform, and a quasi-sinusoidal waveform.

In this method embodiment, the control module can send charge enable signals and discharge enable signals to the charge-discharge switching module and the switch module alternately at a preset frequency to control alternate switching between the charge loop and discharge loop. The frequency of switching between the charge loop and discharge loop is controlled so as to adjust frequency of the alternating current produced in the entire circuit, thus improving the heating speed of the battery group.

Specifically, the control module can start timing when sending a discharge enable signal and send a charge enable signal after a predetermined period of time. Subsequently, the control module starts timing when sending a charge enable signal and sends a discharge enable signal again after a predetermined period of time. In this way, the control module repeatedly sends the discharge enable signal and the charge enable signal in sequence.

In the charge/discharge circuit in which the charge-discharge switching module includes a first switching circuit and a second switching circuit connected in series, the switch module includes at least one switch leg, and each switch leg includes an upper leg and a lower leg, alternately switched charge loop and discharge loop include:
a loop including each upper leg in the switch module, the energy storage module, the second switching circuit, and the power supply module and a loop including each lower leg in the switch module, the energy storage module, the first switching circuit, and the power supply module.

Alternate switching is implemented between the loop including each upper leg in the switch module, the energy storage module, the second switching circuit, and the power supply module and the loop including each lower leg in the switch module, the energy storage module, the first switching circuit, and the power supply module. With the alternate switching, an alternating current is produced in the charge/discharge circuit, the alternating current flowing through the battery group in the power supply module so that internal resistance of the battery group generates heat, thereby achieving a self-heating effect of the battery group.

In an implementation, the charge-discharge switching module includes a first switching circuit and a second switching circuit, where the first switching circuit includes a first upper leg, and the second switching circuit includes a first lower leg; and the switch module includes at least one switch leg. As shown in the charge/discharge circuits in FIG. 9, FIG. 19, and FIG. 20, in such circuit structures, a heating period may include a first stage and a second stage. In the first stage, the control module sends a discharge enable signal to the switch module and the charge-discharge switching module, and the switch module and the charge-discharge switching module control, in response to the discharge enable signal from the control module, the first upper leg and a lower leg of each switch leg to turn on and the first lower leg and an upper leg of each switch leg to turn off, so as to form a discharge loop including the power supply module, the first upper leg, the energy storage module, and the lower leg of each switch leg. In the second stage, the control module sends a charge enable signal to the switch module and the charge-discharge switching module, and the switch module and the charge-discharge switching module control, in response to the charge enable signal from the control module, the first lower leg and the upper leg of each switch leg to turn on and the first upper leg and the lower leg of each switch leg to turn off, so as to form a charge loop including the power supply module, the first lower leg, the energy storage module, and the upper leg of each switch leg.

For the above circuit structures, switching between the charge loop and discharge loop may has another implementation. That is, in the first stage, in response to the discharge enable signal from the control module, the upper leg of each switch leg and the first lower leg turn on, and the first upper leg and the lower leg of each switch leg turn off, so as to form a discharge loop including the power supply module, the upper leg of each switch leg, the energy storage module, and the first lower leg. In response to the charge enable signal from the control module, the lower leg of each switch leg and the first upper leg turn on, and the first lower leg and the upper leg of each switch leg turn off, so as to form a charge loop including the power supply module, the lower leg of each switch leg, the energy storage module, and the first upper leg.

In another implementation, the charge-discharge switching module includes a first switching circuit and a second switching circuit, where the first switching circuit includes a third diode, and the second switching circuit includes a fifth switch; and the switch module includes at least one switch leg. Refer to structures of the charge/discharge circuits shown in FIG. 21 and FIG. 22. In such circuit structures, a heating period may include a first stage and a second stage. In the first stage, the control module sends a discharge enable signal to the switch module and the charge-discharge switching module, and the switch module and the charge-discharge switching module control, in response to the discharge enable signal from the control module, an upper leg of each switch leg and the fifth switch to turn on and a lower leg of each switch leg to turn off, so as to form a discharge loop including the power supply module, the upper leg of each switch leg, the energy storage module, and the fifth switch. In the second stage, the control module sends a charge enable signal to the switch module and the charge-discharge switching module, and the switch module and the charge-discharge switching module control, in response to the charge enable signal from the control module, the lower leg of each switch leg to turn on and the upper leg of each switch leg and the fifth switch to turn off, so as to form a charge loop including the power supply module, the lower leg of each switch leg, the energy storage module, and the third diode.

In still another implementation, the charge-discharge switching module includes a first switching circuit and a second switching circuit, where the first switching circuit includes a seventh switch, the second switching circuit includes a fourth diode, and an anode of the fourth diode is connected to a negative electrode of the first battery group; and the switch module includes at least one switch leg. Refer to structures of the charge/discharge circuits shown in FIG. 23 and FIG. 24. In such circuit structures, a heating period includes a first stage and a second stage. In the first stage, the control module sends a discharge enable signal to the switch module and the charge-discharge switching module, and the switch module and the charge-discharge switching module control, in response to the discharge enable signal from the control module, the seventh switch and a lower leg of each switch leg to turn on and an upper leg of each switch leg to turn off, so as to form a discharge loop including the power supply module, the seventh switch, the energy storage module, and the lower leg of each switch leg. In the second stage, in response to a charge enable signal from the control module, the upper leg of each switch leg turns on, and the seventh switch and the lower leg of each switch leg turn off, so as to form a charge loop including the power supply module, the fourth diode, the energy storage module, and the upper leg of each switch leg.

In the structures of the charge/discharge circuits shown in FIG. 23 and FIG. 24, an orientation of the fourth diode may alternatively be reversely arranged, that is, an cathode of the fourth diode is connected to the negative electrode of the first battery group. In these variant structures, a heating period includes a first stage and a second stage. In the first stage, the control module sends a discharge enable signal to the switch module and the charge-discharge switching module, and the switch module and the charge-discharge switching module control, in response to the discharge enable signal from the control module, the upper leg of each switch leg to turn on and the seventh switch and the lower leg of each switch leg to turn off, so as to form a discharge loop including the power supply module, the upper leg of each switch leg, the energy storage module, and the fourth diode. In the second stage, the control module sends a charge enable signal to the switch module and the charge-discharge switching module, and the switch module and the charge-discharge switching module control, in response to the charge enable signal from the control module, the seventh switch and the lower leg of each switch leg to turn on and the upper leg of each switch leg to turn off, so as to form a charge loop including the power supply module, the lower leg of each switch leg, the energy storage module, and the seventh switch.

In some other embodiments of this application, the energy storage module includes a first M-phase motor and a second M-phase motor, the switch module includes M phase legs, and the charge-discharge switching module includes M phase legs; M phase windings of the first M-phase motor are connected to the M phase legs of the switch module in one-to-one correspondence, and M phase windings of the second M-phase motor are connected to the M phase legs of the charge-discharge switching module in one-to-one correspondence; and a joint of the M phase windings of the first M-phase motor is connected to a joint of the M phase windings of the second M-phase motor. As shown in FIG. 25 and FIG. 26, in such circuit structures, a heating period may include a first stage and a second stage. In the first stage, the control module sends a discharge enable signal to the switch module and the charge-discharge switching module, and the switch module and the charge-discharge switching module control, in response to the discharge enable signal from the control module, upper legs of the M phase legs of the switch module and lower legs of the M phase legs of the charge-discharge switching module to turn on, so as to form a discharge loop including the power supply module, the upper legs of the M phase legs of the switch module, the first M-phase motor, the second M-phase motor, and the lower legs of the M phase legs of the charge-discharge switching module. In the second stage, the control module sends a charge enable signal to the switch module and the charge-discharge switching module, and the switch module and the charge-discharge switching module control, in response to the charge enable signal from the control module, upper legs of the M phase legs of the charge-discharge switching module and lower legs of the M phase legs of the switch module to turn on, so as to form a charge loop including the power supply module, the lower legs of the M phase legs of the switch module, the first M-phase motor, the second M-phase motor, and the upper legs of the M phase legs of the charge-discharge switching module.

In another implementation, for the above charge/discharge circuit structures including two motors, in the first stage, in response to the discharge enable signal from the control module, the upper legs of the M phase legs of the charge-discharge switching module and the lower legs of the M phase legs of the switch module turn on, so as to form a discharge loop including the power supply module, the lower legs of the M phase legs of the switch module, the first M-phase motor, the second M-phase motor, and the upper legs of the M phase legs of the charge-discharge switching module. In the second stage, in response to the charge enable signal from the control module, the upper legs of the M phase legs of the switch module and the lower legs of the M phase legs of the charge-discharge switching module turn on, so as to form a charge loop including the power supply module, the lower legs of the M phase legs of the charge-discharge switching module, the first M-phase motor, the second M-phase motor, and the upper legs of the M phase legs of the switch module.

The foregoing describes the control method for the charge/discharge circuit including only the first battery group with reference to the accompanying drawings. The following describes in detail a control process of a charge/discharge circuit including at least a first battery group and a second battery group with reference to the accompanying drawings. The charge/discharge circuit structures shown in FIG. 12 to FIG. 15 and FIG. 28 to FIG. 30 include a first battery group and a second battery group. In each heating period of these circuit structures, in one stage, it is possible that the first battery group charges the energy storage module and the first battery group and the energy storage module charge the second battery group simultaneously. In another stage, it is possible that the second battery group charges the energy storage module, and the second battery group and the energy storage module charge the first battery group simultaneously. The provision of two batteries can effectively relieve constraints of the energy storage module on the magnitude of heating current and the heating current frequency. The heating with two batteries allows energy of the energy storage module to discharge to one battery in time, keeping the heating current of the battery at a stable magnitude according to a preset heating frequency, such that the heating current frequency can be adjusted for the battery under different temperatures and SOCs to significantly increase the heating speed. As the heating current magnitude can be kept at a stable value, the alternating current produced in the charge/discharge circuit including two battery groups is a square or quasi-square wave in waveform.

In this method embodiment, the power supply module includes at least a first battery group and a second battery group; the method includes charging/discharging the first battery group or the second battery group via the charge loop or the discharge loop, where a square or quasi-square wave alternating current is produced in the charge/discharge circuit; and the charging/discharging includes switching between charge/discharge states of the first battery group and the second battery group, where the charge/discharge state includes charging the first battery group and discharging the second battery group at the same time, or discharging the first battery group and charging the second battery group at the same time.

In the embodiments with two battery groups, a first terminal of the second battery group is connected to a first terminal of the charge-discharge switching module, and a second terminal of the second battery group is collinearly connected to a second terminal of the first battery group, a second terminal of the switch module, and a second terminal of the charge-discharge switching module; a first terminal of the first battery group is connected to a first terminal of the switch module; a tenth switch is connected between the first terminal of the first battery group and the first terminal of the second battery group, as shown in FIG. 12 to FIG. 15 and FIG. 28 to FIG. 30. When determining that the first battery group and the second battery group satisfy a heating condition, the control module controls the tenth switch to turn off, so that the first battery group and the second battery group are connected in series.

Connection manner between the first battery group and the second battery group can be controlled via the tenth switch. When the tenth switch turns off, the first battery group and the second battery group are connected in series. When the tenth switch turns on, the first battery group and the second battery group are connected in parallel. When the first battery group and the second battery group need to be heated, the tenth switch is controlled to turn off, so as to heat the first battery group and the second battery group connected in series. When power needs to be supplied to the outside, the tenth switch is controlled to turn on for the first battery group and the second battery group connected in parallel to supply power to the outside.

In an implementation, the charge-discharge switching module includes a first switching circuit and a second switching circuit, where the first switching circuit includes a first upper leg, and the second switching circuit includes a first lower leg; the switch module includes at least one switch leg; and one terminal of the energy storage module is connected to a joint between the first upper leg and the first lower leg, and another terminal of the energy storage module is connected to a joint between an upper leg and a lower leg of the switch leg. As shown in FIG. 12, FIG. 13, and FIG. 28 to FIG. 30, a heating period may include a first stage and a second stage. In the first stage, in response to a first enable signal from the control module, the first upper leg and a lower leg of each switch leg all turn on, and the first lower leg and an upper leg of each switch leg all turn off, so as to form a discharge loop including the first battery group, the first upper leg, the energy storage module, and the lower leg of each switch leg, causing the first battery group to discharge to the energy storage module. In the second stage, in response to a second enable signal from the control module, the first upper leg and the upper leg of each switch leg all turn on, and the first lower leg and the lower leg of each switch leg all turn off, so as to form a charge loop including the first battery group, the first upper leg, the energy storage module, the upper leg of each switch leg, and the second battery group, causing the first battery group and the energy storage module to charge the second battery group. The control module can repeatedly switch between turn-on of the upper leg of each switch leg and turn-on of the lower leg of each switch leg so as to control time of charging the second battery group.

Further, the heating period may further include a third stage and a fourth stage. In the third stage, in response to a third enable signal from the control module, the first lower leg and the upper leg of each switch leg all turn on, and the first upper leg and the lower leg of each switch leg all turn off, so as to form a discharge loop including the second battery group, the upper leg of each switch leg, the energy storage module, and the first lower leg, causing the second battery group to discharge to the energy storage module. In the fourth stage, in response to a fourth enable signal from the control module, the first upper leg and the upper leg of each switch leg all turn on, and the first lower leg and the lower leg of each switch leg all turn off, so as to form a charge loop including the second battery group, the upper leg of each switch leg, the energy storage module, the first upper leg, and the first battery group, causing the second battery group and the energy storage module to charge the first battery group. The control module can repeatedly switch between turn-on of the first upper leg and turn-on of the first lower leg so as to control time of charging the first battery group.

For the circuits shown in FIG. 12, FIG. 13, and FIG. 28 to FIG. 30, another control manner may alternatively be used. That is, in the first stage, in response to a first enable signal from the control module, the first upper leg and the upper leg of each switch leg all turn on, and the first lower leg and the lower leg of each switch leg turn off, so as to form charge loop and discharge loop including the first battery group, the upper leg of each switch leg, the energy storage module, the first upper leg, and the second battery group, causing the first battery group to discharge to the energy storage module, and the first battery group and the energy storage module to charge the second battery group. In the second stage, in response to a second enable signal from the control module, the first upper leg and the upper leg of each switch leg all turn on, and the first lower leg and the lower leg of each switch leg turn off, so as to form charge loop and discharge loop including the first battery group, the first upper leg, the energy storage module, the upper leg of each switch leg, and the second battery group, causing the second battery group to discharge to the energy storage module, and the second battery group and the energy storage module to charge the first battery group.

In another implementation with two battery groups, the charge-discharge switching module includes a first switching circuit and a second switching circuit, where the first switching circuit includes a first upper leg, and the second switching circuit includes a first lower leg; the switch module includes at least one switch leg; and a first terminal of the energy storage module 250 is connected to the first terminal of the switch module, and a second terminal of the energy storage module 250 is connected to the first terminal of the charge-discharge switching module. As shown in FIG. 14, the first terminal of the switch module and the first terminal of the charge-discharge switching module may be terminals of the switch module and the charge-discharge switching module that are collinearly connected to the positive electrode of the first battery group. In this circuit structure, a heating period may include a first stage and a second stage. In the first stage, in response to a first enable signal from the control module, the first lower leg and an upper leg of each switch leg turn on simultaneously, and the first upper leg and a lower leg of each switch leg turn off, so as to form a loop via which the first battery group discharges to the energy storage module. In the second stage, in response to a second enable signal from the control module, the lower leg of each switch leg and the first lower leg turn on simultaneously, and the upper leg of each switch leg and the first upper leg turn off, so as to form a loop via which the first battery group and the energy storage module charges the second battery group.

Further, the heating period may further include a third stage and a fourth stage. In the third stage, in response to a third enable signal from the control module, the first upper leg and the lower leg of each switch leg turn on simultaneously, and the first lower leg and the upper leg of each switch leg turn off, so as to form a loop via which the second battery group discharges to the energy storage module. In the fourth stage, in response to a fourth enable signal from the control module, the first lower leg and the lower leg of each switch leg turn on simultaneously, and the first upper leg and the upper leg of each switch leg turn off, so as to form a loop via which the second battery group and the energy storage module charges the first battery group.

An embodiment of this application further provides another control manner for the charge/discharge circuit including two battery groups. In this charge/discharge circuit, the charge-discharge switching module includes a first switching circuit and a second switching circuit, where the first switching circuit includes a first upper leg, and the second switching circuit includes a first lower leg; the switch module includes at least one switch leg; and a first terminal of the energy storage module 250 is connected to the second terminal of the switch module, and a second terminal of the energy storage module 250 is connected to the second terminal of the charge-discharge switching module. As shown in FIG. 15, the second terminal of the switch module and the second terminal of the charge-discharge switching module may both be terminals that are collinearly connected to the negative electrode of the first battery group.

In this circuit structure, a heating period may include a first stage and a second stage. In the first stage, in response to a first enable signal from the control module, the first lower leg and an upper leg of each switch leg turn on simultaneously, and the first upper leg and a lower leg of each switch leg turn off, so as to form a loop via which the second battery group discharges to the energy storage module. In the second stage, in response to a second enable signal from the control module, the upper leg of each switch leg and the first upper leg turn on simultaneously, and the lower leg of each switch leg and the first lower leg turn off, so as to form a loop via which the second battery group and the energy storage module charge the first battery group.

The heating period may further include a third stage and a fourth stage. In the third stage, in response to a third enable signal from the control module, the first upper leg and the lower leg of each switch leg turn on simultaneously, and the first lower leg and the upper leg of each switch leg turn off, so as to form a loop via which the first battery group discharges to the energy storage module. In the fourth stage, in response to a fourth enable signal from the control module, the first upper leg and the upper leg of each switch leg turn on simultaneously, and the first lower leg and the lower leg of each switch leg turn off, so as to form a loop via which the first battery group and the energy storage module charges the second battery group.

The control module may send to the switch module and the charge-discharge switching module the first enable signal and the second enable signal at a preset frequency, or the third enable signal and the fourth enable signal at a preset frequency, or the first enable signal, the second enable signal, the third enable signal, and the fourth enable signal at a preset frequency. In this way, it is controlled that in the charge/discharge circuit including two battery groups, alternately, one battery group discharges to the energy storage module, and this battery group and the energy storage module charges the other battery group simultaneously.

In some embodiments of this application, a ninth switch is connected between the energy storage module and the charge-discharge switching module, for example, the switch K in FIG. 21 and FIG. 23. When determining that a battery group in the power supply module satisfies a heating condition, the control module first controls the ninth switch to turn on, and then controls the switch module and the charge-discharge switching module to turn on or off, so as to implement alternate switching between the discharge loop and the charge loop in the charge/discharge circuit. During charging/discharging, the control module also monitors in real time whether the battery group in the power supply module satisfies a stop-heating condition, where the stop-heating condition may include that temperature of the battery group reaches a preset temperature, the battery group experiences an abnormal temperature rise, or the like. When determining that the battery group satisfies the stop-heating condition, the control module controls the switch module and the charge-discharge switching module to break a current charge loop or discharge loop, and controls the ninth switch to turn off at the same time.

In the embodiments of this application, before controlling the charge/discharge circuit to heat the battery group in the power supply module, the control module determines whether a state of charge value of each battery group in the power supply module is greater than or equal to a preset charge threshold. If the control module determines that the state of charge value of each battery group is greater than or equal to the preset threshold, the control module sends charge/discharge enable signals to the charge-discharge switching module and the switch module alternately at a preset frequency.

That is, the battery group is heated only when the state of charge value of the battery group is greater than the preset charge threshold, avoiding excessively low power of the battery group which cannot support discharge energy required for heating.

Before the determining whether a state of charge value of each battery group in the power supply module is greater than or equal to a preset charge threshold, the control module further needs to determine whether temperature of the power supply module is lower than a preset temperature threshold. When temperature of the battery group is lower than the preset temperature threshold, discharge capacity of the battery group severely degrades, and the battery group is unable to be charged in a low-temperature environment. Therefore, if the temperature of the power supply module is lower than the preset temperature threshold, the battery group in the power supply module needs to be heated. In this case, whether a state of charge value of each battery group in the power supply module is greater than or equal to a preset charge threshold is further determined, and when the state of charge value of each battery group is greater than or equal to the preset charge threshold, the charge/discharge circuit is controlled to heat the battery group.

The preset charge threshold may be the minimum charge required for supporting the battery group to discharge in the heating process.

For the embodiment in which the energy storage module directly uses the motor of the vehicle to participate in the heating process, the heating process may affect normal operation of the motor and then affect traveling of the vehicle. Therefore, in the charge/discharge circuit structure using the motor as the energy storage module, before sending charge/discharge enable signals to the switch module and charge-discharge switching module, the control module further obtains a working state of the motor. The working state may be obtained using a VCU or may be obtained using an MCU. If the obtained working state indicates that the motor is being driven, the control module does not start the process for heating the battery group, so as not to affect the normal operation of the motor. If the obtained working state indicates that the motor is not being driven, the control module sends charge/discharge enable signals to the charge-discharge switching module and the switch module alternately at a preset frequency.

In some other embodiments of this application, the control module further detects whether the traction battery heating system is subjected to breakdown. When the motor is not being driven and the traction battery heating system has no faults, the control module sends charge/discharge enable signals to the switch module and the charge-discharge switching module.

It should be noted that, in the embodiments of this application, the traction battery heating system having faults refers to any one of the motor, the motor control unit, the switch module, and a heat conduction circuit having faults. The heat conduction circuit having faults includes but is not limited to problems such as damage of an interworking valve and insufficient medium in the heat conduction circuit.

Optionally, gear position information and motor speed information may be obtained, based on which it is determined whether the motor is being driven or not being driven. Specifically, when it is determined that currently the gear is on gear P and the speed is 0, it indicates that the motor is not being driven; and when it is determined that currently the gear is not on gear P or the speed is not 0, it indicates that the motor is being driven.

When determining based on the gear position information and motor speed information, if any one of the conditions is not satisfied, the control module does not send the charge/discharge enable signals to the switch module and the charge-discharge switching module, preventing the vehicle from heating the traction battery in a normal traveling state which affects performance of the vehicle.

For the charge/discharge circuit not using the motor of the vehicle for heating, heating the battery group does not affect the normal operation of the motor, and therefore the battery group can be heated when the vehicle is stationary or during traveling of the vehicle.

In some embodiments of this application, the control module is a motor control unit MCU. When a vehicle control unit VCU detects that the battery group needs to be heated, the vehicle control unit sends a control signal to the MCU. The MCU receives the control signal from the vehicle control unit. The MCU analyzes the control signal and determines that the control signal indicates heating the power supply module, and then the control module sends charge/discharge enable signals to the charge-discharge switching module and the switch module alternately at a preset frequency.

In some other embodiments, the control module is a vehicle control unit VCU or a motor control unit MCU. When detecting that the battery group needs to be heated and has satisfied a heating condition, a battery management system BMS sends a request to the VCU, and the VCU receives the request. If the request only indicates that the power supply module has satisfied the heating condition, the VCU sends a control instruction to the MCU, where the control instruction is used for only the MCU to start heating. When receiving the control instruction, the MCU sends charge/discharge enable signals to the charge-discharge switching module and the switch module alternately at a preset frequency.

Alternatively, when the BMS detects that the battery group needs to be heated and has satisfied a heating condition, the battery management system directly sends a request to the MCU. The MCU receives the request from the battery management system and analyzes the request, and if the MCU determines that the request indicates that the power supply module has satisfied the heating condition, the MCU sends charge/discharge enable signals to the charge-discharge switching module and the switch module alternately at a preset frequency.

During heating of the battery group in the power supply module according to any one of the foregoing embodiments, the control module also monitors in real time a state of each battery group to determine whether temperature of each battery group in the power supply module satisfies a stop-heating condition, where the stop-heating condition includes that the battery group reaches a preset temperature or experiences an abnormal temperature rise. When determining that the temperature of the battery group satisfies the stop-heating condition, the control module sends a stop-heating signal to the charge-discharge switching module and the switch module, where the stop-heating signal triggers the charge-discharge switching module and the switch module to break the existing charge/discharge loop. Therefore, when the temperature of the battery group reaches the preset temperature, or any battery group experiences an abnormal temperature rise, heating can be stopped in time, so as to avoid damage to the battery group or other devices in the charge/discharge circuit caused by continuous heating.

In some other embodiments of this application, the charge/discharge system further includes a charging apparatus. As shown in FIG. 33 to FIG. 35, in addition to the circuit structures shown in these figures, the charge/discharge circuits in the foregoing other embodiments may all be connected with a charging apparatus, where the charging apparatus is configured to charge the battery group in the power supply module via the charge/discharge circuit.

The charging apparatus may be a charging pile, a charger, another electric vehicle, or the like. In a charge circuit including the charging apparatus and the power supply module, output voltage of the charging apparatus may not match voltage needed by the battery group in the power supply module, and it is possible that the voltage of the charging apparatus is higher than or lower than the voltage needed by the battery group. Based on this, in the embodiments of this application, the charge/discharge circuit may be used to adjust charging voltage between the charging apparatus and the battery group.

Specifically, when voltage of the charging apparatus is lower than voltage of the power supply module, the switch module and the charge-discharge switching module are controlled to form a loop via which the charging apparatus charges the energy storage module and a loop via which the charging apparatus and the energy storage module charges the power supply module simultaneously. When voltage of the charging apparatus is higher than voltage of the power supply module, the switch module and the charge-discharge switching module are controlled to form a loop via which the charging apparatus charges the power supply module and the energy storage module and a loop via which the energy storage module charges the power supply module.

As shown in FIG. 33 to FIG.35, the terminal of the energy storage module connected to the switch module is connected to one terminal of the charging apparatus through a first tube switch, and the second terminal of the switch module is connected to another terminal of the charging apparatus. The second terminal of the switch module may be a terminal connected to the negative electrode of the first battery group. The charging apparatus is configured to charge the power supply module via the heating module, and the heating module includes the switch module and the energy storage module. The switch module includes at least one switch leg, and the charge-discharge switching module includes a first switching circuit and a second switching circuit.

Based on the connection structure of the charging apparatus and the charge/discharge circuit, the control module controls an upper leg of each switch leg to turn off. When voltage of the charging apparatus is lower than voltage of the power supply module, in a first stage, the control module controls the second switching circuit and the first tube switch to turn on and the first switching circuit and a lower leg of each switch leg to turn off, so as to form a loop including the charging apparatus, the energy storage module, and the second switching circuit for the charging apparatus to charge the energy storage module; and in a second stage, the control module controls the first switching circuit and the first tube switch to turn on and the second switching circuit and the lower leg of each switch leg to turn off, so as to form a loop including the charging apparatus, the energy storage module, the first switching circuit, and the power supply module for the charging apparatus and the energy storage module to charge the power supply module simultaneously.

In an implementation, the lower leg of each switch leg in the switch module includes a switch and a diode connected in parallel. When voltage of the charging apparatus is higher than voltage of the power supply module, in a first stage, the control module controls the first switching circuit and the first tube switch to turn on and the second switching circuit and the lower leg of each switch leg to turn off, so as to form a loop including the charging apparatus, the energy storage module, the first switching circuit, and the power supply module for the charging apparatus to charge the power supply module and the energy storage module; and in a second stage, the control module controls the first switching circuit to turn on and the second switching circuit, the lower leg of each switch leg, and the first tube switch to turn off, so as to form a loop including the energy storage module, the first switching circuit, the power supply module, and the diode in the lower leg of each switch leg for the energy storage module to charge the power supply module.

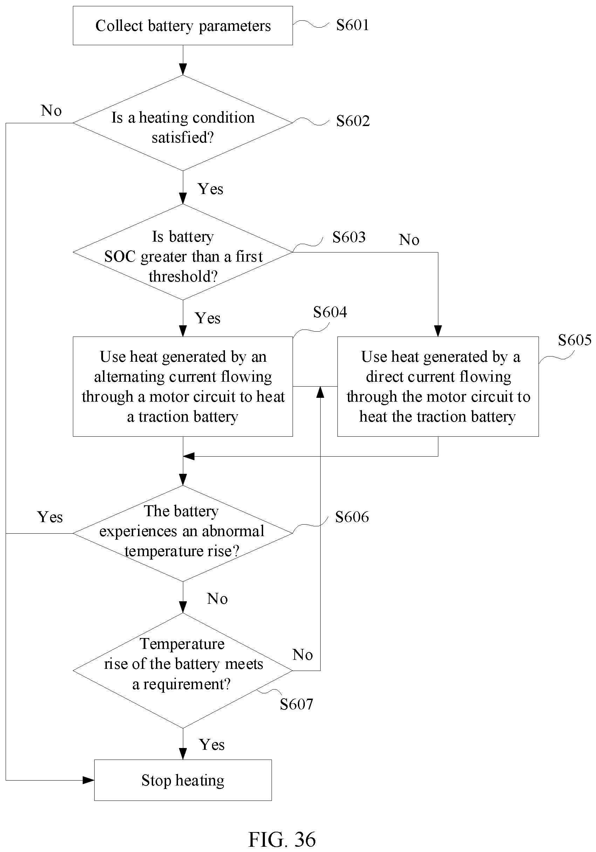

For ease of understanding of a control process of heating the battery group in the embodiments of this application, the following describes briefly by using an embodiment of heating a battery using a motor with reference to FIG. 36. As shown in FIG. 36, a control process of heating a battery includes the following steps.

S601. A BMS collect battery parameters, where the battery parameters include temperature of the battery pack, SOC, voltage signal, current signal, and the like.

S602. The BMS determines, based on the parameters, whether a heating condition is satisfied. If the heating condition is satisfied, the BMS sends a corresponding heating request to a VCU based on an SOC state, for example, sending to the VCU electric power required for heating to a preset temperature.

S603. The BMS or VCU determines whether the battery SOC is greater than a first threshold.

S604. If the SOC is greater than the first threshold, use heat generated by an alternating current flowing through a motor circuit to heat a traction battery.

S605. If the SOC is less than or equal to the first threshold, use heat generated by a direct current flowing through the motor circuit to heat the traction battery.

After S604, the VCU reads a current working state of a first motor.

For example, if the first motor is being driven (that is, in a working state), the VCU sends a drive signal to a motor control unit. In this case, the motor control unit sends enable signals to the switch module and the charge-discharge switching module, so as to control upper legs or lower legs of M phase legs of the switch module to turn on, and a first switching circuit or a second switching circuit of the charge-discharge switching module to turn on.

In an example, the motor control unit periodically sends enable signals, so as to control the leg of the switch module and the charge-discharge switching module to turn on or off, thereby implementing switching between a charge loop and a discharge loop, and implementing inverting control on current of the traction battery.

S606. The BMS determines whether the battery group experiences an abnormal temperature. If the battery group experiences an abnormal temperature, the BMS sends abnormal temperature rise information to the VCU, the VCU forewords the abnormal temperature rise information to the motor control unit, and heating stops.

S607. If no abnormal temperature rise is determined in S606, the BMS determines whether temperature of the battery group meets a requirement. If the temperature of the battery group meets the requirement, the VCU forwards stop-heating information to the motor control unit, and heating stops. Otherwise, repeat the steps of S601 to S606.

The embodiments of this application can be applied to scenarios of heating a traction battery of low temperature, for example, may be applied to a specific scenario in which a traction battery is heated so that temperature of the traction battery rises to a temperature for normal use of a battery group. Specifically, in the embodiments of this application, when the battery state of charge (State Of Charge, SOC) is greater than the first threshold, a current flowing through the loop may be modulated to an alternating current, which flows through the traction battery for internal resistance of the traction battery to generates heat, so as to heat the traction battery, thus improving heating efficiency; and when the battery SOC is less than or equal to the first threshold, that is, the battery has insufficient power, a direct current is used to generate heat in winding to heat the traction battery, reducing power consumption and improving flexibility of the power battery heating system.

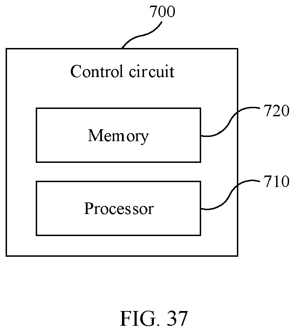

FIG. 37 is a schematic block diagram of a control circuit 700 of a charge/discharge system according to an embodiment of this application. As shown in FIG. 37, the control circuit 700 includes a processor 710; optionally, the control circuit 700 further includes a memory 720, where the memory 720 is configured to store instructions; and the processor 710 is configured to read the instructions and perform the control method of all the foregoing embodiments of this application based on the instructions.

An embodiment of this application further provides a readable storage medium, where the readable storage medium is configured to store a computer program, and the computer program is used to perform the method of all the foregoing embodiments of this application.

Persons of ordinary skill in the art may realize that with reference to units and algorithm steps in the examples described in the embodiments disclosed in this specification, this application can be implemented by electronic hardware or a combination of computer software and electronic hardware. Whether these functions are performed by hardware or software depends on particular application and design constraints of the technical solutions. Persons skilled in the art may use different methods to implement the described functions for each particular application, but it should not be considered that the implementation goes beyond the scope of this application.

Persons skilled in the art may clearly understand that, for ease and brevity of description, specific working processes of the system, apparatus, and units described above may refer to corresponding processes in the foregoing method embodiments, and details are not described herein.

In the several embodiments provided in this application, it should be understood that the disclosed system, apparatus and method may be implemented in other manners. For example, the described apparatus embodiment is merely an example. For example, division of the units is merely a logical function division, and another division manner may be used during actual implementation. For example, a plurality of units or components may be combined, or may be integrated into another system, or some features may be ignored or not performed. In addition, the displayed or discussed mutual couplings or direct couplings or communications connections may be implemented by using some interfaces. The indirect couplings or communications connections between apparatuses or units may be implemented in electrical, mechanical, or other forms.

Units described as separate components may or may not be physically separated. A component displayed as a unit may be one or more physical units, and may be located in one place, or may be distributed in a plurality of network elements. Some or all of the units may be selected based on an actual requirement, to achieve the objectives of the solutions in this embodiment.

In addition, function units in all the embodiments of this application may be integrated into one processing unit, or each of the units may exist alone physically, or two or more units may be integrated into one unit.

When realized in form of software functional unit and sold or used as an independent product, the function may also be stored in a computer-readable storage medium. Based on such understanding, the technical solutions of the application substantially or parts making contributions to the conventional art or part of the technical solutions may be embodied in form of software product, and the computer software product is stored in a storage medium, including a plurality of instructions configured to enable a computer device (which may be a personal computer, a server, a network device or the like) to perform all or part of the steps of the method in all the embodiments of the application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific embodiments of this application, but are not intended to limit the protection scope of this application. Any variation or replacement readily figured out by persons skilled in the art within the technical scope disclosed in this application shall fall within the protection scope of this application. Therefore, the protection scope of this application shall be subject to the protection scope of the claims.

## Claims

1. A charge/discharge circuit, **characterized by** comprising a power supply module, a heating module, and a charge-discharge switching module; wherein
the power supply module comprises at least a first battery group;
the heating module comprises an energy storage module and a switch module;
the at least first battery group, the switch module, and the charge-discharge switching module are connected in parallel;
a first terminal of the energy storage module is connected to the switch module, and a second terminal of the energy storage module is connected to the charge-discharge switching module; and
the charge-discharge switching module and the switch module are configured to: in response to a charge/discharge enable signal, produce a current of an alternating-current waveform in the charge/discharge circuit.

2. The charge/discharge circuit according to claim 1, **characterized in that** the charge-discharge switching module comprises a first switching circuit and a second switching circuit connected in series;
a joint between the first switching circuit and the second switching circuit is connected to the second terminal of the energy storage module; and
the first switching circuit and the second switching circuit are configured to turn on or off under triggering of the charge/discharge enable signal.

3. The charge/discharge circuit according to claim 2, **characterized in that** the first switching circuit comprises a first upper leg, and the second switching circuit comprises a first lower leg;
a joint between the first upper leg and the first lower leg is connected to the second terminal of the energy storage module; and
the first upper leg and the first lower leg are configured to turn on or off under triggering of the charge/discharge enable signal.

4. The charge/discharge circuit according to claim 3, **characterized in that** the first upper leg comprises a first switch and a first diode connected in parallel, and the first lower leg comprises a second switch and a second diode connected in parallel; and
a cathode of the first diode is connected to a positive electrode of the first battery group, an anode of the first diode is connected to a cathode of the second diode, and an anode of the second diode is connected to a negative electrode of the first battery group.

5. The charge/discharge circuit according to claim 3, **characterized in that** the first upper leg comprises a third switch, and the first lower leg comprises a fourth switch.

6. The charge/discharge circuit according to claim 2, **characterized in that** the first switching circuit comprises a third diode, and the second switching circuit comprises a fifth switch; and
a cathode of the third diode is connected to a positive electrode of the first battery group, an anode of the third diode is connected to one terminal of the fifth switch, and another terminal of the fifth switch is connected to a negative electrode of the first battery group.

7. The charge/discharge circuit according to claim 6, **characterized in that** the first switching circuit further comprises a sixth switch, one terminal of the sixth switch is connected to the positive electrode of the first battery group, and another terminal of the sixth switch is connected to the cathode of the third diode.

8. The charge/discharge circuit according to claim 2, **characterized in that** the first switching circuit comprises a seventh switch, and the second switching circuit comprises a fourth diode; and
one terminal of the seventh switch is connected to a positive electrode of the first battery group, another terminal of the seventh switch is connected to a cathode of the fourth diode, and an anode of the fourth diode is connected to a negative electrode of the first battery group.

9. The charge/discharge circuit according to claim 8, **characterized in that** the second switching circuit further comprises an eighth switch; and
the eighth switch is connected in series between the fourth diode and the negative electrode of the first battery group.

10. The charge/discharge circuit according to any one of claims 1 to 9, **characterized in that** the energy storage module comprises a first energy storage element; the first energy storage element comprises at least one inductor; and a first terminal of the first energy storage element is connected to the switch module, and a second terminal of the first energy storage element is connected to the charge-discharge switching module.

11. The charge/discharge circuit according to claim 10, **characterized in that** the energy storage module further comprises a second energy storage element; and the second energy storage element is connected between the second terminal of the first energy storage element and the charge-discharge switching module.

12. The charge/discharge circuit according to claim 11, **characterized in that** the second energy storage element comprises at least one inductor and/or capacitor.

13. The charge/discharge circuit according to claim 11, **characterized in that** a ninth switch is connected between the energy storage module and the charge-discharge switching module, and the ninth switch is connected in series with the second energy storage element.

14. The charge/discharge circuit according to any one of claims 1 to 13, **characterized in that** the switch module comprises at least one switch leg, and the first energy storage element in the energy storage module comprises at least one energy storage device, wherein the energy storage device(s) and the switch leg(s) are equal in quantity, and the energy storage device(s) are connected to the switch leg(s) in one-to-one correspondence; and
a j oint of a second terminal of each energy storage device is connected to the charge-discharge switching module.

15. The charge/discharge circuit according to claim 14, **characterized in that** the switch module comprises a first switch leg, and the first switch leg comprises a second upper leg and a second lower leg connected in series;
a first terminal of the first switch leg, a first terminal of the charge-discharge switching module, and a first terminal of the power supply module are collinearly connected; and
a second terminal of the first switch leg, a second terminal of the charge-discharge switching module, and a second terminal of the power supply module are collinearly connected.

16. The charge/discharge circuit according to claim 15, **characterized in that** the first energy storage element comprises an inductor and/or a capacitor; and
a j oint between the second upper leg and the second lower leg is connected to the first terminal of the first energy storage element, and the second terminal of the first energy storage element is connected to the charge-discharge switching module.

17. The charge/discharge circuit according to claim 14, **characterized in that** the at least one switch leg each comprises an upper leg and a lower leg, and both the upper leg and the lower leg comprise a switch and a diode connected in parallel, or both the upper leg and lower leg comprise a switch.

18. The charge/discharge circuit according to any one of claims 1 to 13, **characterized in that** the switch module comprises at least one switch branch, wherein the at least one switch branch each comprises a switch and a diode connected in series; and the first energy storage element in the energy storage module comprises at least one energy storage device, wherein the energy storage device(s) and the switch branch(es) are equal in quantity, and the energy storage device(s) are connected to the switch branch(es) in one-to-one correspondence.

19. The charge/discharge circuit according to claim 18, **characterized in that** a cathode of the diode in the switch branch is connected to a positive electrode of the power supply module, and an anode of the diode in the switch branch is connected to a negative electrode of the power supply module.

20. The charge/discharge circuit according to any one of claims 1 to 9, **characterized in that** the energy storage module comprises an M-phase motor, and the switch module comprises M phase legs, M being a positive integer;
wherein the M phase legs are connected in parallel to the power supply module and the charge-discharge switching module;
joints between upper legs and lower legs of the M phase legs are connected to M phase windings of the M-phase motor in one-to-one correspondence; and
the charge-discharge switching module is connected to a joint of the M phase windings.

21. The charge/discharge circuit according to claim 20, **characterized in that** the M-phase motor comprises a first M-phase motor and a second M-phase motor; and
a joint of M phase windings of the first M-phase motor is connected to a joint of M phase windings of the second M-phase motor.

22. The charge/discharge circuit according to claim 21, **characterized in that**
the joints between the upper legs and the lower legs of the M phase legs in the switch module are connected to M phase windings of the first M-phase motor in one-to-one correspondence.

23. The charge/discharge circuit according to claim 21, **characterized in that** the charge-discharge switching module comprises M phase legs; and
joints between upper legs and lower legs of the M phase legs in the charge-discharge switching module are connected to M phase windings of the second M-phase motor in one-to-one correspondence.

24. The charge/discharge circuit according to any one of claims 1 to 9, **characterized in that** the power supply module comprises the first battery group; and
the charge-discharge switching module and the switch module are configured to: in response to a charge/discharge enable signal, produce an alternating current in the charge/discharge circuit, wherein a waveform of the alternating current comprises any one of a triangular waveform, a quasi-triangular waveform, a sinusoidal waveform, and a quasi-sinusoidal waveform.

25. The charge/discharge circuit according to any one of claims 1 to 5, **characterized in that** the power supply module comprises at least the first battery group and a second battery group; and
the charge-discharge switching module and the switch module are configured to: in response to a first charge/discharge enable signal, produce a square or quasi-square wave alternating current in the charge/discharge circuit; or in response to a second charge/discharge enable signal, produce, in the charge/discharge circuit, an alternating current of any one of a triangular waveform, a quasi-triangular waveform, a sinusoidal waveform, and a quasi-sinusoidal waveform;
wherein a charge/discharge frequency corresponding to the first charge/discharge enable signal is greater than a charge/discharge frequency corresponding to the second charge/discharge enable signal.

26. The charge/discharge circuit according to claim 25, **characterized in that**
a first terminal of the second battery group is connected to a first terminal of the charge-discharge switching module, and a second terminal of the second battery group is collinearly connected to a second terminal of the first battery group, a second terminal of the switch module, and a second terminal of the charge-discharge switching module;
a first terminal of the first battery group is connected to a first terminal of the switch module; and
a tenth switch is connected between the first terminal of the first battery group and the first terminal of the second battery group.

27. The charge/discharge circuit according to claim 25, **characterized in that** the first terminal of the energy storage module is connected to the first terminal of the switch module, and the second terminal of the energy storage module is connected to the first terminal of the charge-discharge switching module; or the first terminal of the energy storage module is connected to the second terminal of the switch module, and the second terminal of the energy storage module is connected to the second terminal of the charge-discharge switching module.

28. The charge/discharge circuit according to any one of claims 1 to 9, **characterized in that** a capacitor is connected in parallel to a battery group in the power supply module.

29. A charge/discharge system, **characterized by** comprising a control module and the charge/discharge circuit according to any one of claims 1 to 28; wherein the control module is configured to send an instruction to the charge/discharge circuit to control charge/discharge of the power supply module.

30. The charge/discharge system according to claim 29, **characterized by** further comprising a charging apparatus connected to the charge/discharge circuit, wherein
the charging apparatus is configured to charge a battery group in the power supply module via the charge/discharge circuit.

31. A charge/discharge control method, **characterized by** being applied to the charge/discharge system according to claim 29 or 30, wherein the method comprises:
sending a charge/discharge enable signal to control the charge-discharge switching module and the switch module to turn on or off, so as to form alternately switched charge loop and discharge loop in the charge/discharge circuit to produce a current of an alternating-current waveform.

32. The method according to claim 31, **characterized in that**
charge enable signals and discharge enable signals are sent to the charge-discharge switching module and the switch module alternately at a preset frequency to control alternate switching between the charge loop and discharge loop.

33. The method according to claim 31 or 32, **characterized in that** the charge-discharge switching module comprises a first switching circuit and a second switching circuit connected in series, and the switch module comprises at least one switch leg, each switch leg comprising an upper leg and a lower leg; and
the alternately switched charge loop and discharge loop comprise:
a loop comprising each upper leg in the switch module, the energy storage module, the second switching circuit, and the power supply module, and
a loop comprising each lower leg in the switch module, the energy storage module, the first switching circuit, and the power supply module.

34. The method according to claim 31, **characterized in that** the power supply module comprises at least a first battery group, and the charge-discharge switching module comprises a first switching circuit and a second switching circuit, wherein the first switching circuit comprises a first upper leg, and the second switching circuit comprises a first lower leg; the switch module comprises at least one switch leg; and the method further comprises:
sending a discharge enable signal to control the first upper leg and a lower leg of each switch leg to turn on, so as to form a discharge loop comprising the power supply module, the first upper leg, the energy storage module, and the lower leg of each switch leg; and
sending a charge enable signal to control the first lower leg and an upper leg of each switch leg to turn on, so as to form a charge loop comprising the power supply module, the first lower leg, the energy storage module, and the upper leg of each switch leg.

35. The method according to claim 34, **characterized by** further comprising
sending a discharge enable signal to control the upper leg of each switch leg and the first lower leg to turn on, so as to form a discharge loop comprising the power supply module, the upper leg of each switch leg, the energy storage module, and the first lower leg; and
sending a charge enable signal to control the lower leg of each switch leg and the first upper leg to turn on, so as to form a charge loop comprising the power supply module, the lower leg of each switch leg, the energy storage module, and the first upper leg.

36. The method according to claim 31, **characterized in that** the power supply module comprises at least a first battery group, and the charge-discharge switching module comprises a first switching circuit and a second switching circuit, wherein the first switching circuit comprises a third diode, and the second switching circuit comprises a fifth switch; the switch module comprises at least one switch leg; and the method further comprises:
sending a discharge enable signal to control an upper leg of each switch leg and the fifth switch to turn on, so as to form a discharge loop comprising the power supply module, the upper leg of each switch leg, the energy storage module, and the fifth switch; and
sending a charge enable signal to control a lower leg of each switch leg to turn on, so as to form a charge loop comprising the power supply module, the lower leg of each switch leg, the energy storage module, and the third diode.

37. The method according to claim 31, **characterized in that** the power supply module comprises at least a first battery group, and the charge-discharge switching module comprises a first switching circuit and a second switching circuit, wherein the first switching circuit comprises a seventh switch, the second switching circuit comprises a fourth diode, and an anode of the fourth diode is connected to a negative electrode of the first battery group; the switch module comprises at least one switch leg; and the method further comprises:
sending a discharge enable signal to control the seventh switch and a lower leg of each switch leg to turn on, so as to form a discharge loop comprising the power supply module, the seventh switch, the energy storage module, and the lower leg of each switch leg; and
sending a charge enable signal to control an upper leg of each switch leg to turn on, so as to form a charge loop comprising the power supply module, the fourth diode, the energy storage module, and the upper leg of each switch leg.

38. The method according to claim 37, **characterized in that** a cathode of the fourth diode is connected to the negative electrode of the first battery group; further comprising:
sending a discharge enable signal to control the upper leg of each switch leg to turn on, so as to form a discharge loop comprising the power supply module, the upper leg of each switch leg, the energy storage module, and the fourth diode; and
sending a charge enable signal to control the seventh switch and the lower leg of each switch leg to turn on, so as to form a charge loop comprising the power supply module, the lower leg of each switch leg, the energy storage module, and the seventh switch.

39. The method according to claim 31, **characterized in that** the power supply module comprises at least a first battery group, the energy storage module comprises a first M-phase motor and a second M-phase motor, the switch module comprises M phase legs, and the charge-discharge switching module comprises M phase legs; M phase windings of the first M-phase motor are connected to the M phase legs of the switch module in one-to-one correspondence, and M phase windings of the second M-phase motor are connected to the M phase legs of the charge-discharge switching module in one-to-one correspondence; a joint of the M phase windings of the first M-phase motor is connected to a joint of the M phase windings of the second M-phase motor; and the method further comprises:
sending a discharge enable signal to control upper legs of the M phase legs of the switch module and lower legs of the M phase legs of the charge-discharge switching module to turn on, so as to form a discharge loop comprising the power supply module, the upper legs of the M phase legs of the switch module, the first M-phase motor, the second M-phase motor, and the lower legs of the M phase legs of the charge-discharge switching module; and
sending a charge enable signal to control upper legs of the M phase legs of the charge-discharge switching module and lower legs of the M phase legs of the switch module to turn on, so as to form a charge loop comprising the power supply module, the lower legs of the M phase legs of the switch module, the first M-phase motor, the second M-phase motor, and the upper legs of the M phase legs of the charge-discharge switching module.

40. The method according to claim 39, **characterized by** further comprising
sending a discharge enable signal to control the upper legs of the M phase legs of the charge-discharge switching module and the lower legs of the M phase legs of the switch module to turn on, so as to form a discharge loop comprising the power supply module, the lower legs of the M phase legs of the switch module, the first M-phase motor, the second M-phase motor, and the upper legs of the M phase legs of the charge-discharge switching module; and
sending a charge enable signal to control the upper legs of the M phase legs of the switch module and the lower legs of the M phase legs of the charge-discharge switching module to turn on, so as to form a charge loop comprising the power supply module, the lower legs of the M phase legs of the charge-discharge switching module, the first M-phase motor, the second M-phase motor, and the upper legs of the M phase legs of the switch module.

41. The method according to claim 31, **characterized in that** the power supply module comprises at least a first battery group and a second battery group; further comprising:
charging/discharging the first battery group or the second battery group via the charge loop or the discharge loop, wherein a square or quasi-square wave alternating current is produced in the charge/discharge circuit; and
the charging/discharging comprises switching between charge/discharge states of the first battery group and the second battery group, wherein the charge/discharge state comprises charging the first battery group and discharging the second battery group at the same time, or discharging the first battery group and charging the second battery group at the same time.

42. The method according to claim 41, **characterized in that** a first terminal of the second battery group is connected to a first terminal of the charge-discharge switching module, and a second terminal of the second battery group is collinearly connected to a second terminal of the first battery group, a second terminal of the switch module, and a second terminal of the charge-discharge switching module; a first terminal of the first battery group is connected to a first terminal of the switch module; a tenth switch is connected between the first terminal of the first battery group and the first terminal of the second battery group; and the method further comprises:
determining that the first battery group and the second battery group satisfy a heating condition, and controlling the tenth switch to turn off.

43. The method according to claim 42, **characterized in that** the charge-discharge switching module comprises a first switching circuit and a second switching circuit, the first switching circuit comprises a first upper leg, and the second switching circuit comprises a first lower leg; the switch module comprises at least one switch leg; one terminal of the energy storage module is connected to a joint between the first upper leg and the first lower leg, and another terminal of the energy storage module is connected to a joint between an upper leg and a lower leg of the switch leg; and the method further comprises:
sending a first enable signal to control the first upper leg and a lower leg of each switch leg to all turn on, so as to form a discharge loop comprising the first battery group, the first upper leg, the energy storage module, and the lower leg of each switch leg, causing the first battery group to discharge to the energy storage module; and
sending a second enable signal to control the first upper leg and an upper leg of each switch leg to all turn on, so as to form a charge loop comprising the first battery group, the first upper leg, the energy storage module, the upper leg of each switch leg, and the second battery group, causing the first battery group and the energy storage module to charge the second battery group.

44. The method according to claim 43, **characterized in that** the method further comprises:
repeatedly switching between turn-on of the upper leg of each switch leg and turn-on of the lower leg of each switch leg so as to control time of charging the second battery group.

45. The method according to claim 43, **characterized in that** the method further comprises:
sending a third enable signal to control the first lower leg and the upper leg of each switch leg to all turn on, so as to form a discharge loop comprising the second battery group, the upper leg of each switch leg, the energy storage module, and the first lower leg, causing the second battery group to discharge to the energy storage module; and
sending a fourth enable signal to control the first upper leg and the upper leg of each switch leg to all turn on, so as to form a charge loop comprising the second battery group, the upper leg of each switch leg, the energy storage module, the first upper leg, and the first battery group, causing the second battery group and the energy storage module to charge the first battery group.

46. The method according to claim 45, **characterized in that** the method further comprises:
repeatedly switching between turn-on of the first upper leg and turn-on of the first lower leg to control time of charging the first battery group.

47. The method according to claim 42, **characterized in that** the charge-discharge switching module comprises a first switching circuit and a second switching circuit, wherein the first switching circuit comprises a first upper leg, and the second switching circuit comprises a first lower leg; the switch module comprises at least one switch leg; a first terminal of the energy storage module is connected to the first terminal of the switch module, and a second terminal of the energy storage module is connected to the first terminal of the charge-discharge switching module; and the method further comprises:
sending a first enable signal to control the first lower leg and an upper leg of each switch leg to turn on simultaneously, so as to form a loop via which the first battery group discharges to the energy storage module; and
sending a second enable signal to control a lower leg of each switch leg and the first lower leg to turn on simultaneously, so as to form a loop via which the first battery group and the energy storage module charges the second battery group.

48. The method according to claim 47, **characterized in that** the method further comprises:
sending a third enable signal to control the first upper leg and the lower leg of each switch leg to turn on simultaneously, so as to form a loop via which the second battery group discharges to the energy storage module; and
sending a fourth enable signal to control the first lower leg and the lower leg of each switch leg to turn on simultaneously, so as to form a loop via which the second battery group and the energy storage module charges the first battery group.

49. The method according to claim 42, **characterized in that** the charge-discharge switching module comprises a first switching circuit and a second switching circuit, wherein the first switching circuit comprises a first upper leg, and the second switching circuit comprises a first lower leg; the switch module comprises at least one switch leg; a first terminal of the energy storage module is connected to the second terminal of the switch module, and a second terminal of the energy storage module is connected to the second terminal of the charge-discharge switching module; and the method further comprises:
sending a first enable signal to control the first lower leg and an upper leg of each switch leg to turn on simultaneously, so as to form a loop via which the second battery group discharges to the energy storage module; and
sending a second enable signal to control the upper leg of each switch leg and the first upper leg to turn on simultaneously, so as to form a loop via which the second battery group and the energy storage module charge the first battery group.

50. The method according to claim 49, **characterized in that** the method further comprises:
sending a third enable signal to control the first upper leg and a lower leg of each switch leg to turn on simultaneously, so as to form a loop via which the first battery group discharges to the energy storage module; and
sending a fourth enable signal to control the first upper leg and the upper leg of each switch leg to turn on simultaneously, so as to form a loop via which the first battery group and the energy storage module charges the second battery group.

51. The method according to claim 42, **characterized in that** the charge-discharge switching module comprises a first switching circuit and a second switching circuit, wherein the first switching circuit comprises a first upper leg, and the second switching circuit comprises a first lower leg; the switch module comprises at least one switch leg; one terminal of the energy storage module is connected to a joint between the first upper leg and the first lower leg, and another terminal of the energy storage module is connected to a joint between an upper leg and a lower leg of the switch leg; and the method further comprises:
sending a first enable signal to control the first upper leg and an upper leg of each switch leg to all turn on, so as to form a charge/discharge loop comprising the first battery group, the upper leg of each switch leg, the energy storage module, the first upper leg, and the second battery group, causing the first battery group to discharge to the energy storage module, and the first battery group and the energy storage module to charge the second battery group; and
sending a second enable signal to control the first upper leg and the upper leg of each switch leg to all turn on, so as to form a charge/discharge loop comprising the first battery group, the first upper leg, the energy storage module, the upper leg of each switch leg, and the second battery group, causing the second battery group to discharge to the energy storage module, and the second battery group and the energy storage module to charge the first battery group.

52. The method according to any one of claims 31 to 51, **characterized in that** a ninth switch is connected between the energy storage module and the charge-discharge switching module; further comprising:
determining that a battery group in the power supply module satisfies a heating condition, and controlling the ninth switch to turn on; or
determining that the battery group module satisfies a stop-heating condition, and controlling the ninth switch to turn off.

53. The method according to any one of claims 31 to 51, **characterized in that** before the sending a charge/discharge enable signal, the method further comprises:
determining whether a state of charge value of each battery group in the power supply module is greater than or equal to a preset charge threshold; and
if the state of charge value of each battery group is greater than or equal to the preset threshold, sending charge/discharge enable signals to the charge-discharge switching module and the switch module alternately at a preset frequency.

54. The method according to claim 53, **characterized in that** before the determining whether a state of charge value of each battery group in the power supply module is greater than or equal to a preset charge threshold, the method further comprises:
determining whether temperature of the power supply module is lower than a preset temperature threshold; and
if the temperature of the power supply module is lower than the preset temperature threshold, executing the operation of determining whether a state of charge value of each battery group in the power supply module is greater than or equal to a preset charge threshold.

55. The method according to any one of claims 31 to 51, **characterized in that** before the sending a charge/discharge enable signal, the method further comprises:
obtaining a working state of the motor; and
under a condition that the working state indicates that the motor is not being driven, sending charge/discharge enable signals to the charge-discharge switching module and the switch module alternately at a preset frequency.

56. The method according to any one of claims 31 to 51, **characterized in that** before the sending a charge/discharge enable signal, the method further comprises:
receiving a control signal from a vehicle control unit; and
under a condition that the control signal indicates heating the power supply module, sending charge/discharge enable signals to the charge-discharge switching module and the switch module alternately at a preset frequency.

57. The method according to any one of claims 31 to 51, **characterized in that** before the sending a charge/discharge enable signal, the method further comprises:
receiving a request from a battery management system; and
under a condition that the request indicates that the power supply module has satisfied a heating condition, sending charge/discharge enable signals to the charge-discharge switching module and the switch module alternately at a preset frequency.

58. The method according to any one of claims 31 to 51, **characterized in that** the method further comprises:
during the charging/discharging, determining whether temperature of each battery group in the power supply module satisfies a stop-heating condition, wherein the stop-heating condition comprises that the battery group reaches a preset temperature or experiences an abnormal temperature rise; and
if the temperature of any battery group in the power supply module satisfies the stop-heating condition, sending a stop-heating signal to the charge-discharge switching module and the switch module, wherein the stop-heating signal triggers the charge-discharge switching module and the switch module to break the charge/discharge loop.

59. The method according to any one of claims 31 to 51, **characterized in that** the charge/discharge system further comprises a charging apparatus, and the method further comprises:
when voltage of the charging apparatus is lower than voltage of the power supply module, controlling the switch module and the charge-discharge switching module to form a loop via which the charging apparatus charges the energy storage module and a loop via which the charging apparatus and the energy storage module charges the power supply module simultaneously; or
when voltage of the charging apparatus is higher than voltage of the power supply module, controlling the switch module and the charge-discharge switching module to form a loop via which the charging apparatus charges the power supply module and the energy storage module and a loop via which the energy storage module charges the power supply module.

60. The method according to claim 59, **characterized in that** the terminal of the energy storage module connected to the switch module is connected to one terminal of the charging apparatus through a first tube switch, the second terminal of the switch module is connected to another terminal of the charging apparatus, the charging apparatus is configured to charge the power supply module via the heating module, the switch module comprises at least one switch leg, the charge-discharge switching module comprises a first switching circuit and a second switching circuit, and the method further comprises:
controlling an upper leg of each switch leg to turn off;
when voltage of the charging apparatus is lower than voltage of the power supply module, controlling the second switching circuit and the first tube switch to turn on and the first switching circuit and a lower leg of each switch leg to turn off, so as to form a loop comprising the charging apparatus, the energy storage module, and the second switching circuit for the charging apparatus to charge the energy storage module; and
controlling the first switching circuit and the first tube switch to turn on and the second switching circuit and the lower leg of each switch leg to turn off, so as to form a loop comprising the charging apparatus, the energy storage module, the first switching circuit, and the power supply module for the charging apparatus and the energy storage module to charge the power supply module simultaneously.

61. The method according to claim 60, **characterized in that** the lower leg of each switch leg comprises a switch and a diode connected in parallel; and the method further comprises:
when voltage of the charging apparatus is higher than voltage of the power supply module, controlling the first switching circuit and the first tube switch to turn on and the second switching circuit and the lower leg of each switch leg to turn off, so as to form a loop comprising the charging apparatus, the energy storage module, the first switching circuit, and the power supply module for the charging apparatus to charge the power supply module and the energy storage module; and
controlling the first switching circuit to turn on and the second switching circuit, the lower leg of each switch leg, and the first tube switch to turn off, so as to form a loop comprising the energy storage module, the first switching circuit, the power supply module, and the diode in the lower leg of each switch leg for the energy storage module to charge the power supply module.

62. An electric device, **characterized by** comprising the charge/discharge system according to claim 29.
